(19) Europäisches Patentamt

European Patent Office

Office européen des brevets

(11) **EP 1 239 678 B1**

(12) **EUROPEAN PATENT SPECIFICATION**

(45) Date of publication and mention
of the grant of the patent:
**18.05.2005 Bulletin 2005/20**

(51) Int Cl.⁷: **H04N 7/24**, H04N 7/173

(21) Application number: **02251569.6**

(22) Date of filing: **06.03.2002**

(54) **Storage type receiving device**

Empfänger mit Speicher

Récepteur comportant une mémoire

(84) Designated Contracting States:
**DE FR GB**

(30) Priority: **07.03.2001 JP 2001062978**

(43) Date of publication of application:
**11.09.2002 Bulletin 2002/37**

(73) Proprietor: **MATSUSHITA ELECTRIC INDUSTRIAL CO., LTD.**
**Kadoma-shi, Osaka 571-8501 (JP)**

(72) Inventor: **Mizuno, Yusuke**
**Kasugai-shi, Aichi 486-0915 (JP)**

(74) Representative:
**Beresford, Keith Denis Lewis et al**
**BERESFORD & Co.**
**16 High Holborn**
**London WC1V 6BX (GB)**

(56) References cited:
**US-A- 5 818 439        US-A- 5 974 218**

• PATENT ABSTRACTS OF JAPAN vol. 1999, no. 03, 31 March 1999 (1999-03-31) & JP 10 327386 A (MEDIA RINKU SYST:KK), 8 December 1998 (1998-12-08)
• PATENT ABSTRACTS OF JAPAN vol. 1998, no. 02, 30 January 1998 (1998-01-30) & JP 09 284704 A (SONY CORP), 31 October 1997 (1997-10-31)

• JEHO NAM ET AL: "Video abstract of video" MULTIMEDIA SIGNAL PROCESSING, 1999 IEEE 3RD WORKSHOP ON COPENHAGEN, DENMARK 13-15 SEPT. 1999, PISCATAWAY, NJ, USA,IEEE, US, 13 September 1999 (1999-09-13), pages 117-122, XP010351719 ISBN: 0-7803-5610-1
• SUN X ET AL: "Video Summarization Using R-Sequences" REAL-TIME IMAGING, ACADEMIC PRESS LIMITED, GB, vol. 6, no. 6, December 2000 (2000-12), pages 449-459, XP004419489 ISSN: 1077-2014
• STEFANIDIS A ET AL: "Summarizing video datasets in the spatiotemporal domain" IEEE 2000, 4 September 2000 (2000-09-04), pages 906-912, XP010515601
• JUNGHWAN OH ET AL: "An efficient technique for summarizing videos using visual contents" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30 July 2000 (2000-07-30), pages 1167-1170, XP010513217 ISBN: 0-7803-6536-4
• SRINIVASAN S ET AL: "What is in that video anyway?: in search of better browsing" MULTIMEDIA COMPUTING AND SYSTEMS, 1999. IEEE INTERNATIONAL CONFERENCE ON FLORENCE, ITALY 7-11 JUNE 1999, LOS ALAMITOS, CA, USA,IEEE COMPUT. SOC, US, 7 June 1999 (1999-06-07), pages 388-393, XP010342775 ISBN: 0-7695-0253-9

**Description**

This invention relates to a storage-type-receiving device, more specifically to a technique for managing a part of content such as its preview program and the like.

In digital broadcasting, satellite broadcasting for example, there is a system (pay-per-view system), which makes it possible for user(s) to view only a content concerned on condition that payment of a predetermined charge for the content is made. In such pay-per-view system, typically, a part of contents is available to anyone who wants to watch a part of the contents prior to actual subscription of the contents.

By watching a preview, users can know the outline and atmosphere of contents. Such information may be used to decide subscription of contents. According to this solution, there is a less possibility for users to feel that content itself is not as good as they expect in comparison with the case where subscription is decided only using information such as the title of the content and so on. In other words, for users, subscription can be determined with much confidence.

In the contrast, content provider(s) may obtain a big merit that the number of subscription of contents, they provide, is raised by distributing previews to the users.

However, distributing preview accompanies the following problems.

If, the content provider(s) limits a pre-viewable time period for their contents from the beginning thereof to a certain period (for example, for ten (10) minutes), users can not view the preview for the content at other time period even when the content is currently on-aired. This prevents the users from viewing the preview, and the number of subscription of contents would be decreased.

In order to avoid such a circumstance, the content provider(s) may unlimited a pre-viewable time period for their contents and allow the users to access any part of a content to watch preview. But, this raises a problem that inappropriate scenes (climax scenes in action films, scenes capable of see answers in a quiz show) could be contained in preview.

Further problems could occur if the content provider take the above countermeasure. Typically, exactly the same pay-per-view contents are repeatedly distributed to the users. Therefore, the users can view a content in a complete form for absolutely free of charge if they store different part of the content at every preview.

Beside, there is a need for watching part of each plurality of contents (partial contents) completely not only for pay-per-view contents but also contents irrespective of charged or free of charge.

It is a concern of the present invention to solve the above stated problems and provide a method for distributing partial contents by which both content provider(s) and user(s) play their roll with a high efficiency.

It is disclosed in Patent Abstracts of Japan vol. 1999, no. 03, 31 March 1999 (1999-03-31) & JP 10 327386 A (MEDIA RINKU SYST:KK), 8 December 1998 (1998-12-08) that representative pictures concerning a video are extracted for storage by detecting a change of state concerning an element of interest.

Aspects of the present invention are set out in the appended claims.

In an embodiment, there is provided a storage-type receiving device comprising: a receiving part for receiving a content being transmitted; a storage part for storing a content; a control part; and a restoring part for restoring the content received with the receiving part and/or the content stored in the storage part in accordance with control of the control part; wherein the control part at least controls the restoring part, and the control part comprises a storage control portion for controlling the restoring part so that the restoring part previously reads out part of each content in a plurality of contents alone as a partial content and outputs the partial content to the storage part, and a playback control portion which reads out the partial content stored in the storage part and playback and outputs the partial content.

In this way, desired partial contents can be playback and out put according to need regardless of description of the content currently received.

The term "receiving device" refers to a device having the function of receiving data from a transmission device. The concept of the term "receiving device" includes one of a set-top box having no display device and a TV set comprising a display device, for example.

The term "receiving part" refers to a component by which signals transmitted via cable or radio transmission are received. In the embodiments, tuner 44 corresponds to this.

The term "restoring part" refers to a component having the function of generating output signals, video signals, for example, in response to receiving signals from the receiving part and/or a storage part. In the embodiments, TS decider 48 corresponds to this.

The term "control part" refers to a component at least performing control of the restoring part. In the embodiments, CPU 58 and a program(s) correspond to this.

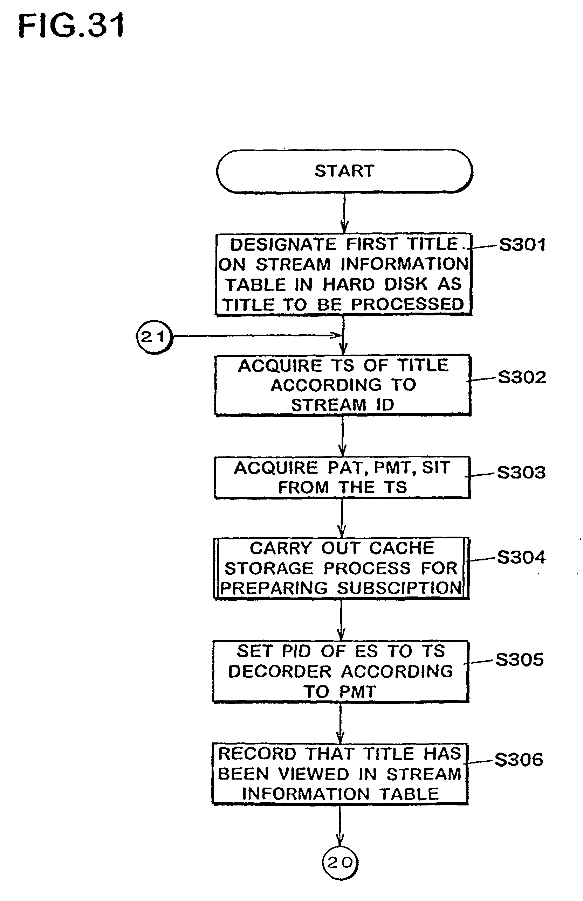

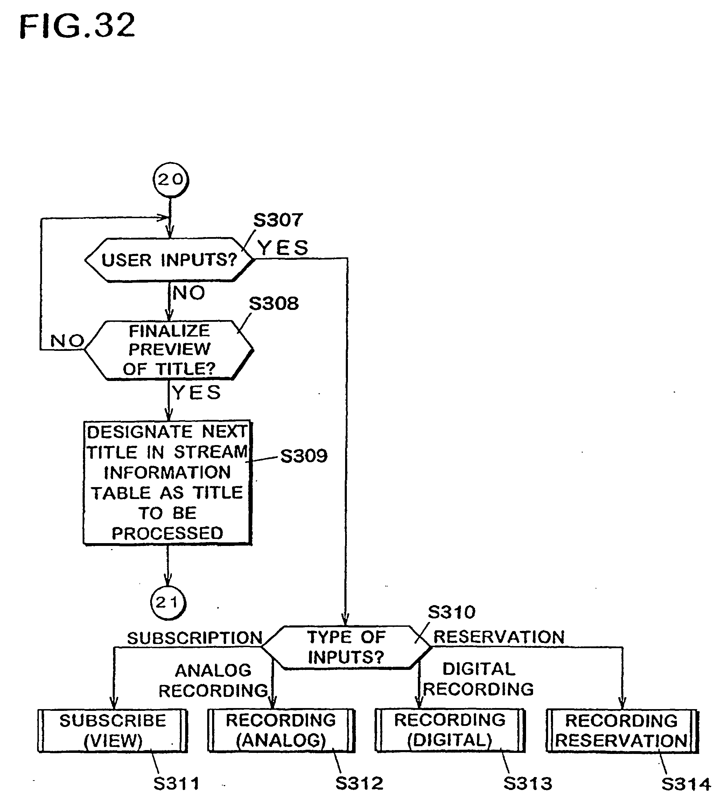

The term "playback control portion" refers to processes, that is, processing for viewing preview programs shown in Figs. 31 and 32.

The term "playback" refers to a concept not only restoring content and outputting it, it also includes to carry out storage of the restored contents.

The term "partial content" refers to part of content, the concept of the term includes preview program (s) (preview(s)), climax scenes, scenes with violence and so on, for example.

The features, other objects, applications, and advantages of the present invention will become clear in reference to the following embodiments and drawings.

Brief Description of Drawings

Fig. 1 shows an overall view of the structure of a broadcasting system according to an embodiment of the present invention;

Fig. 2 shows examples of transport streams and services contained in broadcasting;

Fig.3 is a block diagram illustrating the structure of the transmission device;

Fig. 4 is a drawing, which shows examples of data output from the transmission device;

Fig. 5 is a drawing, which shows an example of the structure of the data output from the transmission device;

Fig. 6 is a drawing, which shows a block diagram illustrating the structure of the receiving device 8;

Fig. 7 is a drawing, which shows a hardware structure of the receiving device 8;

Fig. 8 is a drawing, which shows a hardware structure of an IC card,

Fig. 9 is a drawing, which shows the mechanisms of encryption and decoding in broadcasting;

Fig. 10 is a drawing, which shows a flowchart of a program of routine processing for viewing contents;

Fig. 11 is a drawing, which shows detailed description of NIT;

Fig. 12 is a drawing, which shows detailed description of PAT;

Fig. 13 is a drawing, which shows detailed description of PMT;

Fig. 14 is a drawing, which shows a flowchart for performing processing of storing preview programs;

Fig. 15 is a drawing, which shows a flowchart of process for creating a list listing pre-viewable services;

Fig. 16 is a drawing, which shows a flowchart of process for creating a list listing pre-viewable services;

Fig. 17 is a drawing, which shows a flowchart of process for creating a list listing pre-viewable services;

Fig. 18 is a drawing, which shows a list lists up transport streams (TS);

Fig. 19 is a drawing, which shows an example of a service list;

Fig. 20 is a drawing, which shows information contained in the ECM;

Fig. 21 is a drawing, which shows a pre-viewable program list;

Fig. 22 is a drawing, which shows details of the pre-viewable program list;

Fig. 23 is a flowchart showing steps performed for carrying out automatic storing of preview programs;

Fig. 24 is a flowchart showing steps for carrying out automatic storing of preview programs;

Fig. 25 is a flowchart showing steps for carrying out automatic storing of preview programs;

Fig. 26 is a flowchart showing steps for carrying out automatic storing of preview programs;

Fig. 27 is a drawing, which shows the main structure of a partial transport stream;

Fig. 28 is a drawing, which shows a recording format of a transport stream stored in the hard disk;

Fig. 29 is a drawing, which shows the structure of a stream information table;

Fig. 30 is a drawing, which shows en example of a a stream information table;

Fig. 31 is a flowchart showing steps for carrying out automatic preview;

Fig.32 is a flowchart showing steps for carrying out automatic preview;

Fig. 33A, Fig. 33B and Fig. 33C are images for receiving a determination of the for viewing preview programs;

Fig. 34 is a flowchart showing steps for carrying cache storage process;

Fig. 35 is a flowchart showing steps for carrying cache storage process;

Fig. 36 is a drawing illustrating a relationship of the beginning a program among a plurality of service;

Fig. 37 is a table showing the lapsed times from the beginning of each of services;

Fig. 38 is a drawing, which shows an example of scheduled time for start broadcasting;

Fig. 39 is a flowchart showing steps performed for subscribing a program;

Fig. 40 is a flowchart showing steps performed for subscribing a program;

Fig. 41A, Fig. 41B and Fig. 41C are image for receiving commands such as subscription, recording; and reservation for recording;

Fig. 42 is a drawing illustrating a relationship between cache storage and preview storage;

Fig. 43 is another drawing illustrating a relationship between cache storage and preview storage;

Fig. 44 is another drawing illustrating a relationship between cache storage and preview storage;

Fig. 45 is another drawing illustrating a relationship between cache storage and preview storage;

Fig. 46 is another drawing illustrating a relationship between cache storage and preview storage;

Fig. 47 is another drawing illustrating a relationship between cache storage and preview storage;

Fig. 48 is a flowchart showing steps performed for digital recording;

Fig. 49 is a flowchart showing steps performed for digital recording;

Fig. 50 is a flowchart showing steps performed for reservation process;

Fig. 51 is a flowchart showing steps performed for reservation process;

Fig. 52 is a drawing, which shows an electronic program guide (EPG);

Fig. 53 is a drawing illustrating a relationship between a preview program stored and a content being on-aired in another embodiment;

Fig. 54 is a drawing, which shows an example of a stream information table in a second embodiment of the present invention;

Fig. 55 is a drawing, which shows an example of data in the stream information table;

Fig. 56 is a flowchart showing steps performed for viewing preview programs;

Fig. 57 is a flowchart showing detailed processes for performing an estimation of the capacity required for storing contents;

Fig. 58 is a flowchart showing steps for carrying out automatic preview;

Fig. 59 is drawing, which shows an image giving a warning message for capacity shortage;

Fig. 60A, Fig. 60B, and Fig. 60C are images displaying information on contents in preview selection displays;

Fig. 61 is a drawing, which shows information on contents listed on an EPG;

Fig. 62A and Fig. 62B are displays for selection of a condition in storing preview programs;

Fig. 63 is s drawing, which shows storage condition record table;

Fig. 64 is a drawing, which shows an example of the view history table;

Fig. 65 is a drawing, which shows the structure of a stream information table in another embodiment;

Fig. 66 is a drawing, which shows details of a stream information table in another embodiment.

## DETAILED DESCRIPTION OF THE PREFERRED EMBODIMENTS

### 1. A first embodiment

### (1) Overall structure of a Broadcasting system

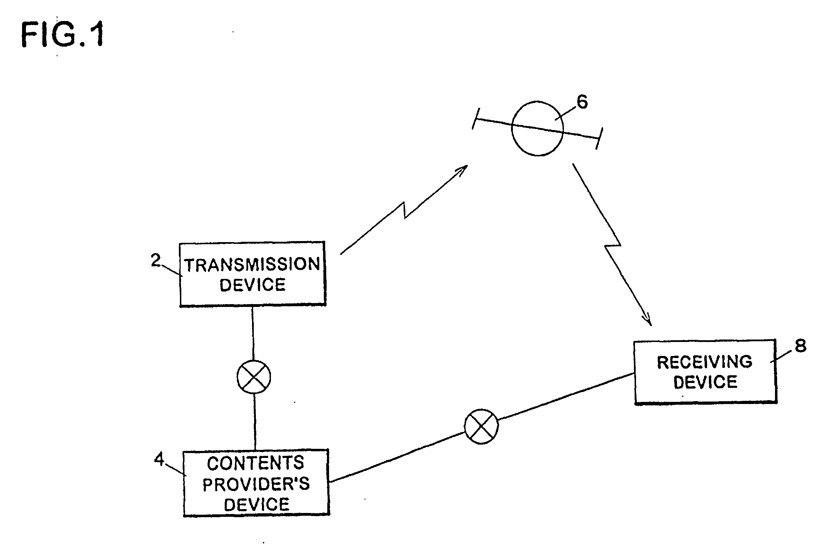

Fig. 1 shows an overall view of the structure of a broadcasting system according to an embodiment of the present invention. A provider of contents sends content data from a content provider's device 4 to a transmission device 2 via on-line or off-line basis. The transmission device 2 combines data from the provider's device 4 into one service (a bunch of programs corresponding to channels of ground wave), and multiplexes some of channels into transport streams. A receiving device 8 receives a desired transport stream, a service via a satellite 6.

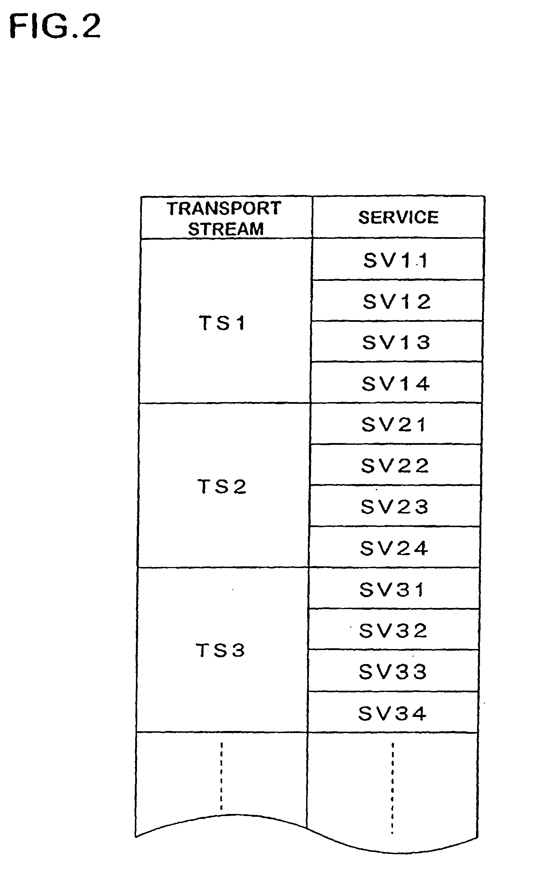

Fig. 2 shows examples of transport streams and services contained in broadcasting. In this example, a plurality of services SV11, SV12, SV13 and SV14 are contained in a transport stream TS1 under time-division multiplexing manner. A plurality of services is contained in other transport streams TS2, TS3 and so on as well.

Further, each of the transport streams TS1, TS2, TS3 and so on are recognized by their transmission frequencies.

### (2) Structure of transmission device and that of data for broadcasting

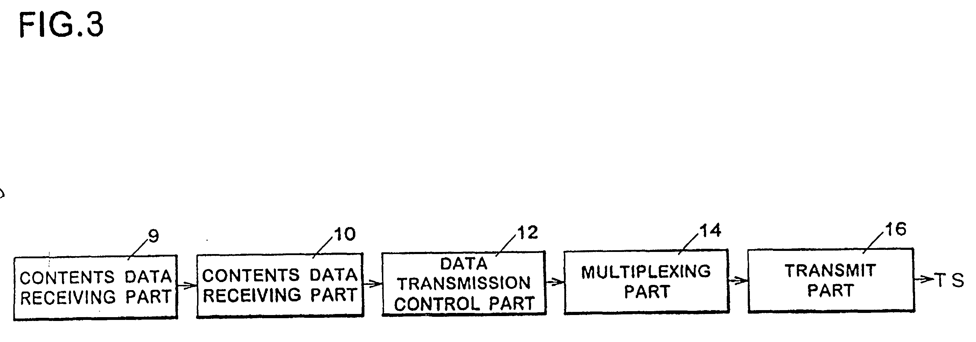

Fig.3 shows a block diagram illustrating the structure of the transmission device in an embodiment of the present invention. A content data receiving part 9 receives content data from the content provider's device 4 and passes the content data thus received to a content data storage part 10. Such content data may be also stored into a storing medium or the like and then be passed to the content data storage part 10. Within the content data storage part 10, each of the services SV11, SV12...SV21...SV34 and so on are stored. A data transmission control part 12 reads out these content data at a scheduled on-air time and provides them to a multiplexing part 14. The multiplexing part 14 packetizes a plurality of content data given thereto and then multiplexes them. A transmit part 16 transmits the generated transport streams as electric waves.

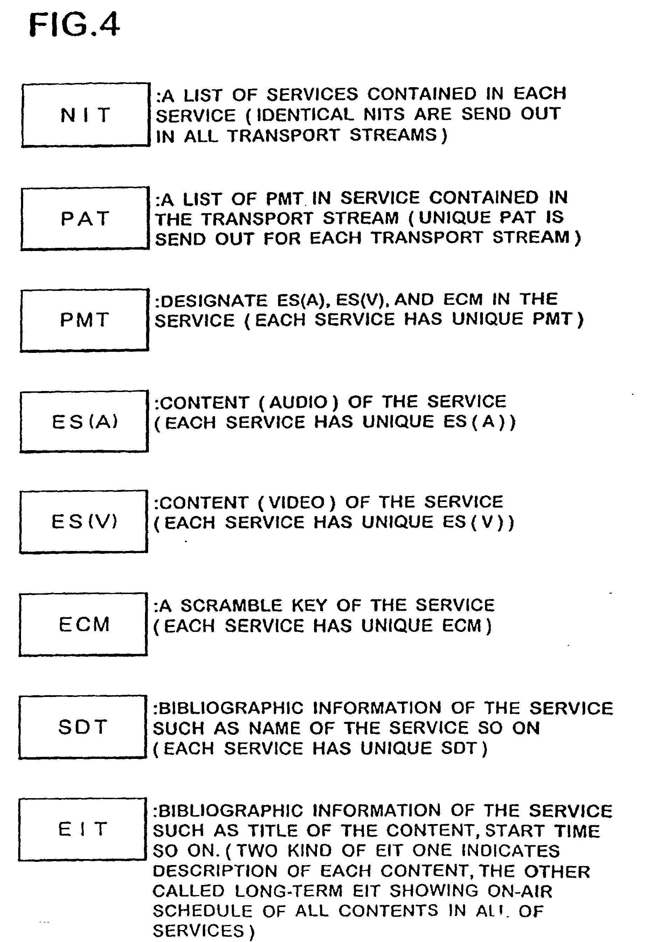

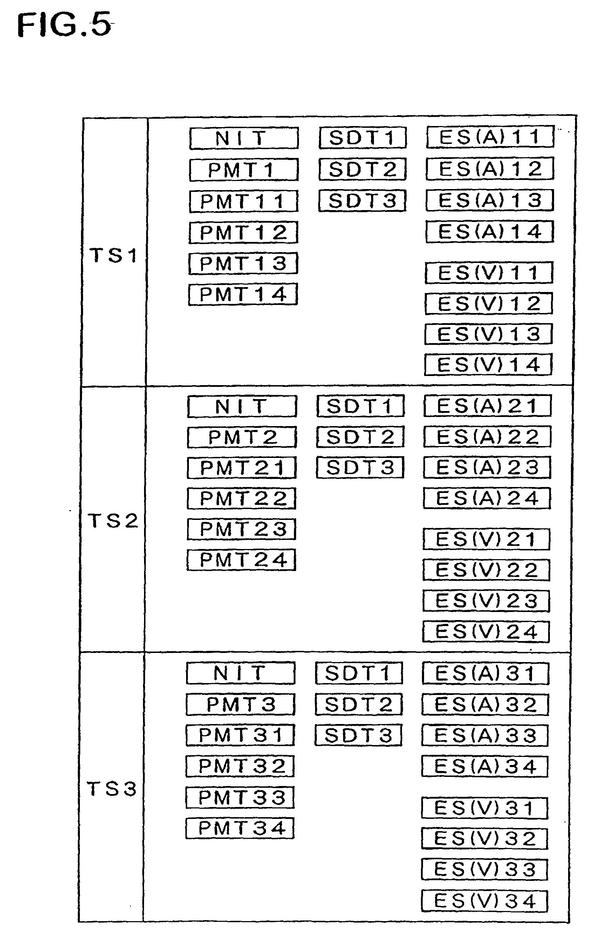

Fig. 4 shows relationships of data generated with the multiplexing part 14 by carrying out multiplexing. Each content data is divided into audio data ES (A) and video data ES (V). As shown in Fig. 5, a plurality of audio data ES(A) and video data ES(V) are sent our for one transport stream. Each of the audio data ES (A) and the video data ES(V) are encrypted with a scramble key Ks and are multiplexed by means of time-sharing after performing packetization. Unique packet IDs are assigned to each of audio data ES (A) and video data ES (V) for packetization. Consequently, audio data ES (A) and video data ES (V) in each service are distinguishable with their packet IDs.

In Fig. 4 and Fig. 5, control data PMT unique to each service is sent out. Control data PMT describe packet IDs of their corresponding services. In addition, packet IDs for acquiring a scramble key Ks to decode encrypted data are written in control data PMT. As a consequence, content data of a specific service can be acquired by obtaining control data PMT corresponding to the service.

Control data PAT unique to each transport stream is sent out. Control data PAT describes a list of services contained in a specific transport stream, a list of control data PMT corresponding to the services and its packet ID. Consequently, which of the services is contained in the transport stream and the packet IDs of the control data PMT corresponding to each of the services can be recognized.

A common control data NIT is sent out for all of the transport streams. The control data NIT describes a list of services multiplexed into each transport stream.

Control data SDT, EIT and so on, indicative of a title of each content data and its scheduled on-air time for example, are also generated with the multiplexing part 14 and sent out therefrom.

## (3) Structure of the receiving device

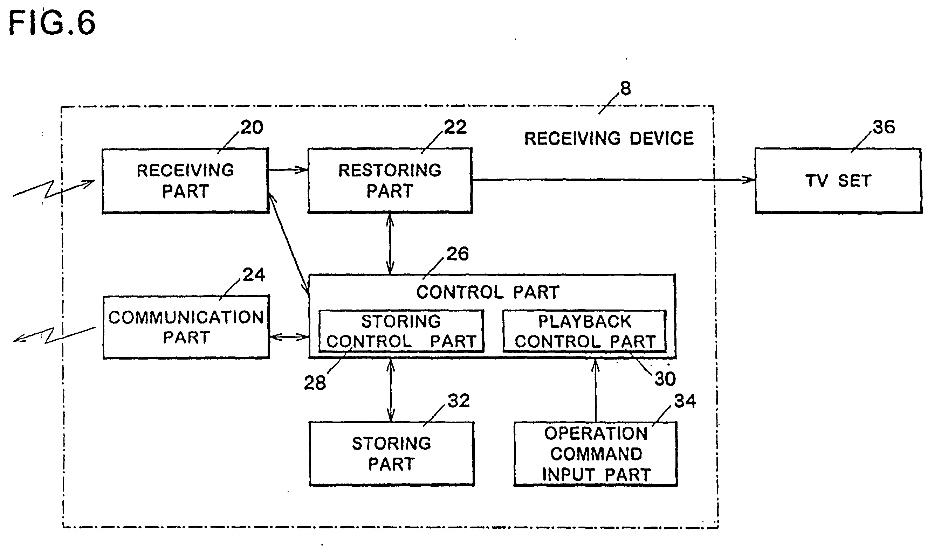

Fig. 6 shows a block diagram illustrating the structure of the receiving device 8 in an embodiment of the present invention. In this embodiment, a set-top box is illustrated as an example of the receiving device 8, this device may include a TV set 36.

A receiving part 20 receives desired content data and provides it to a restoring part 22. The restoring part 22 selects a desired service within the transport stream and restores its content. The content data thus restored is provided to the TV set 36. The TV set 36 displays images of the content data with its display (not shown) and outputs sounds with its loud speaker(s).

A control part 26 controls the receiving part 20 and the restoring part 22 so that a desired service can be acquired on receipt of a command from a user via an operation command input part 34. The control part 26 comprises a storing control part 28 and a playback control part 30 therein.

The storing control part 28 automatically stores a preview program of the pay-per-view contents into a storage part 32 independent of command from the user. Consequently, a number of preview programs of pay-per-view-contents are automatically stored in the storing control part 28. A playback control part 30 reads out a preview program stored in the storage part 32 in accordance with a command from a user and the preview thus read out is provided to restoring part 22 for restoration. The user can view a desired preview program according to their needs. Because preview programs are stored previously, desired preview programs can be viewed in their complete form.

A communication part 24 performs communications between the content provider's device 4 under the control of the control part 26.

The operation command input part 34 may be of signal receiving part, which receives signals from a remote controller, and the input part 34 may also be of operation command input buttons arranged on the receiving device 8.

## (4) Hardware structure of the receiving device

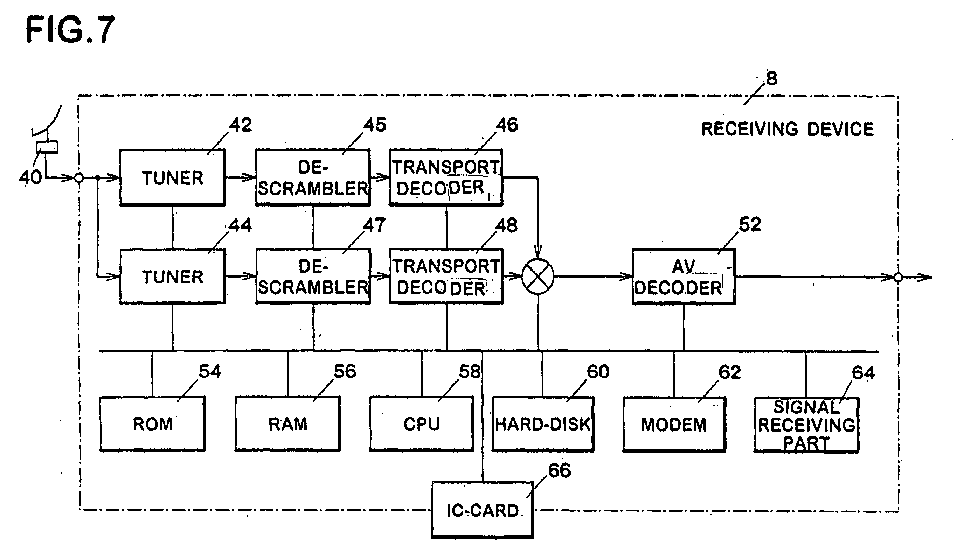

Fig. 7 shows a hardware structure of the receiving device 8 shown in Fig. 2. The receiving device 8 comprises tuners 42, 44, de-scramblers 45, 47, transport decoders (TS decoders) 46, 48, changer 50, AV decoder 52, ROM 54, RAM 56, CPU 58, hard-disk 60, modem 62, signal receiving part 64. An IC card 66 is connected to the receiving device 8 via a connector.

In this embodiment, the tuner 44 forms the receiving part 20. The de-scrambler 47 and the TS decoder 48 form the restoring part 22. The CPU 58, the ROM 54, RAM 56 form the control part 26. The hard-disk 60, forms the storage part 32. And the signal receiving part 64 forms the operation command input part 34. In this embodiment, the tuner 42, de-scrambler 45 and the TS decoder 46 each for regular reception, and, the tuner 44, the de-scrambler 47 and the TS decoder 48 each for storing preview programs are provided. However, each one of these components may be used as a dual-purpose component.

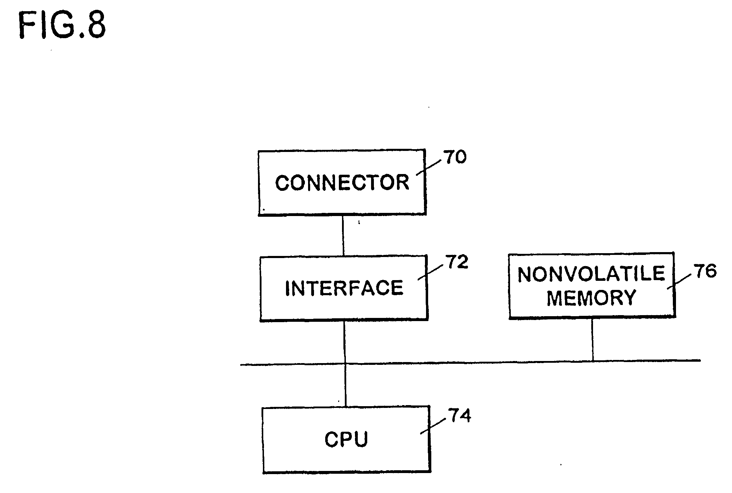

Fig. 8 shows a hardware structure of the IC card 66, which is connected to the receiving device 8. The IC card 66 forming a key reproduction device comprises CPU 74, interface 72, nonvolatile memory 76 and connector 70. The nonvolatile memory 76 is made of flash-memory and the like, and a contract for subscription for the user, a key Km for decoding and so on are stored therein.

## (5) Encryption in broadcasting

Before describing the operation of the receiving device, description on encryption in broadcasting and a contract for subscription will be made.

There are two types of digital broadcastings, one of which is unencrypted digital broadcasting and the other is encrypted digital broadcasting. Typically, the former is a free broadcast that everyone who owns a receiver therefor can watch. An the latter is a pay-broadcast, and a key for decoding codes attached thereto is provided to the user on condition that payment of the fee is paid.

Two kinds of pay-broadcasts, one is providing its services under a general contract and the other is pay-per-view, are available. The former is a broadcasting service, which can provide the user a comprehensive service that allows the user to watch a predetermined program(s). Once a general contract for pay-broadcast is concluded, such a fact is stored into the IC card and the user automatically acquires a key for decoding the codes.

In the contrast, a user of pay-per-view broadcasting needs to pay a certain fee for each content to acquire a key for decoding.

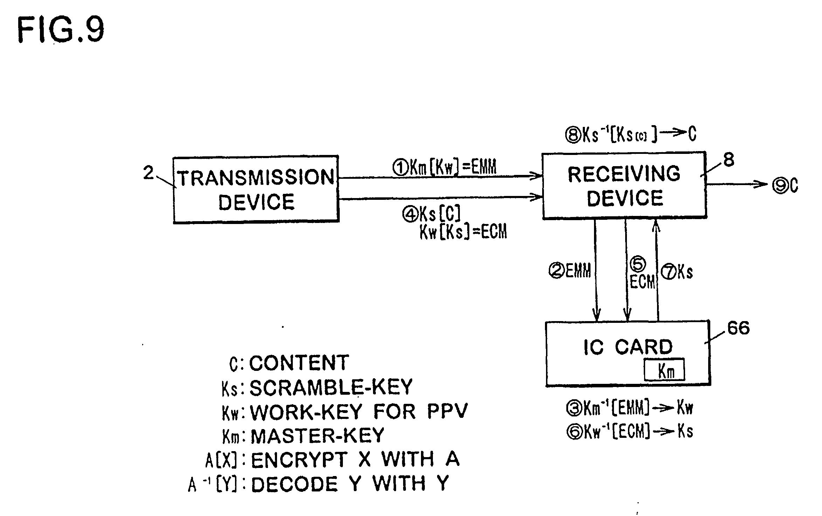

The mechanisms of encryption and decoding in broadcasting will be described with reference to Fig. 9. In the drawing, a symbol "A[X]" shows that X is encrypted with a key A. Also, another symbol "$A^{-1}[Y]$" shows that X is decoded with a key A. The following processes, corresponding to the numbering such as ① to ⑧ in the drawings, are performed.

In pay-broadcast serviced under the general contract, a key Km [kW], encrypting a work-key with a master-key, is sent from the transmission device 2 solely to the receiving device(s) 8 of user(s) who conclude the general contract. The key Km[kW] is sent so that the key is contained in control data EMM (process ①).

The receiving device 8 receiving such control data EMM passes it to the IC card 66 (process ②).

The IC card 66 decodes the control data EMM with the master-key Km previously stored therein (process ③ ). By carrying out such decoding, a work-key kW is acquired. The IC card stores the work-key kW in the memory 76. In this way, the work-key kW is stored within the IC card 66. For every predetermined period (approx. each month), work-key is changed and the control data EMM containing the work-key is transmitted by the transmission device2. The IC card 66 stores a new work-key kW whenever there is change of work-key. No work-key is stored in an IC card of a user who does not conclude a regular contract because the control data EMM is provided to only the users who conclude the contract.

The transmission device sends content data Ks[C], which is encrypted with a scramble-key Ks and a key kW[Ks] encrypting the scramble-key with the work-key(process ④ ). The key kW [Ks] is included into control data ECM and sent with the control data. The scramble-key is changed in a very short period of time and is sent for every change.

Then, the receiving device 8 provides received ECM to the IC card 66 (process ⑤ ).

The IC card 66 decodes the provided ECM with a work-key kW previously stored in order to acquire a scramble-key Ks (process ⑥ ). No scramble-key is acquired when no contract and no work-key kW exist.

The IC card 66 sends back a restored scramble-key Ks to the receiving device 8 (process ⑦ ).

The receiving device decodes the content data Ks[C] with the scramble-key Ks thus received in order to acquire content data C (process ⑧ ).

In the general contract broadcast, only users who conclude the contract can watch its services.

The method of encrypting content data in pay-per-view broadcast is the same as that described in the above. Only the difference between them is that control data EMM is sent to receiving devices 8 of all the users in pay-per-view broadcast. Consequently, every user can enjoy contents without concluding an inclusive contract. When the IC card 66 generates a scramble-key Ks on receipt of control data ECM for preview program, the fact is stored therein. This record is sent to the content provider's device 4 (a broadcast center) with receiving device 8 via a communication line. As a consequence, the content provider recognizes that their service is subscribed and asks the subscriber to pay for viewing fee.

(6) Routine processing for viewing content

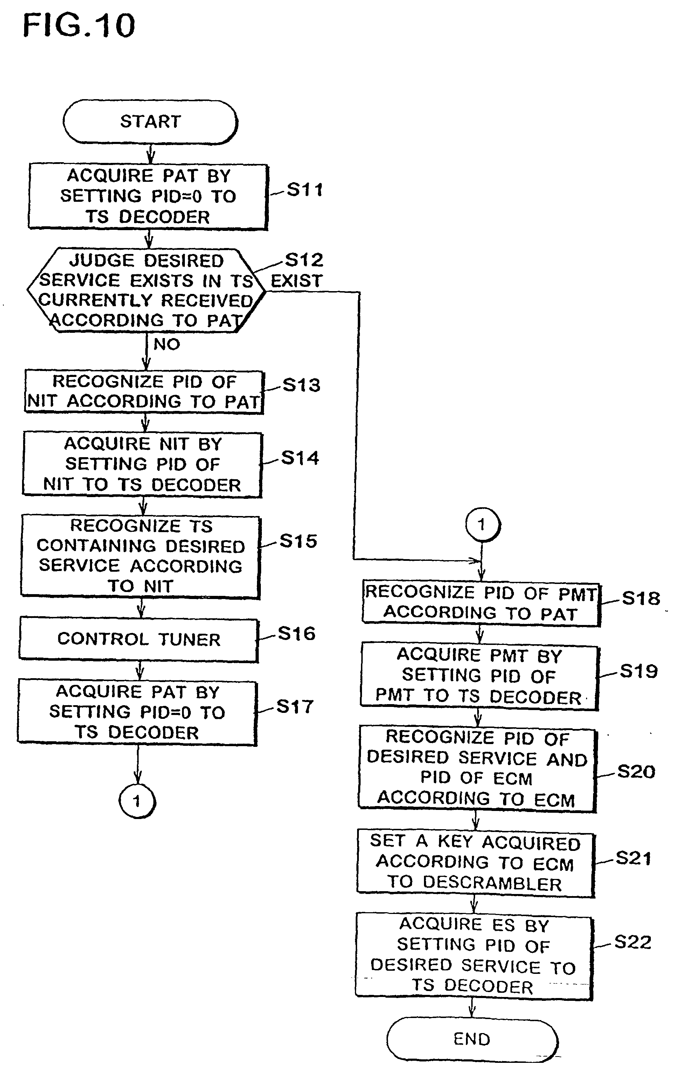

Fig. 10 shows a flowchart of a program of routine processing for viewing content, which is stored in the ROM 54 of the receiving device 8. The detailed description of the processing will be described with reference to this flowchart and the hardware structure shown in Fig. 7.

When the user outputs a command with a remote controller (not shown), for example, the signal receiving part 64 receives that command. For example, suppose that a command by which the currently subscribed service is switched to service SV12 were output. On receipt of such command, the CPU 58 sets a packet ID of control data PAT in the TS decoder 48. According to the packet ID, the TS decoder 48 selects the PAT among provided transport streams, and send the PAT back to the CPU 58. (step S11, Fig. 10).

The CPU 58 judges whether or not a service SV12 exists on a service list written in the PAT by watching the PAT (step S12, Fig. 10). When the receiving device currently receives a service SV31, no service SV12 is multiplexed in a transport stream TS3 (see Fig. 2). Consequently, the service SV12 is not written on a service list of PAT acquired from the currently received transport stream TS3. In such a case, step S13 and steps following step S13 will be performed in order to switch transport streams.

In the step S13 and the steps thereafter, the CPU 58 acquires NIT in order to recognize that a desired service SV12 is multiplexed to which service. In other words, the CPU 58 sets in the TS decoder 48 a packet ID of NIT written in PAT (step S13, Fig. 10). As a consequence, the NIT is output to the CPU 58 by the TS decoder 48 (step S14, Fig. 10).

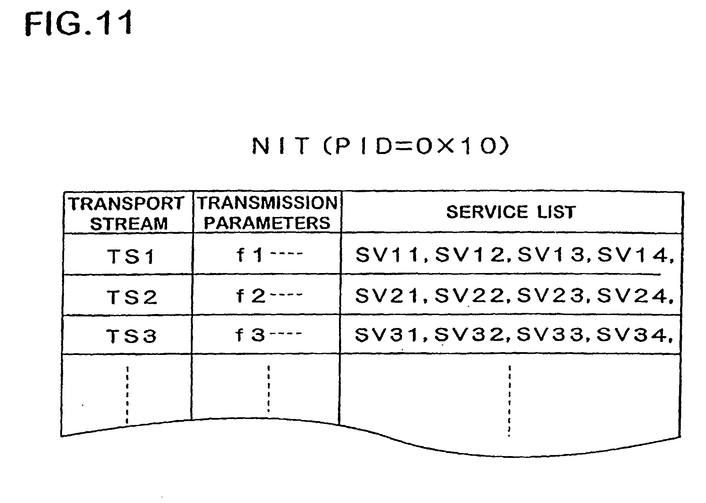

Fig. 11 shows detailed description of NIT. The CPU 58 recognizes that a desired service Sv12 is multiplexed in the transport stream TS1 according to the NIT (step S15, Fig. 10). Subsequently, the CPU 58 controls the tuner 42 so that it receives a frequency f1 of the transport stream TS1 (step S16, Fig. 10). As a consequence, the transport stream TS1 is output from the tuner 42.

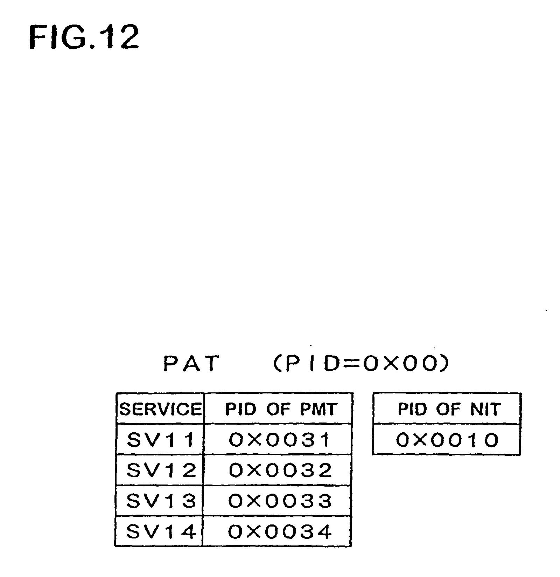

Subsequently, the CPU 58 sets in the TS decoder 48 a packet ID of PAT in order to acquire the PAT (step S17, Fig. 10). Consequently, details of the PAT shown in Fig. 12, for example, can be acquired. The CPU 58 can find out that "0X0032" is a packet ID of PMT in the service SV12 being desired according to the details of the PAT (step S18, Fig. 10).

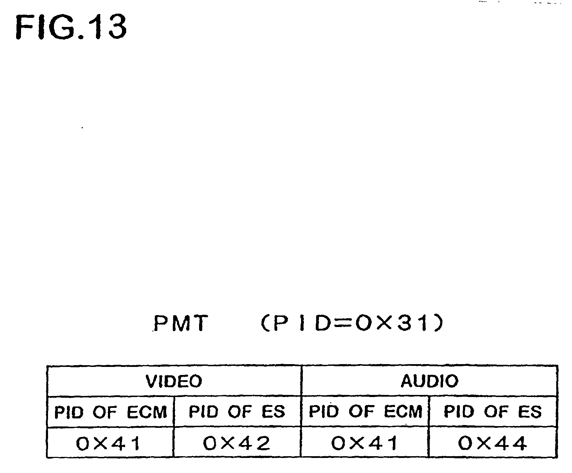

Next, the CPU 58 sets the packet ID in the TS decoder 48 in order to acquire PMT (step S19, Fig. 10). Consequently, details of the PMT shown in Fig. 13 can be acquired. The CPU 58 can find out information on key ECM and a packet ID of content data ES according to the details of the PMT (step S20, Fig. 10).

Further, the CPU 58 sets a packet ID of the ECM in the TS decoder 48 in order to acquire ECM. Then the CPU 58 sends out the acquired SCM to the IC card 66. In response to the step, the IC card 66 sends back a scramble-key Ks to the CPU 58. The CPU 58 sets the scramble-key Ks to the de-scrambler 45 (step S21, Fig. 10). As a consequence, the de-scrambler 45 is ready to decode content data encrypted with the scramble-key Ks.

Subsequently, the CPU 58 sets in the TS decoder a packet ID of the content data ES (step S22, Fig. 10). Consequently, the TS decoder 48 outputs to the AV decoder 52 the decoded content data with the de-scrambler 45. Then the AV decoder 52 converts the content data ES, which is digital signal into analog-composite signals and then output the analog signal to the TV set 36. On receipt of the analog-composite signals, the TV set 36 displays images and output sound.

As described above, routine processing for viewing content is performed. When a command for changing the service currently received to another service from the user, a desired service is output by performing exactly the same processing as described in the above.

(7) Process for storing preview programs

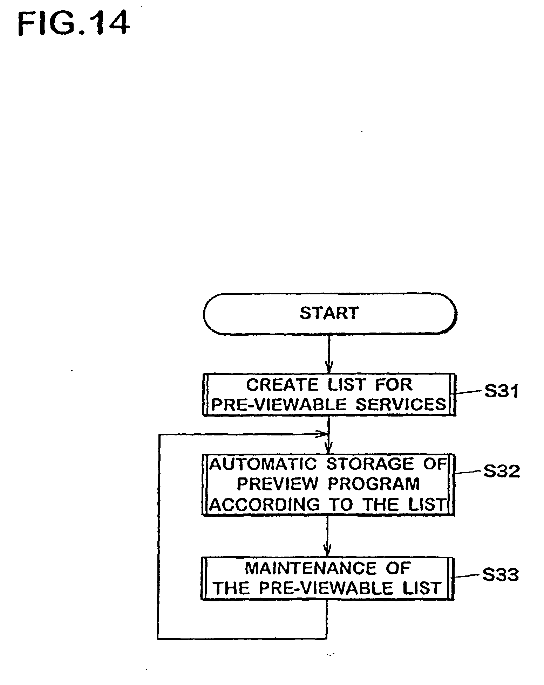

In this embodiment, independent of the routine processing, additional processing in which preview programs are automatically stored while the power supply of the receiving device 8 is on, is carried out. Fig. 14 shows a flowchart of a program that is stored in the ROM 54 for performing processing of storing preview programs.

The CPU 58 performs the following processes; creation of a list that lists pre-viewable services (step S31, Fig. 14), automatic storage of preview program according to the list (step S32, Fig. 14), maintenance of the list of pre-viewable programs (step S33, Fig. 14). In addition, the CPU automatically performs the maintenance of the list of pre-viewable programs and automatic storing of preview program according to the list repeatedly.

(7-1) Creation of a list listing pre-viewable services

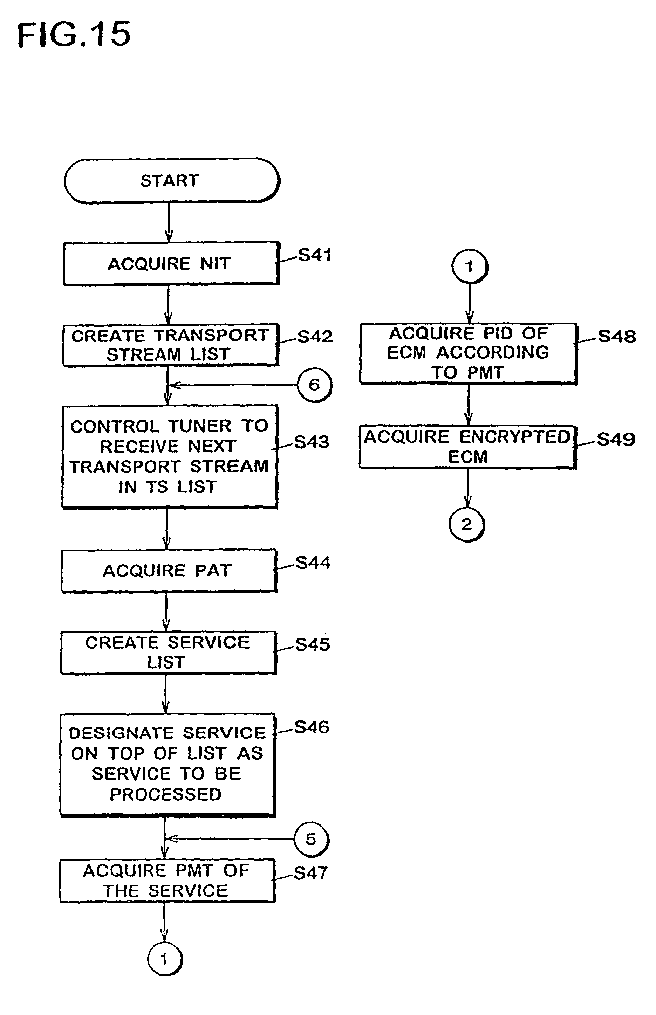

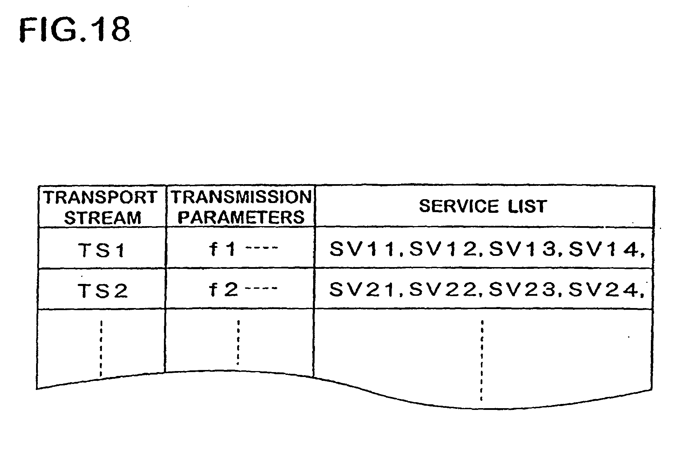

Figs. 15, 16 and 17 show flowcharts of the process for creating a list listing pre-viewable services. At first, the CPU 58 controls the TS decoder 48 so that NIT is acquired (step S41, Fig. 15). Then the CPU 58 creates a transport stream (TS) list as shown in Fig. 18 according to the acquired NIT and stores it in the hard disk 60 (step S42, Fig. 15).

Then, the CPU 58 makes the transport stream TS1 located at the top of the list as a transport stream to be processed. Then the CPU 58 controls the tuner 44 so that a frequency f1 of the transport stream TS 1 is received (step S43, Fig. 15). Subsequently, the CPU 58 acquires PAT from the transport stream TS1 (step S44, Fig. 15).

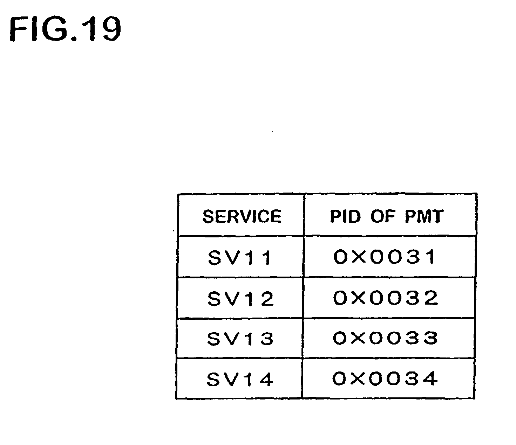

The CPU 58 creates a list showing services contained in the transport stream TS1 according to the acquired PAT, and stores the list in the RAM 56 (step S45, Fig. 15). An example of such service list is shown in Fig. 19.

Subsequently, the CPU 58 makes the service SV11 located at the top of the list as a service to be processed (step S46, Fig. 15). Then the CPU 58 controls the TS decoder 48 in order to acquire PMT of the service SV11 (step S47, Fig. 15). Further, the CPU 58 acquires a packet ID of ECM according to the PMT, and then acquires the ECM (step S49, Fig. 15).

The ECM thus acquired is encrypted (in the case of pay-broadcast). Consequently, at this stage, the CPU 58 is not able to know the description in the ECM and a scramble key contained in that ECM.

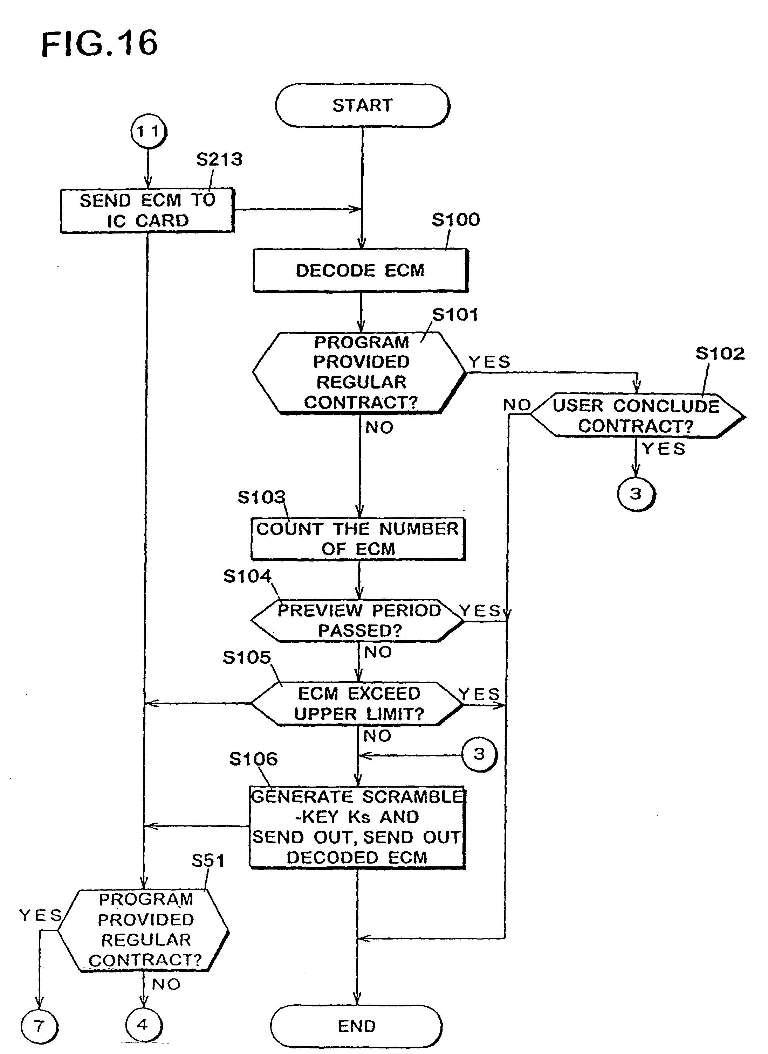

Next, the CPU 58 sends the ECM to the IC card 66 at step S50 shown in Fig. 16 (step S50, Fig. 16).

In response to the step, the IC card 66 decodes the ECM and sends back a scramble-key Ks if a program is a pre-viewable one. When actual preview is performed, the receiving device sends out the ECM to the IC card 66 whenever its scramble-key Ks is changed, and makes the IC card 66 to send back the scramble-key to the receiving device. The IC card never sends back the scramble-key Ks once a pre-viewable period ends. As a consequence, the display of a preview program currently viewed on the receiving device is terminated.

In the embodiment shown in Figs. 15 through 17, a list that lists pre-viewable services is created by utilizing the feature of returning the scramble-key Ks from the IC card 66 when the service is pre-viewable.

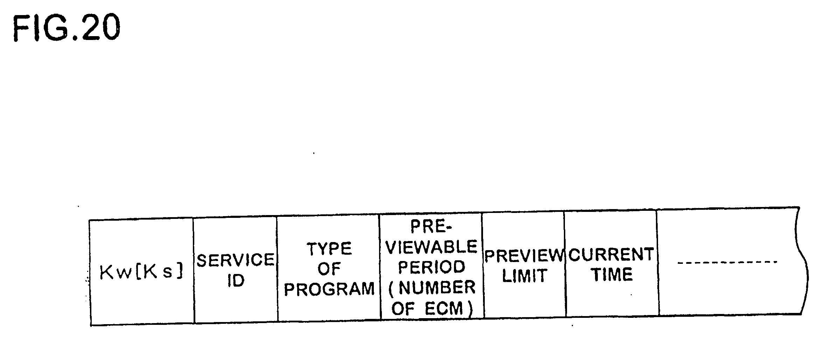

Processing performed by the IC card 66, which receives the ECM will be described hereunder. Initially, the CPU 74 of the IC card 66 decodes the encrypted ECM (step S100, Fig. 16). Fig. 20 shows information contained in the ECM. Within a section indicative of type of program, it is described that a corresponding event (program) to the ECM is either the program under a regular contract or not. The CPU 74 judges whether or not the program is provided under a regular contract or not according to the ECM (see Fig. 20) (step S101, Fig. 16). If the program is not provided under a regular contract, that the process proceeds to step S103. At step S103, the CPU 74 counts the number of reception of the ECM. Typically, ECM (i.e. scramble-key Ks) is changed within a very short period of time. During the period of carrying out preview, ECM is sent from the receiving device 8 whenever the scramble-key Ks is changed. Consequently, the user can recognize the time period of preview by counting the number of reception of the ECM. The starting number of the counter should be 1.

Subsequently, the CPU 74 judges whether or not a pre-viewable time period described in the ECM has passed or not. For example, when the time period is set as thirty (30) minutes from the start of the program in the ECM and the present time described therein is less than thirty (30) minutes from the start of the program, the process proceeds to step S105.

At step S105, the CPU 74 judges whether or not the number of ECM is less than that of the pre-viewable time period (the number of ECM) described in the ECM. In this case, when a pre-viewable time period is set (that is, the service is a pre-viewable one), the process proceeds to step S106 because the number of ECM being counted is 1.

At step S106, an encrypted scramble-key Kw [Ks] described in the ECM is decoded with a work-key Kw stored in the memory 76. Consequently, the CPU 74 acquires a scramble-key Ks and sends it back to the receiving device 8 (step S106, Fig. 16). As described above, when the content is a pre-viewable one, the IC card 66 sends back a scramble-key Ks (together with descriptions of ECM) to the receiving device.

On the contrary, when a pre-viewable time period written in the ECM is judged as zero (0) (that is, the service is not a pre-viewable one) at step S105, neither a scramble key K2 is generated nor is sent it back to the receiving device.

In this way, the CPU 58 of the receiving device is able to make the following judgments under the condition whether or not a scramble-key Ks is sent back thereto in response to a transmission of ECM to the IC card 66. In other words, when a scramble-key Ks is sent back thereto, the CPU 58 judges that this is either of cases; i) the content is provided under a general contract and the user concludes the contract, or ii) the content is a pay-per-view content and a pre-viewable one.

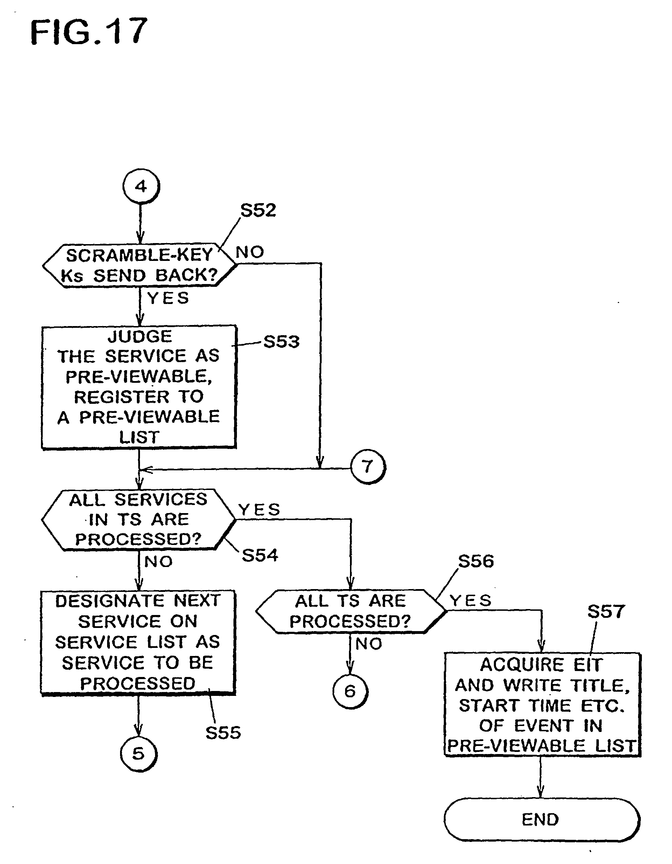

The CPU 58 judges whether or not the content is provided under a general contract or not according to descriptions of the decoded ECM which is sent back from the IC card (see Fig 20) (step S51, Fig. 16). In this case, a preview program of the pay-per-view-content alone is stored. Consequently, when the content is provided under a general contract, the process proceeds to steps S54, S55 (Fig. 17) because it is not necessary to acquire a preview program. Upon completing steps S54 and S55, steps following step S47 described above are performed with a service located at the top of the service list as a service to be processed.

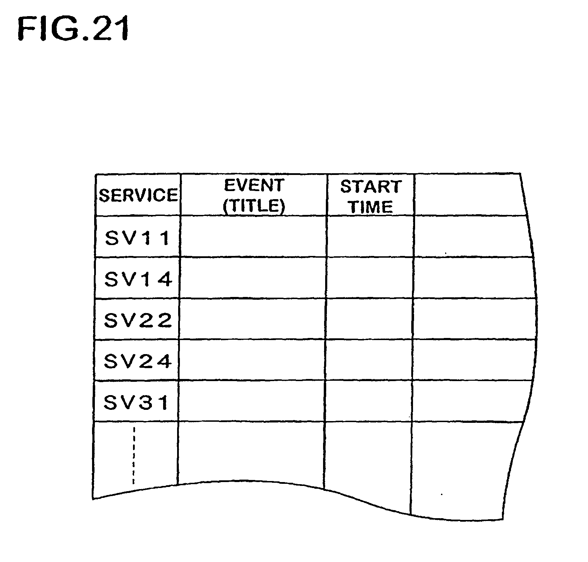

When the CPU 58 judges that the content is not provided under a general contract according to descriptions of the ECM (i.e. the content is a pre-viewable one) at step S51, the process proceeds to step S52 (Fig. 17). In this case, the CPU 58 registers the content into a pre-viewable program list shown in Fig. 21. The pre-viewable program list is stored on the hard disk 60.

When one of contents in a plurality of contents, which form a service is pre-viewable, most of other contents in the service are pre-viewable ones. Consequently, in this embodiment, the whole service is judged as pre-viewable one as described above. In other embodiments, the capability of preview may be judged for each of contents.

Subsequently, the CPU 58 judges whether or not all the services in a service list have been processed or not according to the list previously stored (Fig. 19) (step S54, Fig. 17). If some of services remain unprocessed, steps following step S47 are performed with a service located at the top of the service list as a service to be processed.

When all the services in the service list (TS list, Fig. 18) have been processed, then the CPU 58 judges whether or not all the transport streams in the TS list have been processed or not according to the list previously stored (Fig. 18)(step S56, Fig. 17). If some of transport streams remain unprocessed, steps following step S43 are performed with a transport stream located at the top of the TS list as a transport stream to be processed.

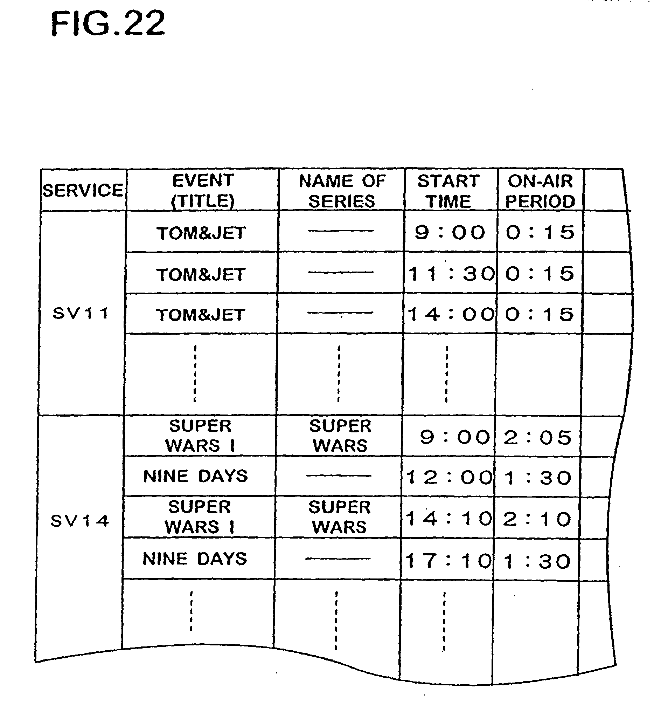

When all the transport streams in the TS list have been processed, a list that lists pre-viewable services is created. Subsequently, the CPU 58 acquires EIT in order to obtain their titles, name of series, their start times, their time period (time period of contents) and so on of programs contained in each service that are listed up, and writes these information on another list that lists pre-viewable services. Fig. 22 shows such a list thus created.

A list of pre-viewable programs and their start time can be acquired by performing the above stated processing.

In the above processing, the CPU 58 judges a program is not pre-viewable once a time period of preview has passed even when the program is a pre-viewable one, (see step S104, Fig. 17). In order to compensate such a phenomenon, the process for creating a list listing pre-viewable services should be carried out after predetermined time progress.

(7-2) Automatic storing of preview programs according to a list

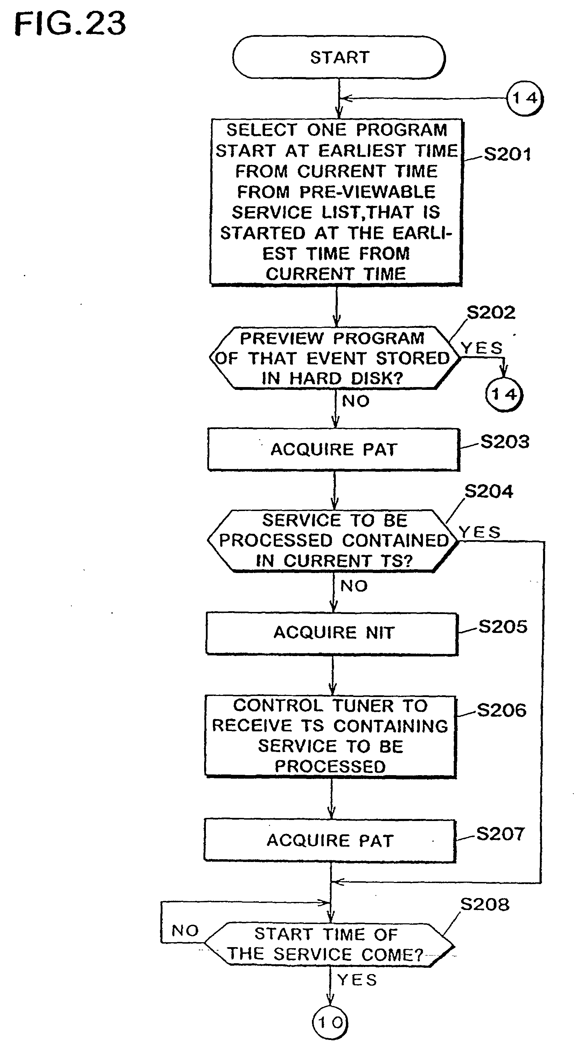

Subsequently, detailed process for automatically storing preview programs shown in step S32 of Fig. 14 will be described. Figs. 23 through 26 are flowcharts illustrating such process.

The CPU 58 selects one program, (event) from a pre-viewable service list (Fig. 22), that is started at the earliest time from the present time (step S201, Fig. 23). If two or more programs satisfy such criteria (two or more programs are aired simultaneously), any one of them is selected. In Fig. 22, a program entitled "Tom & Jet" in the service SV11 is selected, for example.

Subsequently, the CPU 58 judges whether or not a preview program for the program has already been stored in the hard disk 60 (step S202, Fig. 23). In other words, the CPU 58 checks if a program, which has the same tile "Tom & Jet" is stored in the hard disk 60. When such a program has been stored therein, the process returns to step S201, and the CPU 58 selects another program except this program that is started at the earliest time from the current time.

When the preview program has not been stored therein, the CPU 58 controls the TS decoder 48 to acquire PAT from the transport stream currently received (step S203, Fig. 23). Next, the CPU 58 judges whether or not a service containing a selected program (service SV11 in the above example) exists in the transport stream currently received according to the PAT (step S204, Fig. 23).

If no service exists, the CPU 58 acquires NIT (step S205, Fig. 23) and controls the tuner to receive a transport stream containing the service to be processed and then performs step S208.

When the service SV11 containing a selected program exists at step S204, the process directly proceeds to step S208. As a consequence, the receiving device is in a condition under which the transport stream TS1 containing the selected program is received in order to receive the program.

At step S208, the CPU 58 judges whether or not start time 9:00 of the program comes according to the pre-viewable service list. The current time can be known by information on time contained in any of broadcasts. When the current time has not become at the time of start time, it stands by till the start time of the program.

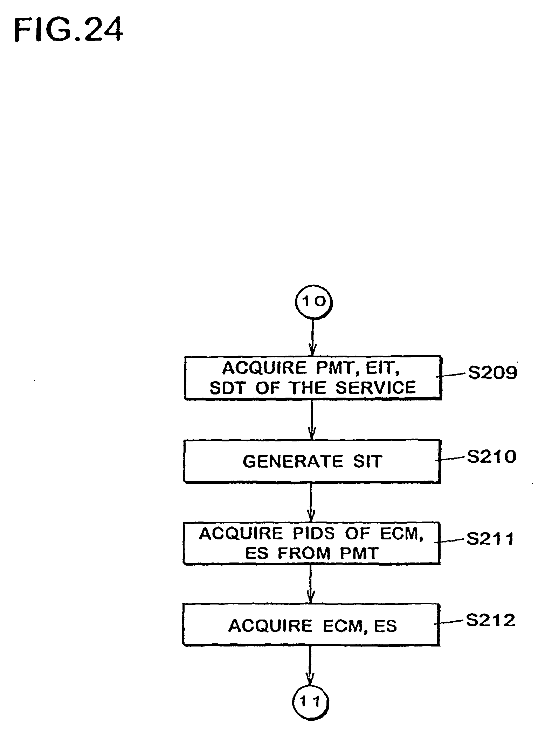

The current time has become at the time of start time, the process proceeds to step S209, and acquires PMT, EIT, SDT of the service SV11 containing the program entitled "Tom & Jet"(step S209, Fig. 24). Subsequently, control data SIT necessary for storing preview program(s) is generated (step S210, Fig. 24).

During the storage, just elementary stream(s) ES (packetized data of image and audio), and PMT, PAT, EIT and so on related to the ES are stored, no information on other program(s) are needed. In this embodiment, a transport stream selecting information on the program (hereinafter referred to as partial transport stream) is generated and stored. Such partialization process is performed at step S215 described later. At step S210, new control data SIT is generated by extracting necessary information such as title of a program and the like from information such as EIT, NIT and so on. This SIT is recorded on the hard disk as data forming part of the partial transport stream).

Next, packet IDs of ECM and ES are acquired from PMT (step S211, Fig. 24). The CPU 58 sets the packet IDs of ECM and ES in the transport decoder 48 in order to acquire ECM and ES (step S212, Fig. 24). In regular reception, the CPU 58 controls the transport decoder 48 so that divided ES to be output to the AV decoder 52. During the storage processing, however, the CPU 58 controls the transport decoder 48 to send back the divided ES with packets.

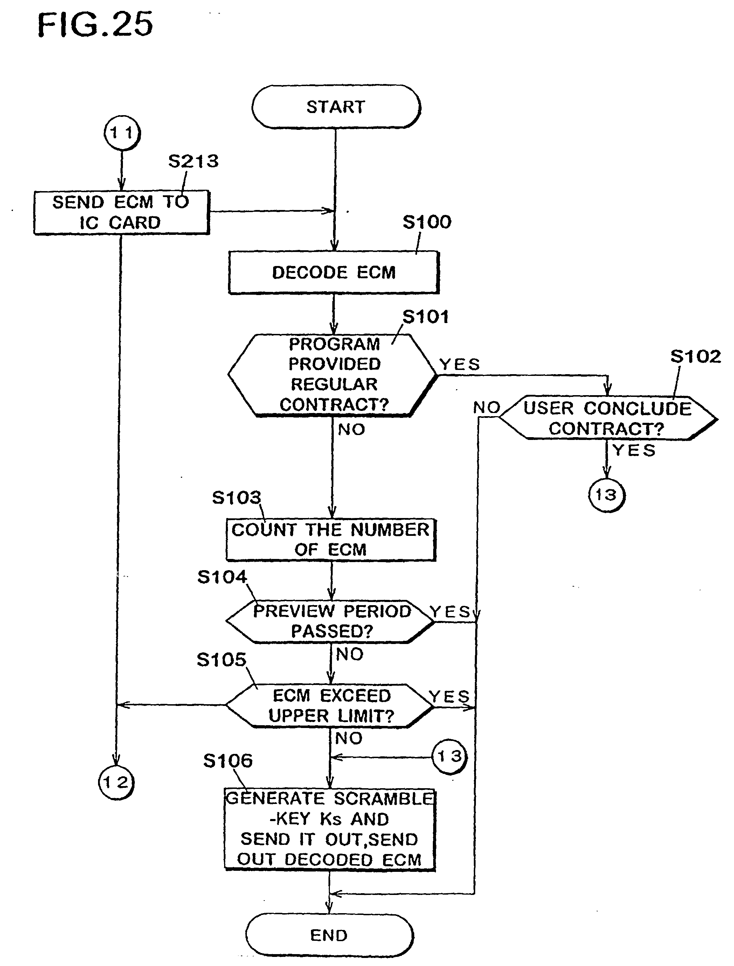

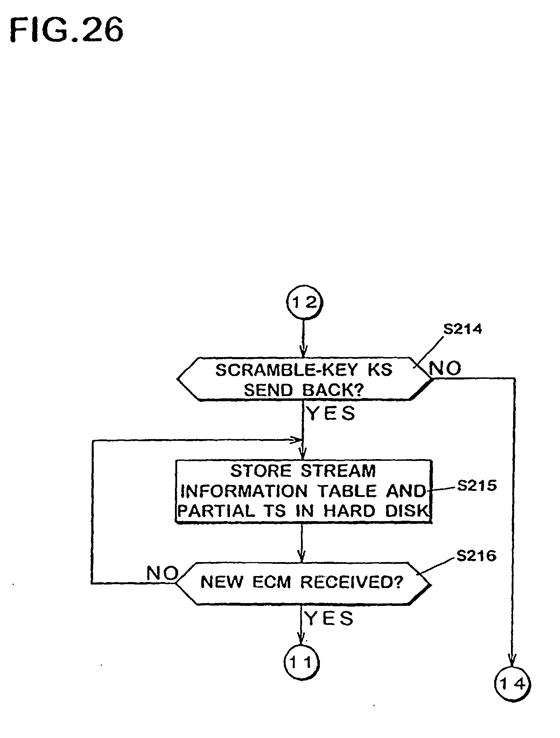

Subsequently, the CPU 58 sends the acquired ECM back to the IC card 66 (step S213, Fig. 25). On receipt of the ECM, the IC card 66 sends back a scramble-key Ks (step S106, Fig. 25). When the CPU 58 detects the scramble-key Ks from the IC card 66 (step S214, Fig. 26), it generates a partial transport stream and stores it in the hard disk 60 (step S215, Fig. 26). At the same time, a stream information table is created and stored therewith.

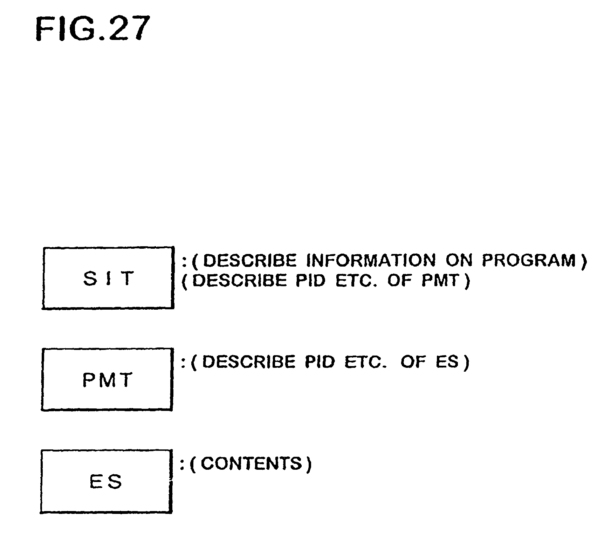

Fig. 27 shows the main structure of a partial transport stream generated by the CPU 58. The partial transport stream comprises content data ES of the program, PMT for describing a packet ID of the ES and so on, and SIT describing a packet ID of the PMT and information on the program.

As to Es, one selected and sent from the transport decoder 48 may be used. In this embodiment, decoded ES with a scramble-key Ks is stored. Also, as to PMT, new PMT deleting unnecessary information from original PMT can be generated and used. For example, a packet ID for acquiring a scramble-key Ks is described in original PMT. No description on packet ID of the ECM is necessary because the ES is stored with the decoded packet. In addition, as to SIT, one generated at step S210 is used:

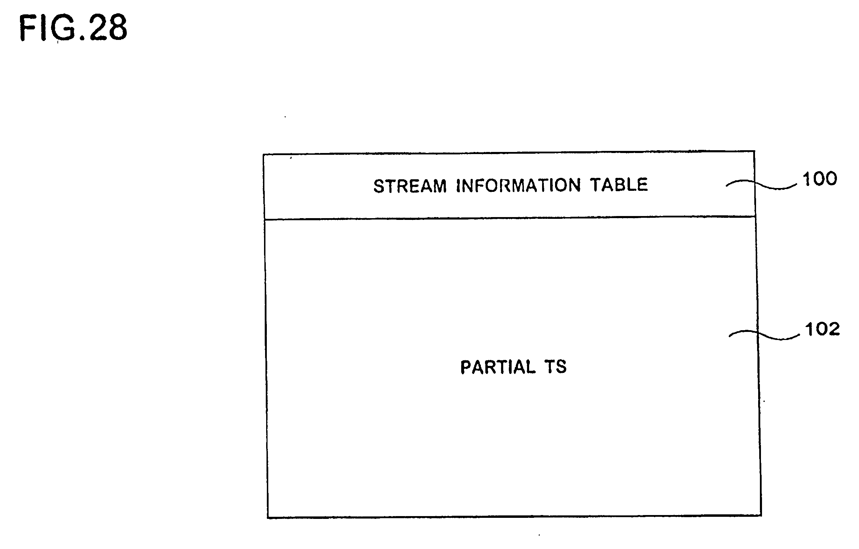

Fig. 28 shows a recording format of a preview program stored in the hard disk 60. A storage region 102 of a partial transport stream is a region for storing a preview program of the partial transport stream. A great number of preview programs are stored in the region 102. The CPU 58 stores these streams with unique stream IDs for their identification. In this embodiment, highlights (which picks up highlight scenes), normal content storage (storing the whole program(s) regularly performed) is stored in the region 102 in addition to preview programs.

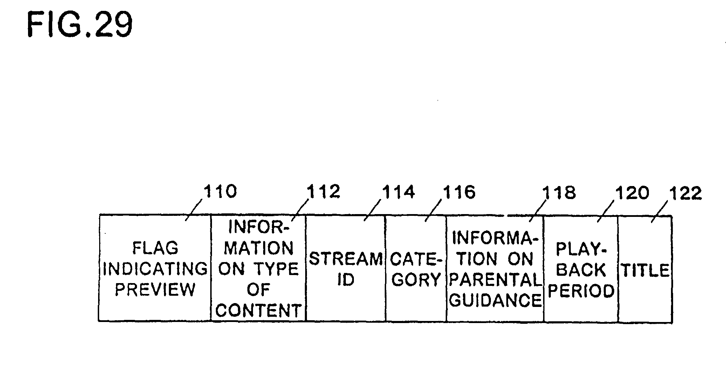

In order to manage these various partial transport streams for preview programs, the CPU 58 stores in a region 100 of a stream information table. The stream information table describes data such as illustrated in Fig. 29 for every preview program. The stream information table contains the following; an information column 110 indicating whether or not users view the preview programs, information on type of content 112 by which type of a content can be identified such as a preview program, highlights and a regular content, a stream ID of the transport stream, information on category of a content such as sports, films, information on parental guidance 118, and the title of a content and so on.

The CPU 58 initializes processing for storing a partial transport stream for a preview program in the hard disk 60 under a data format shown in Figs. 28 and 29. Subsequently, it monitors whether or not ECM of a new version has been sent (step S216, Fig. 26). ECM of a new version is sent from the transmission device at when just ahead of changing a scramble-key Ks. The CPU 58 acquires such new ECM by controlling the transport decoder 48. The ECM thus acquired is sent to the IC card 66 (step S213, Fig. 25).

In response to the above step, the IC card 60 sends a scramble-key back to the IC card 66 (step S213, Fig. 25). Consequently, the receiving device can keep storing content data by decoding encryption. The IC card 66 stops transmission of a scramble-key Ks to the receiving device 8 when the number of ECM counted exceeds the upper limit described in the ECM (Fig. 20) (step S105, Fig. 25).

The CPU 58 of the receiving device 8 judges that a preview time period has passed when a scramble-key Ks is not sent back thereto, and ends storage of that program. Meanwhile, a flag in the pre-viewable list (not shown) is turned on (that indicates the program is stored).

Thereafter, the process proceeds to step S201 of Fig. 23, and selects a program, that has not been stored, but is started at the earliest time. Then a preview program is stored in a similar manner to the above. Automatic storing of preview programs according to a list ends when all the programs listed in the pre-viewable list are stored in the hard disk 60 by repeatedly performing these processes.

(7-3) Maintenance of the pre-viewable list

When automatic storing of preview programs according to a list ends as described above, the CPU 58 performs step S33 of Fig. 14. The CPU 58 always keeps information on programs such as EIT and so on, conducts amendments of the pre-viewable list whenever its description varies or added. When any amendment to the pre-viewable list is made, the CPU 58 carries out automatic storage of preview program according to the list such as at step S32 again. As a consequence, new preview programs can be stored while updating information on programs.

(7-4) Deletion of stored preview programs

When such automatic storage goes on, the capacity of the hard disk 60 will run short. To avoid such phenomenon, the CPU 58 deletes old preview program (s) whenever new preview program(s) is stored.

For example, such deletion can be carried out in order of length of time have stored. Alternatively, the deletion may also be carried out under the following priority rule. For example, programs already been viewed by users, programs not been viewed by users. The priority of deletion may also be determined by combining the above priority with the time and date of recording.

Alternatively, the highest priority of deletion may be given to preview program(s) by which the whole part of the program was already viewed by users. In that case, additional flag indicating that the main part has been viewed should be provided in addition to the flag shown in Fig. 29. Description will be made under an assumption that an automatic preview button 300 is selected.

(8) Processing for viewing preview programs

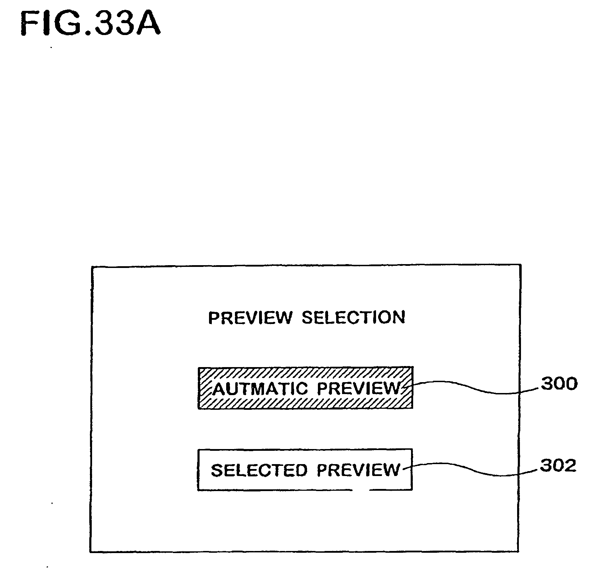

Next, a series of processes for viewing preview programs stored as above will be described. The CPU 58 outputs the TV set 36 an image illustrated in Fig. 33A as an image for receiving a determination of the user. The user moves the cursor with a remote controller (not shown) according to instructions of the image, and selects either of buttons indicating "Automatic preview" or "Preview select" and then depresses a button for determining command.

The description continues, assuming that an automatic preview button 300 is selected. The "Automatic preview" is a mode by which preview programs stored in receiving device 8 are displayed one after another.

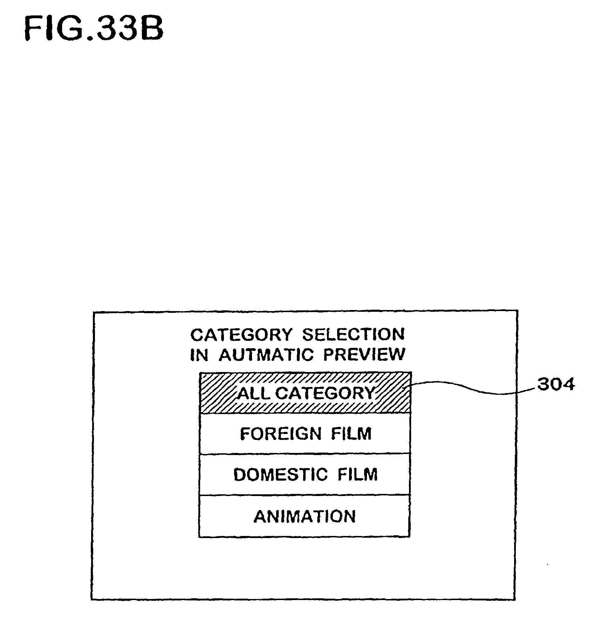

Once the automatic preview button 300 shown in Fig. 33A is selected, the CPU 58 controls to display an image for selecting category of preview programs as shown in Fig. 33B. In response to the display, the user can selects to watch either preview programs of all categories or preview programs of a specific category. In this case, the description continues, assuming that a button 304 for all categories is selected.

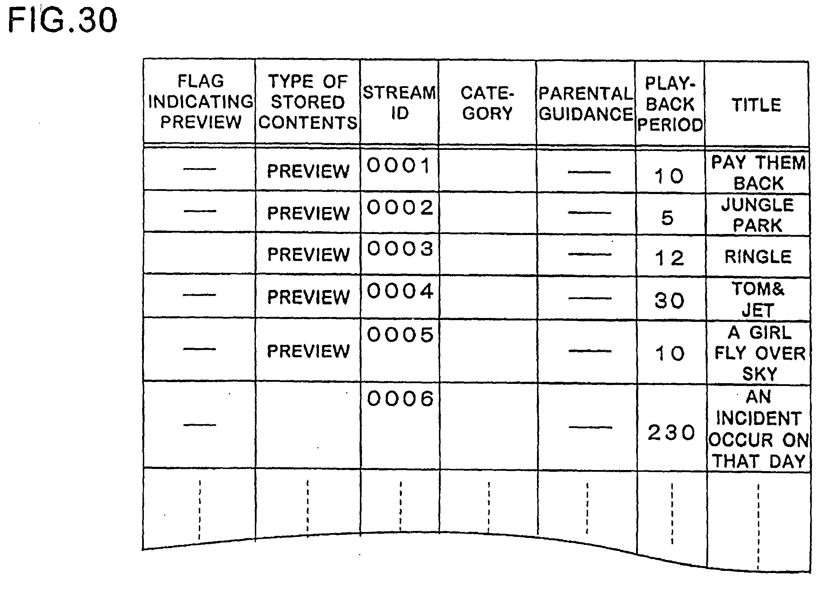

Figs. 31 and 32 show flowcharts of the process for automatic preview. At first, the CPU 58 reads out a stream information table from the hard disk 60 (step S301, Fig. 31). Fig. 30 shows an example of the stream information table recorded in the hard disk. The CPU 58 selects the first preview program out of the preview programs listed on the table and makes it as a preview program to be processed. Here, a preview program for a program entitled "Pay them back" is selected.

Subsequently, a stream ID "0001" of that preview program is read out in order to read out its partial transport stream (step S302, Fig. 31). The partial transport stream thus read out is provided to the TS decoder 48. Then, the CPU 58 sets a packet ID of PAT to the TS decoder 48 in order to acquire PAT. Further, the CPU acquires packet Ids of PMT and SIT from the acquired PAT and sets them to the TS decoder 48 in order to acquire PMT and SIT. In this way, PAT, PMT, and SIT are acquired from the partial transport stream (Step S303, Fig. 31).

Next, cache storage process for preparing a subscription of program is carried out (step S304, Fig. 31). The cache storage process is a process by which the whole part of the program corresponding to the preview is stored prior to a subscription thereof. Details of the process will be described later in detail.

Subsequent to the cache storage process, the CPU 58 provides the partial transport stream thus read out to the TS decoder 48. Furthermore, the CPU sets a packet ID of a preview program's ES, which is obtained according to the PMT to the TS decoder 48. Hence, the TS decoder 48 selects ES of a program entitled "Pay them back" out of the partial transport stream, and outputs the ES to the AV decoder 52. In this way, a preview program of "Pay them back" is output to the TV set 36

The CPU 58 controls to turn on a flag in a column of the table shown in Fig. 30, the flag indicating the preview program has been viewed (step S306, Fig. 31). During the process, the CPU 58 sits and waits for input by the user (step S307, Fig. 32). When the user makes none of input, the output of the preview program thus recorded continues till the program ends (step S308, Fig. 32).

When the program ends, the CPU 58 makes the subsequent preview program as a preview program to be processed (step S309, Fig. 32), and steps following the step S302 are performed. As a consequence, the subsequent preview program corresponding to a program entitled "Jungle Park" is output. Hence, preview programs listed on the stream information table are output one after another.

When the user selects any of the categories on an image shown in Fig. 33B, the CPU 58 selects preview program(s) belonging to that category out of the stream information table and outputs the preview program(s).

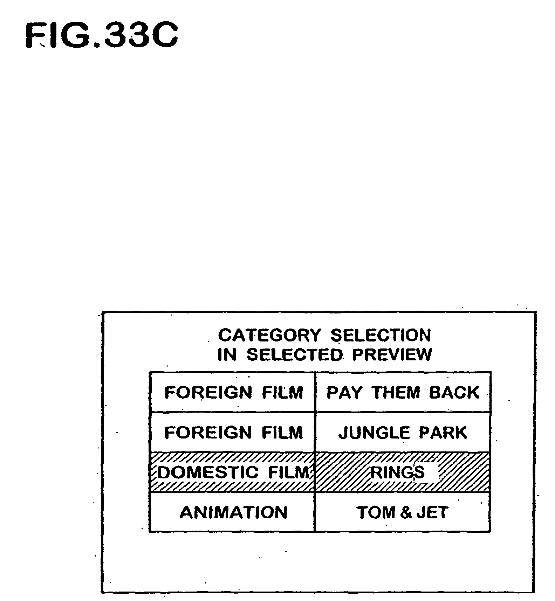

When the user selects a selected preview button 302 on an image shown in Fig. 33A, the CPU 58 controls to display an image shown in Fig. 33C by reading out columns of title and category from of the stream information table. Then the user selects a preview program, which has a specific title, and depresses the determination button. Consequently, the CPU 58 outputs just preview program(s) belonging to that category to the TV set 36. If the determination button is depressed when the image shown in Fig. 33C is displayed, a preview program entitled "Rings" is displayed.

(8-2) Cache storage process for preparing a subscription of program

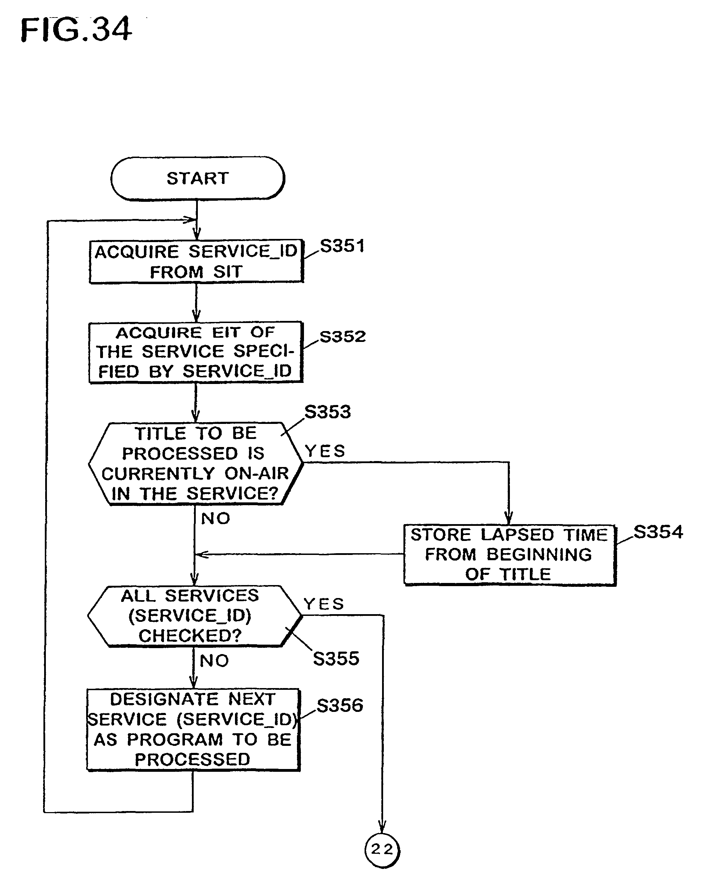

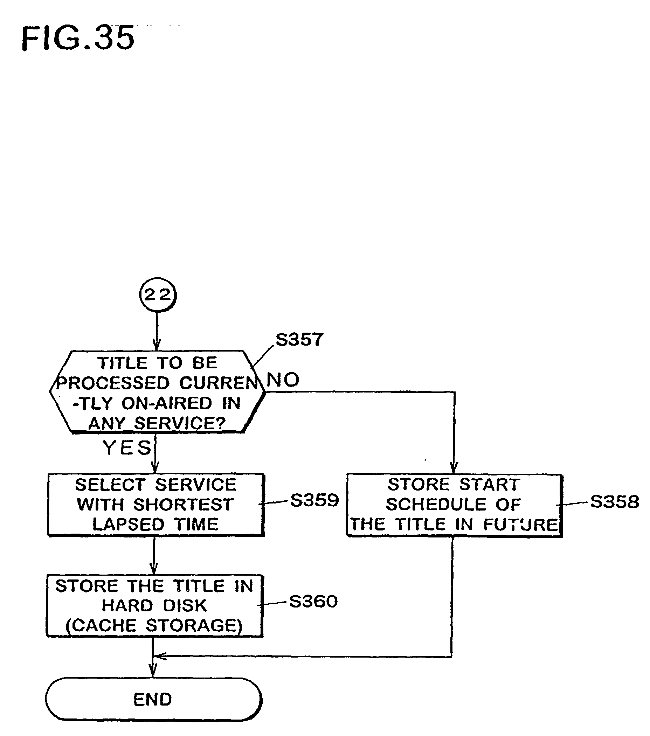

In this embodiment, the CPU starts cache storage so that the whole part of the program corresponding to a preview program is stored just in case when a subscription of the program is determined simultaneous with display of the preview program (step S304, Fig. 31). Figs. 34 and 35 shows flowcharts illustrating cache storage process for preparing a subscription of program. Initially, the CPU 58 reads out a partial transport stream corresponding to the preview program to be playback, and acquires its PAT, PMT and SIT with the TS decoder 48 (step S303, Fig. 31).

Then the CPU 58 acquires service_ids of all the services out of the descriptions of the SIT thus read out (step S351, Fig. 34). Here, service_id is an ID specifying service.

Initially, the CPU 58 conducts the following processes to a service specified by the first service_id as a service to be processed. The CPU 58 acquires BIT of the service to be processed specified by that service_id with the TS decoder 46 (step S352, Fig. 34). The TS decoder 48, which handles the playback process, may also carry out such a process if processing time allows. Within the EIT, program(s) (title) currently on-aired in the service are described. The CPU 58 judges whether or not the program corresponding to a preview under playback is currently on-aired in the service according to the BIT (step S353, Fig. 34).

When the program is not on-aired on that service, the subsequent service becomes a service to be processed (step S356, Fig. 34), and steps following step S352 will be performed again.

The CPU 58 records in the RAM 54 how long has passed from the beginning of the program (lapsed time) associated with the service when the program is found in a service currently on-aired (step S354, Fig. 34).

Upon completion of processes on all the services, the CPU judges in which service the program is on-aired (step S357, Fig. 35). When the program is on-aired in any of services, the service with the shortest lapsed time stored in the RAM 54 is selected (step S359, Fig. 35).

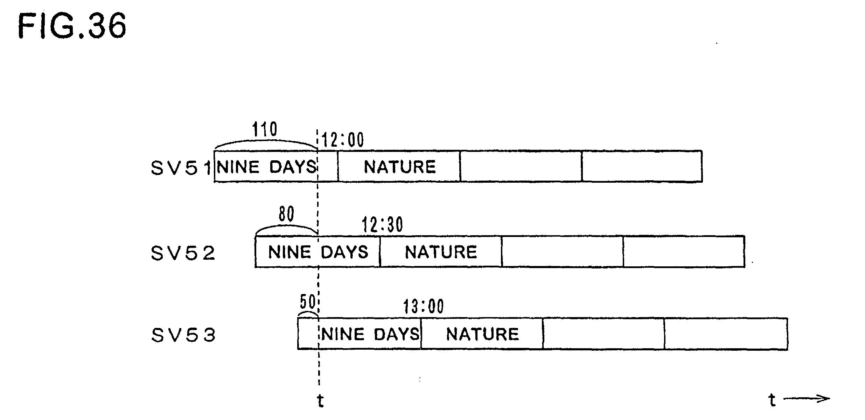

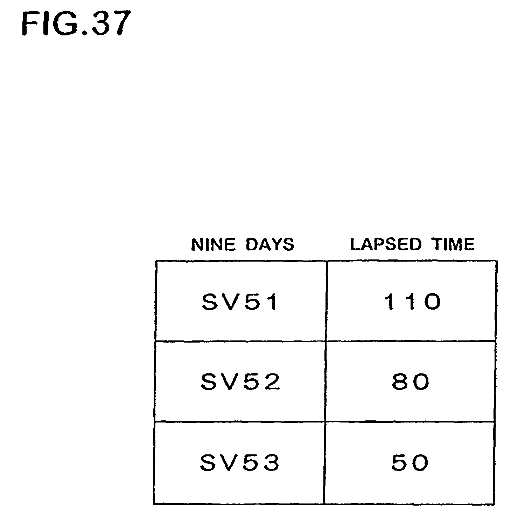

For example, it is assumed that the program currently under preview is "nine days" and a plurality of services SV51, SV52, SV53 are on-aired under a time-shifting manner as shown in Fig. 36. If display of a preview program being stored is initiated at time t, the lapsed time from the beginning is stored in the RAM 54 as shown in Fig. 37. Consequently, the CPU 58 selects the service 53, in this case. The reason of selecting a service with the shortest lapsed time is for raising the possibility of acquiring as perfect as possible content data.

Then the CPU 58 controls the TS decoder 46 to acquire ES of the selected service SV53, and stores it in the hard disk 60 as a partial transport stream (step S360, Fig. 35). In such a case, decoding can be performed because the IC card 66 sends back a scramble-key Ks repeatedly till the preview time ends. This is because a certain period of preview time is allowed in each broadcast repeatedly performed in most of the pay-per-view programs. In this way, cache storage process for preparing a subscription of program can be initiated.

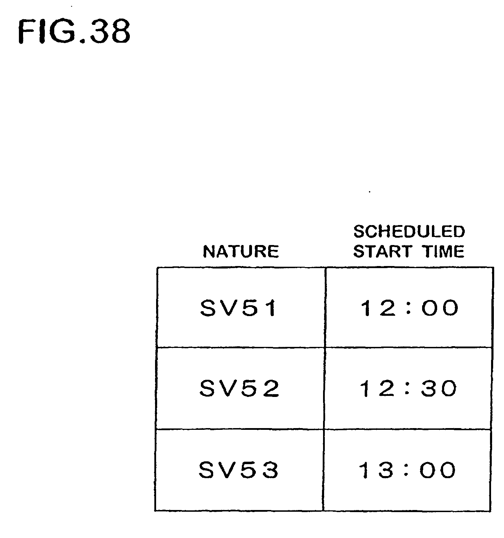

In the contrast, scheduled time for start broadcasting of the program is stored with reference to EIT when a judgement that the program is not on-aired in any of the services is made (step S358, Fig. 35). Fig. 38 shows an example of scheduled time for start broadcasting.

As described above, cache storage of program contents is initiated when the program is currently on-aired during the preview reproduction. In addition, the cache storage of the previous program is deleted when a preview program of the subsequent program starts.

(8-3) Processes for subscription

Next, processing when the user determines subscription of the program during the preview reproduction will be described. These processes are performed when the user inputs a command to subscribe a program at step S307 in Fig. 32. In that case, the CPU 58 performs step S311.

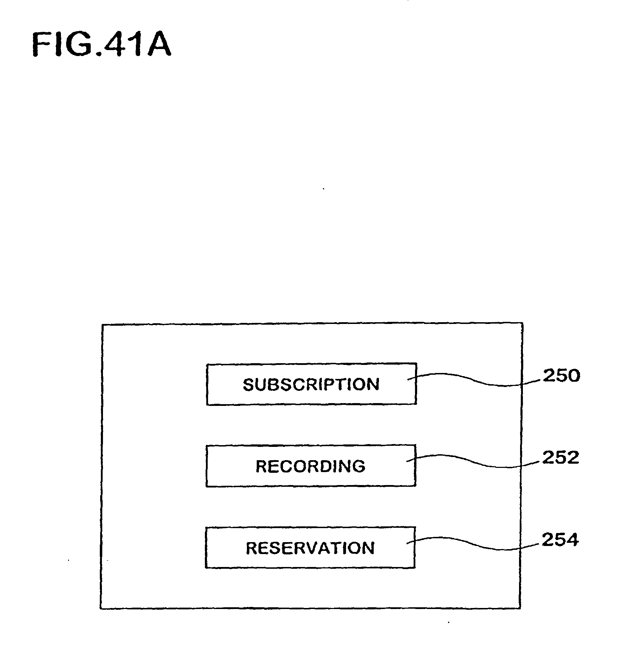

Fig. 41A shows an image for receiving a command for subscription. The user finalizes the decision of subscription by selecting one of a subscription button 250, a recording button 252 and a recording reservation button 254 with a remote controller, for example.

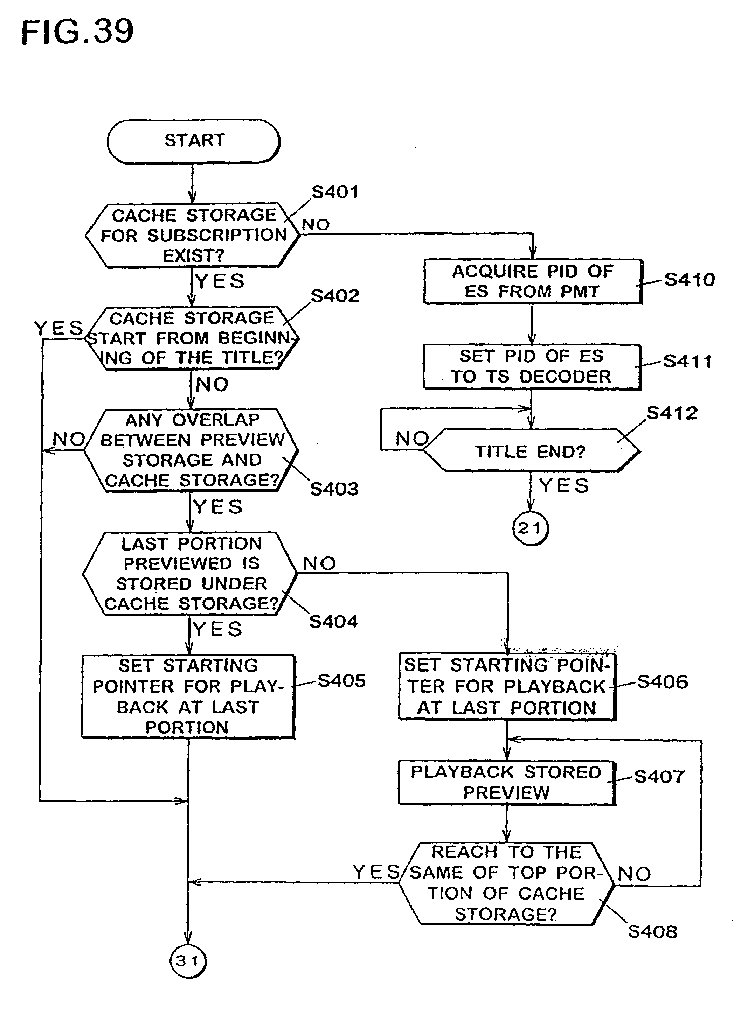

When the subscription button 250 is selected, the program starts and viewed. Fig. 39 shows processes for subscribing a program. The CPU 58 judges whether or not the subscribed program is stored under cache storage process (step S401, Fog. 39). A program is stored under cache storage when the program is subscribed during its the preview reproduction and that is currently on-aired. However, no cache storage is performed when a program is subscribed except the time of preview reproduction.

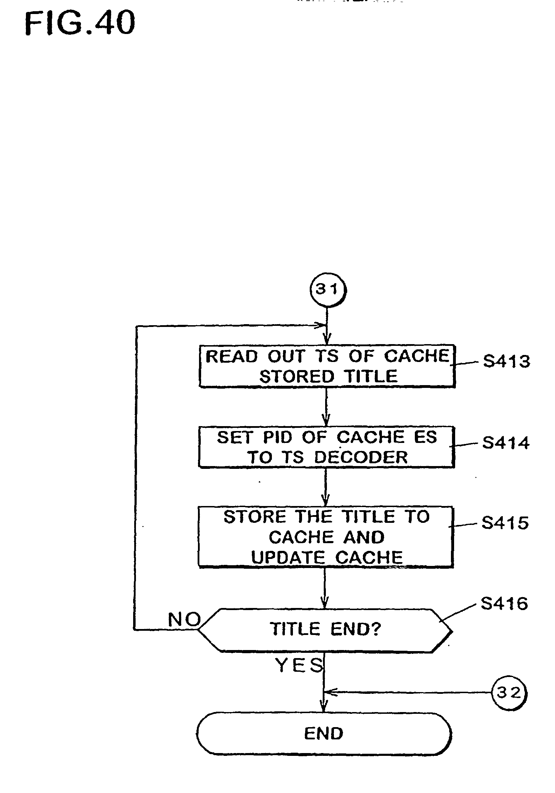

The CPU judges that whether or not content data of the cache storage is recorded from the very beginning of the program (step S402, Fig. 39). The CPU 58 reads out the partial transport stream stored under the cache storage, and provides it to the TS decoder 46 (step S413, Fig. 40). In addition, the CPU 58 controls the TS decoder 46 to acquires a packet ID of ES, and sets it to the TS decoder 46 (step S414, Fig. 40). Consequently, the TS decoder 46 outputs the ES to the AV decoder 52. As a result, the TV set 36 outputs images and sounds of the program. The user can view the program from the beginning thereof even when a certain period of time has passed from the beginning at the time the subscription button 250 is selected.

The CPU 58 control the TS decoder 48 to acquire ES of the program in parallel to performing the processing described above. Even in this case, the CPU 58 sends to the IC card 66 the purport that it performs process for subscription. The IC card 66 sends a scramble-key Ks repeatedly till the program ends in response to such a transmission. The information in that the process for subscription 2which is recorded in the IC card 66 is sent to the content provider's device via the modem 62 under the control of the CPU 58.

Then, the CPU 58 generates a partial transport stream from the ES of the acquired program, and adds it to a cache storage part of the hard disk 60 (step 415, Fig. 40). At the same time, portion(s), which has already been playback are deleted. As described above, both the storage of programs and the playback of these are performed in a parallel manner with the cache storage part. The process ends when the program ends (step S416, Fig. 40).

When content data of the cache storage is not recorded from the very beginning of the program at step S402 shown in Fig. 39, the S403 is performed. At step S403, it is judged that there is any overlapped portion of the portion stored as a preview program and the portion stored under cache storage.

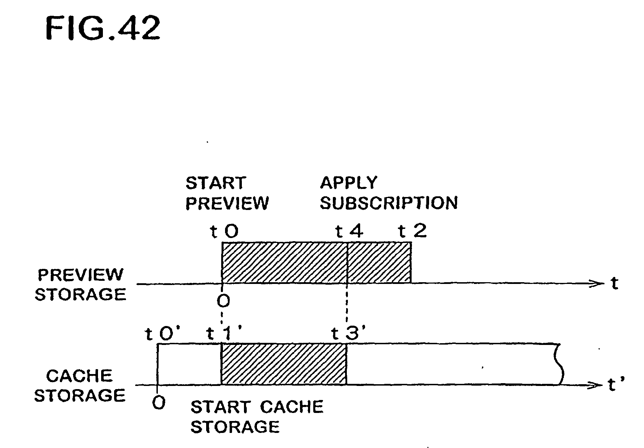

For example, it assumes that a preview program is stored from the beginning point (time) "t0" to a point (time) "t2" of a program as shown in Fig. 42. In the drawing, an abscissa axis "t" shows lapsed time of a preview program from the beginning of the program and another abscissa axis shows lapsed time "t'" from the beginning of the program currently on-aired. It also assumes that lapsed time of the program currently on-aired from the beginning thereof is "t1'" at the start time "t0" of the preview program. In this case, cache storage is carried out from the time "t1'". It further assumes that the user applies for a subscription after the initiation of preview program, at time "t4".

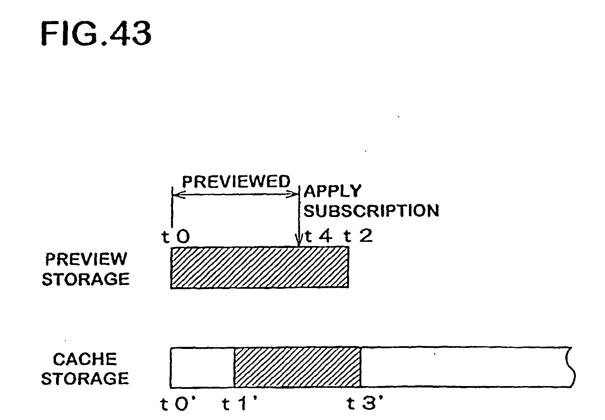

Fig. 43 is a drawing for comparison between content data stored as a preview program and a program under cache storage. In this case, an overlapped portion (time "t'1" to time "t2") is observed between content data stored as a preview program and a program under cache storage. It is, therefore, the process proceed to step S404, and the CPU 58 judges whether or not the last portion "t4" of the program being previewed is stored under cache storage at the step. In this case, a starting pointer for playback is set at the last portion "t4" because the program is stored as illustrated in Fig. 43 (step S405, Fig. 39).

Subsequently, the CPU 58 reads out the program stored under cache storage from a portion corresponding to the portion "t4" and playback the program, then stores a received program in the cache storage part (step S413 through step S415, Fig. 40). The subscription process ends once the program ends and all the content data stored in the cache storage part have been playback (step S416, Fig. 40). As described above, the user can be viewed the program without any break from the preview program even when the program has already been started at a point of applying subscription, that is, a point starting the last portion "t4".

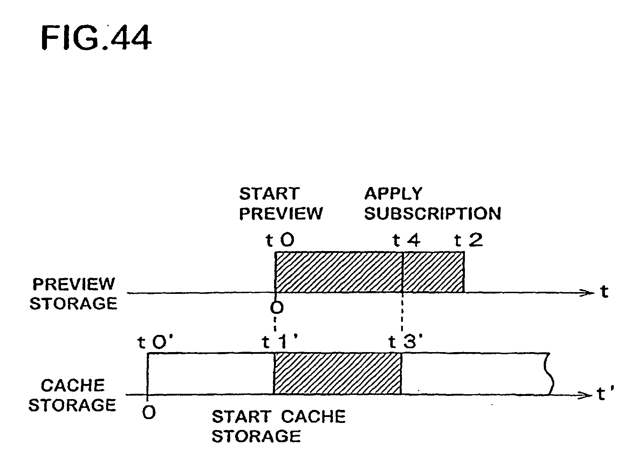

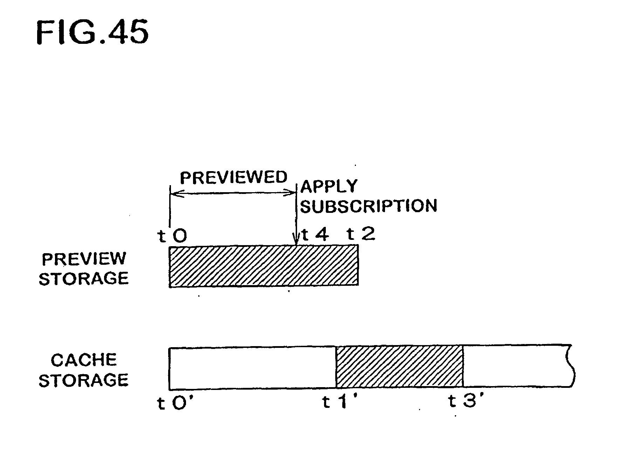

Next, it is given a thought to another case 2 shown in Fig. 44. A difference of the drawing from Fig. 42 is that cache storage is performed after more time passes from the beginning of the program. However, the process proceeds to step S404 from step S403 because an overlap portion between a preview programs being stored and cache storage portion is observed as well. At step S404, it is judges that whether or not the last portion "t4" of the program being previewed is stored under cache storage at the step. Fig. 45 is a drawing for comparison between the preview program being stored and the cache storage portion illustrated in Fig. 44. He process proceeds to step S406 because the last portion "t4" of the program being previewed is not stored under cache storage as shown in Fig. 45.

At step S406, the starting pointer for playback is set at the last portion "t4. Then, at step S407 the preview program stored is playback from the portion "t4". In other words, the CPU 58 playbacks the subsequent portion to the preview program. Further, the CPU 58 judges whether or not the preview program being stored reaches to the head portion of the cache storage "t1'" (step S408, Fig. 39). If not reached thereto, the process returns to step S407 and the preview program stored is playback.

Once the preview program being stored reaches to the head portion of the cache storage "t1'", the portion stored under cache storage is playback. Thereafter, playback of the program continues with the portion being stored under cache storage (step S413 through step S415, Fig. 40). The subscription process ends once the program ends and all the content data stored in the cache storage part have been playback (step S416, Fig. 40).

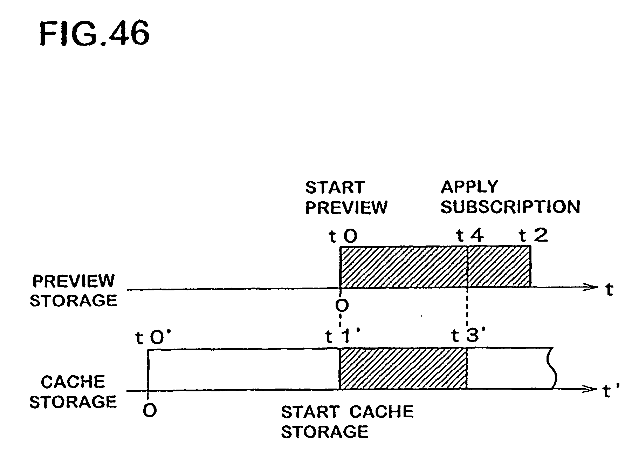

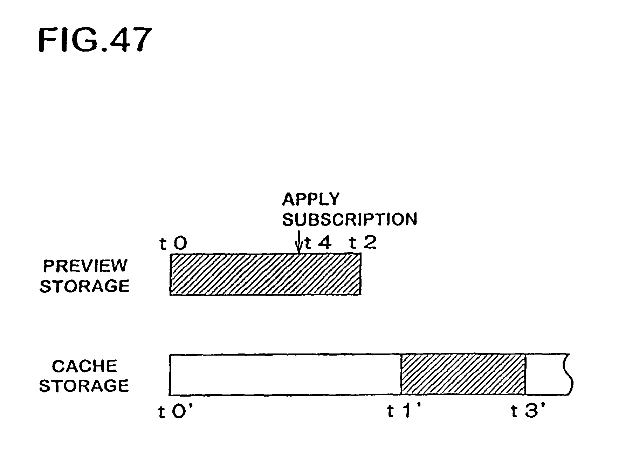

Subsequently, it is given a thought to another case 3 shown in Fig. 46. In this case, cache storage is initiated after further time passes from the beginning of the program. It is, therefore, no overlap portion between the preview program being stored and the cache storage portion is observed (see Fig. 47). As a result of observing such a fact, the CPU 58 gives up to playback a complete program, and starts performing playback from the head portion of the cache storage (step S403 in Fig. 39, step S413 in Fig. 40). Thereafter, the program is playback with the portion being stored under cache storage (step S413 through step S415, Fig. 40). The subscription process ends once the program ends and all the content data stored in the cache storage part have been playback (step S416, Fig. 40).

In this embodiment, when a case shown in Fig. 47 occurs the CPU suspends playback of the preview program being stored at the point "t4" where subscription is applied, and reads out from the head portion of the cache storage "t1'" then playbacks the portion read out. Alternatively, the CPU may playback the head portion of the cache storage from the time "t1'" after playback the preview program being stored.

In the above description, a case have been considered in which a judgement that the subscribed program is stored under cache storage process, is made at step S401. The process proceeds to step S410 from step S401 when the opposite judgement is made at the step S401. At steps S410 and 411, the CPU 58 controls the TS decoder to output ES of a program to be subscribed to the AV decoder 52. In this way, the user can view the program currently on-aired with the TV set 36. The subscription process ends once the program ends (step S412, Fig. 39).

(8-4) Recording process

A series of processing when the user selects a recording at step S307 in Fig. 32 will be described. In this case, the CPU 58 performs either step S312 or step 313.

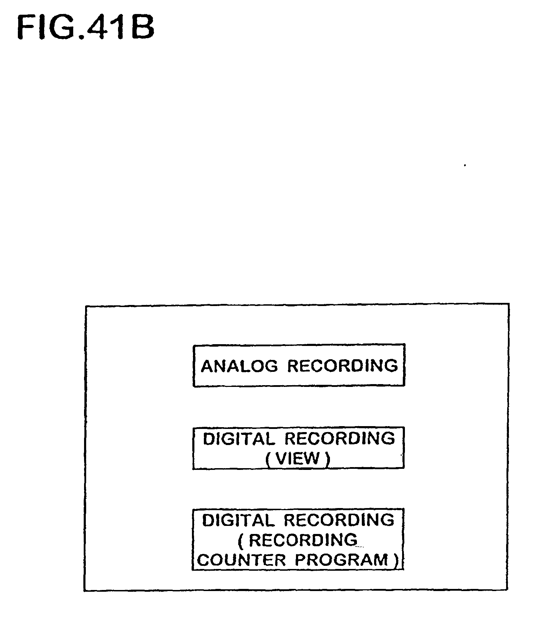

The CPU 58 controls to display an image for selecting a recording mode shown in Fig. 41B when the user selects the recording button 252. When analog recording is selected, analog outputs of the AV decoder 52 are recorded with a video recorder (not shown) for example in an analog form. Processing performed for this, is the same as that shown in Figs. 39 and 40.

When the user selects digital recording (viewing in a digital form), the user can view program while recording it. As a consequence, In addition to processes shown in Figs. 39 and 40, a process in which a generated partial transport stream is stored in the hard disk 60 is carried out. The recording format of the transport stream is similar to the ones shown in Figs. 28 and 29. When it is able to record only from the middle of the program, additional record of the insufficient part is carried out in the subsequent broadcast.

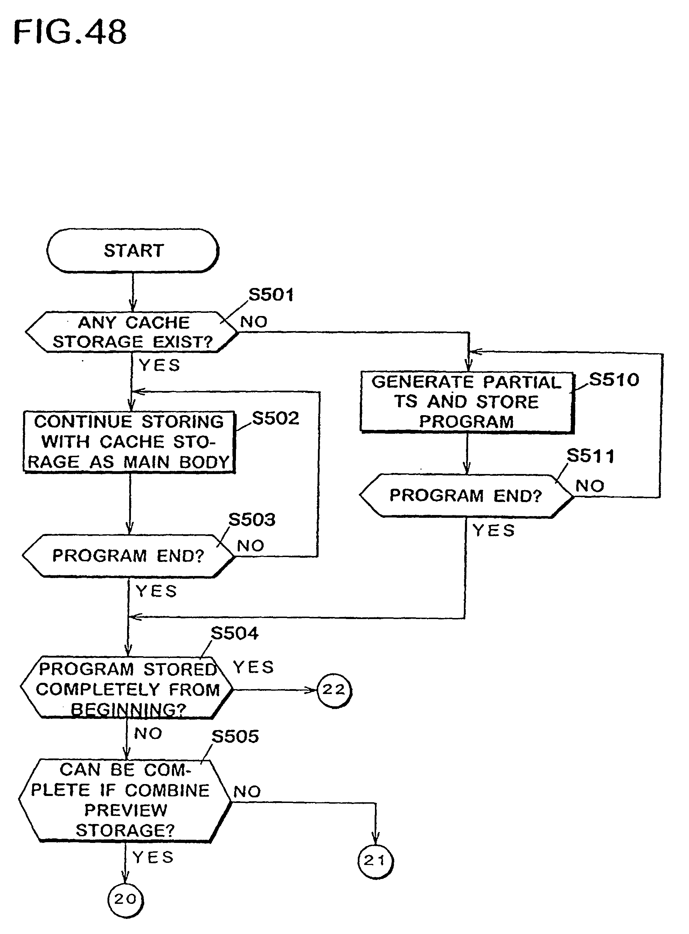

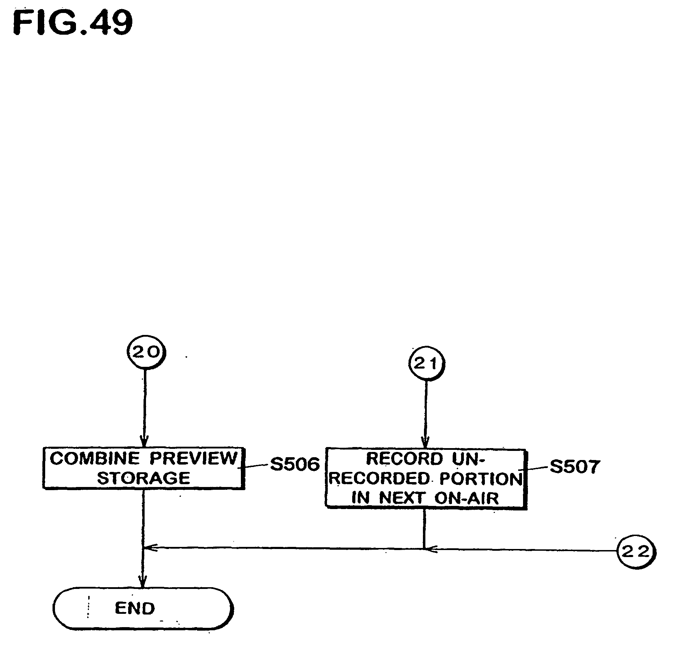

When the user selects recording of a counter-program (i.e. another program being on-aired from the program which, the user currently views), the CPU 58 performs processes shown in Figs. 48 and 49. Initially, the CPU 58 judges whether or not any portion of the program is stored under cache storage (step S501, Fig. 48). When any portion of the program is stored under cache storage, further recording continues with the portion has already been stored which is used as the main body (step S502, Fig. 48). The recording format of the portions is similar to the ones shown in Figs. 28 and 29. Such recording continues till the program ends (step S503, Fig. 48)

Once the program ends, the CPU 58 judges whether or not the program is stored in its complete form (step S504, Fig. 48). The process proceeds to its end when the program is stored in its complete form. If unrecorded portion exists, the CPU judges whether or not the program can be a complete form by adding the preview program to the portion(s) already stored (step S505, Fig. 48). When a judgement that the program can be stored in a complete form is made (such as shown in Figs 43, 45), the CPU completes the program by combining the preview program to the stored portion(s) (step S506, Fig. 49).

When the CPU judges that a complete recording of the program is not possible even combining the stored preview program, unrecorded portion will be stored in the subsequent broadcast (step S507, Fig. 49). As a result of carrying out this step, the program is stored in its complete form.

When it is judges that no portion is stored under cache storage at step S501, a partial TS is generated and recording is performed (step S510, Fig. 48). Steps following step S504 are carried out as described above, once the program ends.

As described earlier, the possibility to achieve a complete recording of the program becomes high because both cache storage and preview storage are employed in this embodiment. In the case of storing the program in its complete form during the subsequent broadcast, processing required for recording can be performed rapidly.

(8-5) Reservation process

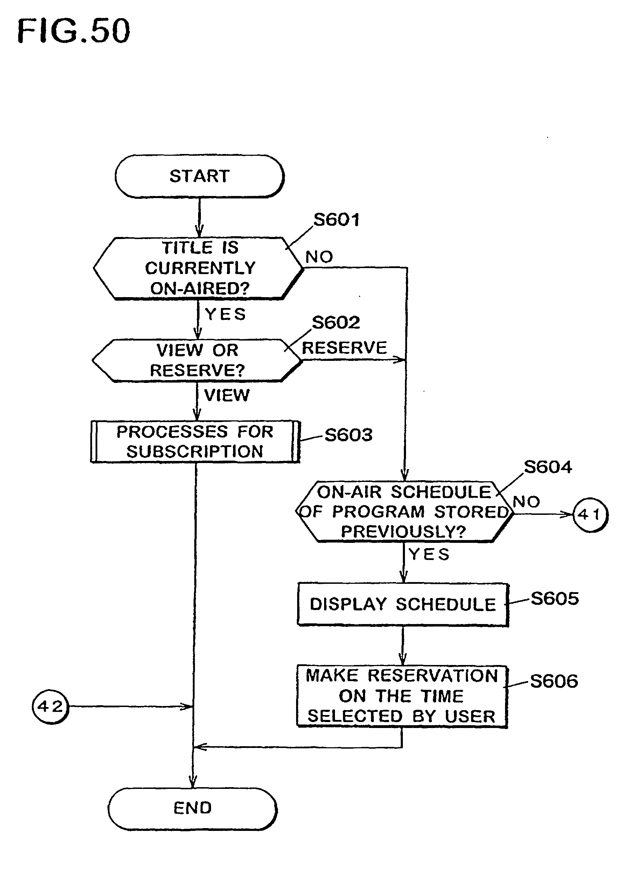

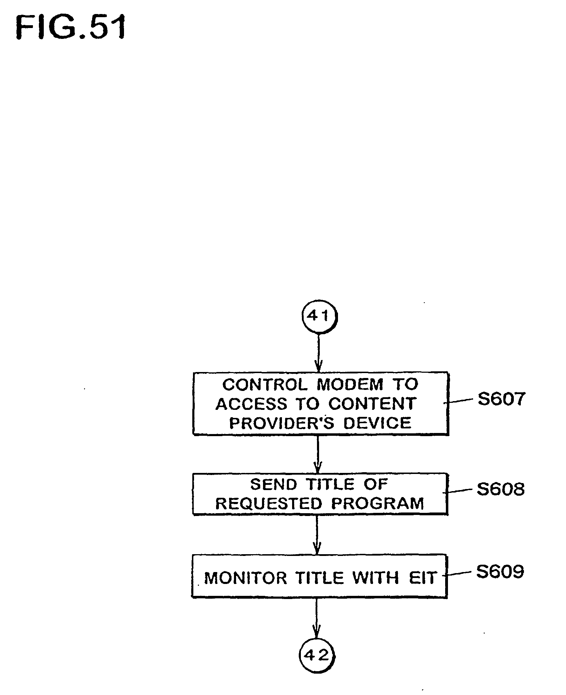

A series of processing when the user selects a reservation at step S307 in Fig. 32 will be described. In this case, the CPU 58 performs reservation process (step S314, Fig. 32). Figs. 50 and 51 show a flowchart illustrating the details of the reservation process.

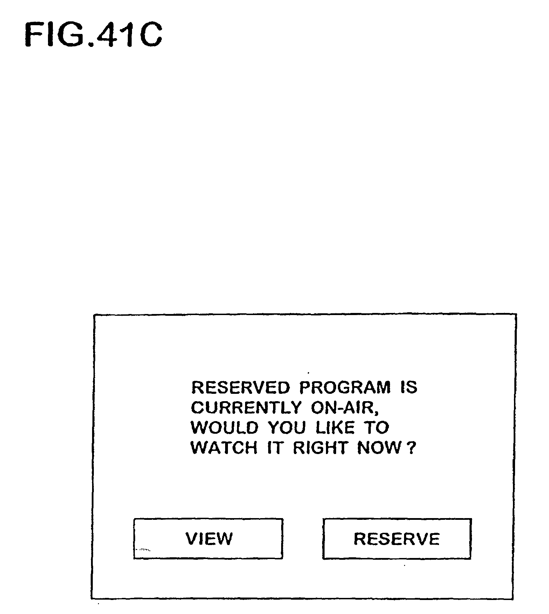

Initially, the CPU 58 judges whether or not a program that is reserved for recording is currently on-aired (step S601, Fig. 50). When the program is currently on-aired, the CPU controls to display an image shown in Fig. 41C that prompts the user to select either of view the program or make a reservation for recording (step S602, Fig. 50). When the user makes a selection to view the program, the processes for subscription shown in Figs. 39 and 40 are carried out (step S603, Fig. 50).

When the user makes a selection to reserve recording of the program, the CPU judges whether or not on-air schedule of the program exist with reference to a scheduled time for start broadcasting stored at step S358 shown in Fig. 35 (step S604, Fig. 50). When any on air schedule exists, it is output to the TV set 36 (step S605, Fig. 50), and the program is schedule of the program is reserved (step S606, Fig. 50).

When no on-air schedule of the program exist at step S604, the CPU 58 controls the modem 62 to access the content provider's device (step S607, Fig. 51). In response to the access, the device sends the title of the program to be reserved by the user (step S608, Fig. 51). Consequently, the content provider can collect requests for specific program(s) made by users. Hence, the provider is able to make on-air schedule in which the opinion of the users was made to reflect.

Then the CPU monitors BIT, and watches whether or not the program is in their on-air schedule (step S609, Fig. 51). When the program is added to their schedule, the CPU 58 controls to display the addition on the screen of the TV set 36.

Requests for specific program(s) may be sent to the content provider not only at reservation process but also when no on-air schedule of a desired program exist at a subscription.

(9) Utilization of the pre-viewable list

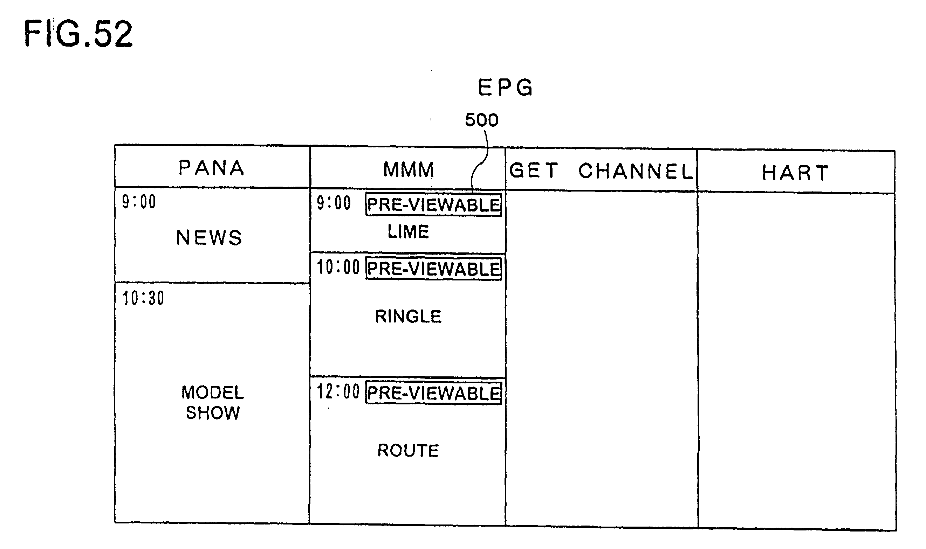

In this embodiment, a list that lists pre-viewable programs shown in Fig. 22. It is, therefore, indications 500 by which the programs attaching thereto have preview programs can be indicated when an Electronic Program Guide (EPG) shown in Fig. 52 is displayed. As a result, users can easily recognize that their desired programs are pre-viewable or not.

(10) Other embodiments

All the programs pre-viewable are stored in the above embodiment, any of preview program(s) can selectively stored by designating a specific category which users wish to store.

In the above embodiment, preview programs are displayed in response to the command from user. Alternatively, preview programs may be displayed under a suitable manner during a process, which need a certain period of time, a search under certain category for example. In that case, preview programs belonging to a category that a user try to search may be displayed preferentially when a search under certain category is conducted.

Further, only the preview programs for pay-per-view programs are stored in the above embodiment. Alternatively, just the head portions of the programs that are designated by users including free-programs for general public, programs provided to the users under a contract and so on may be stored. By carrying out such process, user can see efficiently the digest of the head portion of two or more programs for which they wish.

In the above embodiment, the head portions of programs are stored, other portions of the programs (e. g. highlight scenes) can selectively be stored.

In the above embodiment, users can either view or store a program from its beginning even when the start of the program and its subscription shifts in the case that a subscription, for example, is applied during the display of the preview program being stored.

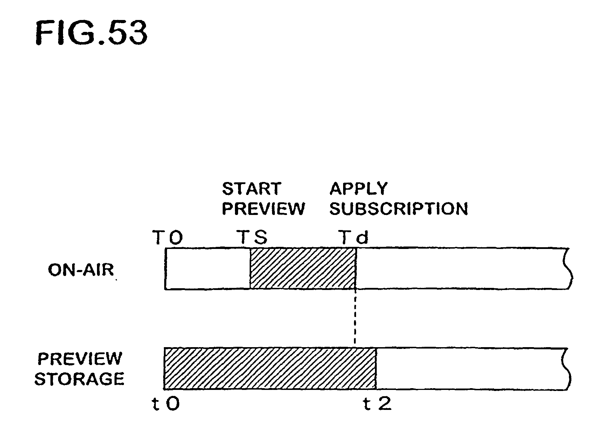

However, there is a case that a user applies for subscription of a program actually on-aired regardless of existence of the preview program of the program. For example, the user can not view a portion of the program from time T0 to time Ts when the user start previewing the program as shown in Fig. 53. In such a case, even when the lapsed time, from the start time T0 to a time Td at when the user applied for subscription, is shorter than a period for playback of the preview program being stored, it is possible for the user to view the program from its beginning by utilizing the preview program being stored as a buffer (make a copy into the buffer).

In the above embodiment, the storage portion is located within the

receiving device. The storage portion may be independent of the receiving device.

The descriptions described in a column "other embodiment" and changes, modifications, alternatives in a second embodiment of the present invention may also applicable to the first embodiment described in the above.

2. Second embodiment

(1) Overview

In the first embodiment, there is a probability to run out the capacity of the hard disk 60 after start storing content data in response to subscription of the content. This is not permissible especially when the user have to pay for the content.

To solve the problem, a prior notice, which indicates whether or not the content to be subscribed can be stored, is provided to the user at when subscription is supplied in the second embodiment described hereunder.

In addition, subscription history of the user and conditions for storing are transmitted to the content provider's device in the second embodiment. In this way, providers of content can recognize users' preferences, and this helps to the creation of new contents and making on-air schedule.

The overall structure of a broadcasting system in the second embodiment is the same as that shown in Fig. 1. Furthermore, the basic structure of the transmission device, hardware structure and so on are the same as those shown in Fig. 1 (see Figs. 3, 6, and 7). Processes for storing preview programs and that for viewing preview programs.

In the description below, the difference between the second embodiment and the first embodiment about the processes for storing preview programs and that for viewing preview programs will be focused.

(2) Process for storing preview programs

The processes performed for storing preview programs are basically the same as the flowcharts illustrated on Fig. 14 through Fig.17, Fig. 23 through Fig. 26.

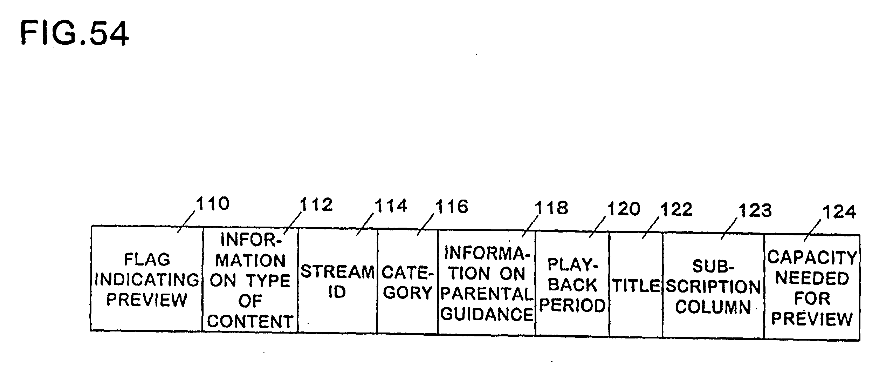

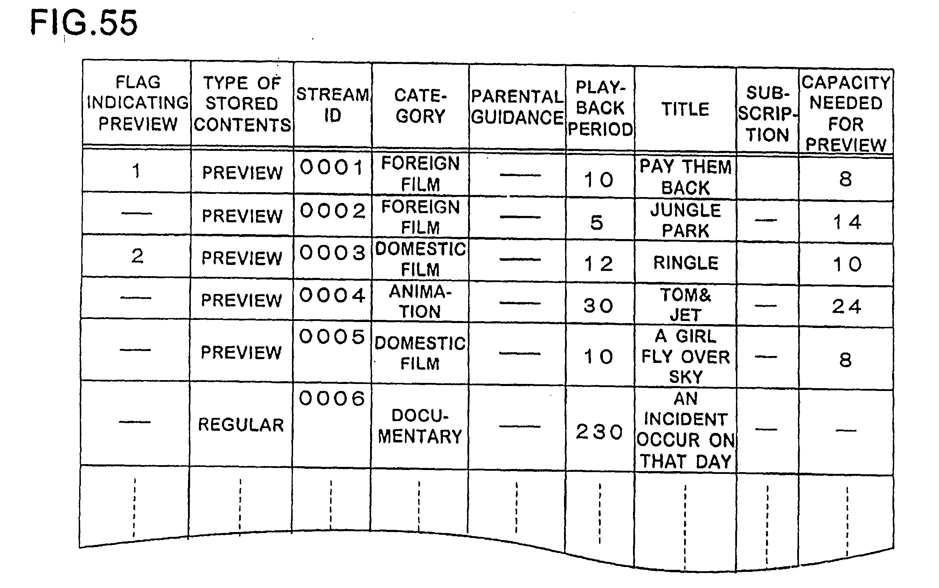

In this embodiment, details of a stream information table (see step S215 of Fig. 26, Fig. 29) which is stored as an index together with a preview program when the preview program is stored in the hard disk 60 is different from the one in the first embodiment. Fig. 54 shows the structure of the stream information table in this embodiment. Also, Fig.55 shows an example of data filled in the table.

In this embodiment, the information column 110 indicates not only the fact whether or not users view the preview program but also the number of time the program to be viewed. A subscription column 123 is a flag indicating whether or not contents corresponding to the preview program are actually subscribed. That is, a sign "—" shows that the program has not been subscribed and another sign "subscribed" indicated that it has already been subscribed. A capacity column 124 for preview program shows the capacity (megabytes) required storing the preview program.

The CPU 58 records the capacity required for storing the preview program in the stream information table whenever a preview program is stored as described above (see step S215). The capacity thus recorded will be used for estimation of the capacity required to store the whole of the content data.

(3) Processing for viewing preview programs

The processes for viewing preview programs are basically the same as the processes described with reference to Figs. 31, 32, 34, 35, 39 and 40 and Fig. 48 through Fog. 51.

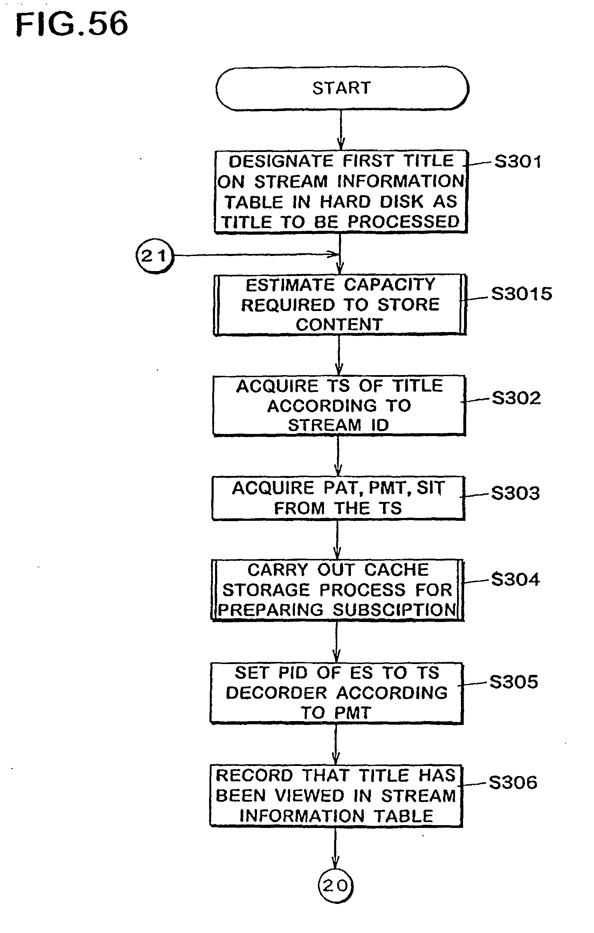

In this embodiment, an estimation of the capacity required to store content data (step S3015, Fig. 56) is carried out prior to perform step S302 as shown in Fig. 56. In addition, the number of times the program to be viewed is recorded in step 306 in response to the information column 110 shown in Fig. 54.

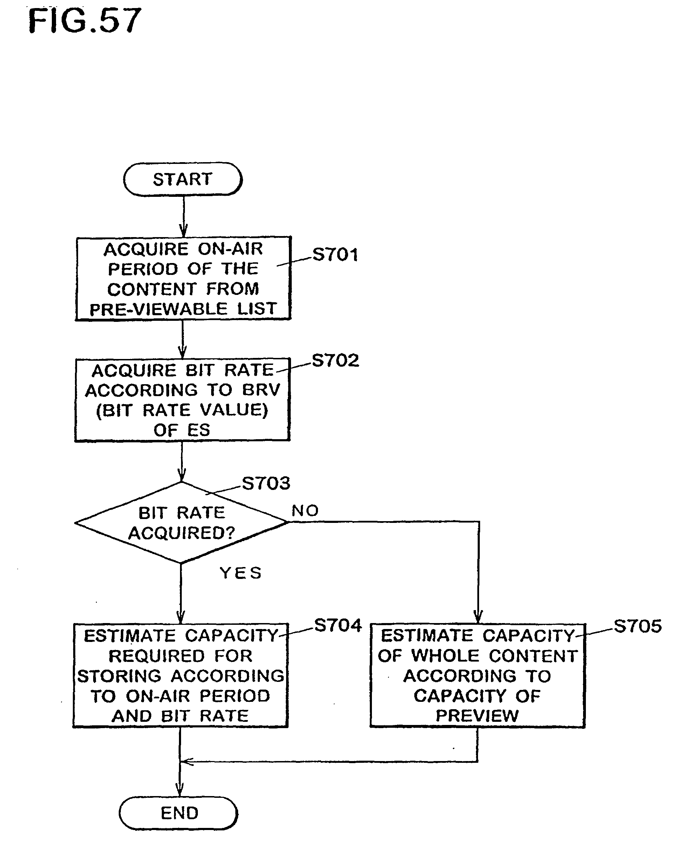

Fig. 57 shows detailed processes for performing an estimation of the capacity required for storing content data indicated as step S3015. The CPU 58 acquires the duration of on-air period for the whole of content data corresponding to the preview program out of the list of pre-viewable services shown in Fig. 22 (step S701, Fig. 57). Alternatively, the on-air period may also be acquired directly from EIT. Then, the CPU 58 controls other parts so that an elementary stream of the content (or other contents belong to the service on which the contents are on-aired) is received. Furthermore, the CPU 58 judges whether or not BRV (Bit Rate Value) indicating transmission capabilities per unit time is described in the header region of the elementary stream (steps S702 and S703, Fig. 57). Here, BRV shows the number of bits transmitted per second.

Once the bit rate is acquired, the CPU 58 estimates the capacity required for storing in accordance with the duration of on-air period for the whole of content data and the bit rate (steps S703 and S704, Fig. 57). That is, the required capacity is estimated with the equation below;

$$\text{Required capacity} = (\text{on-air period} \times \text{BRV})/8$$

Since, 1 byte consists of 8 bits in this embodiment, therefore, 8 to indicate the required capacity in bytes divide the value.

When BVR can not be acquired, required capacity hv for the whole of content data is estimated in accordance with required capacity for storing a preview program pv, a time period of the preview program pt, and a time period of the whole of content. That is, the required capacity is estimated with the equation below (steps S703, S705, Fig. 57);

$$hv = pv \cdot (ht/pt)$$

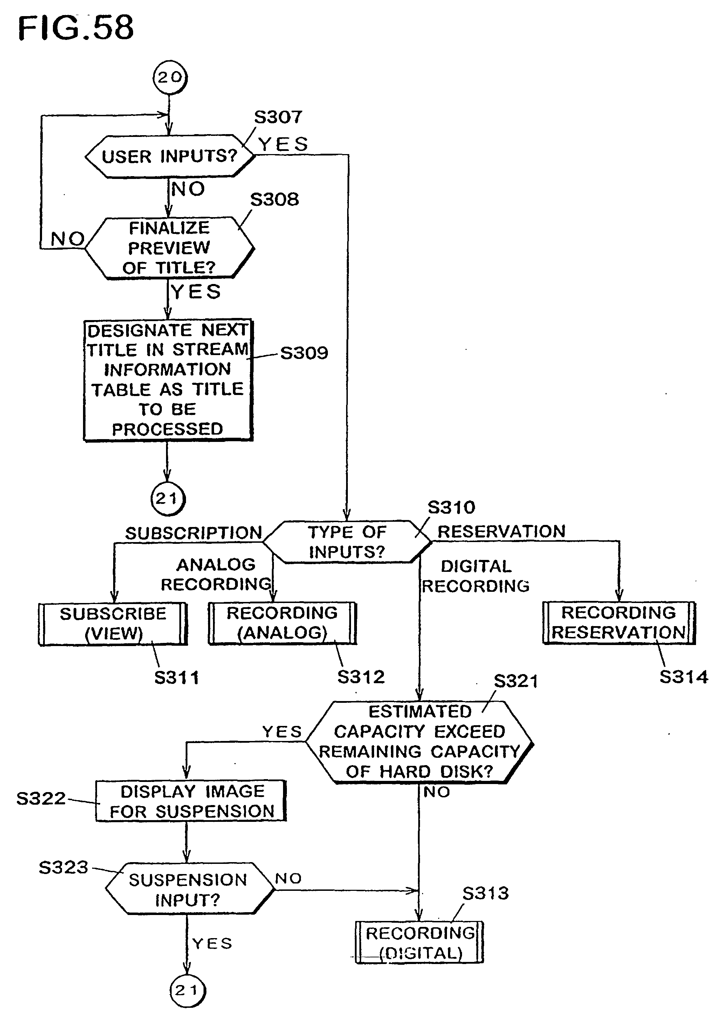

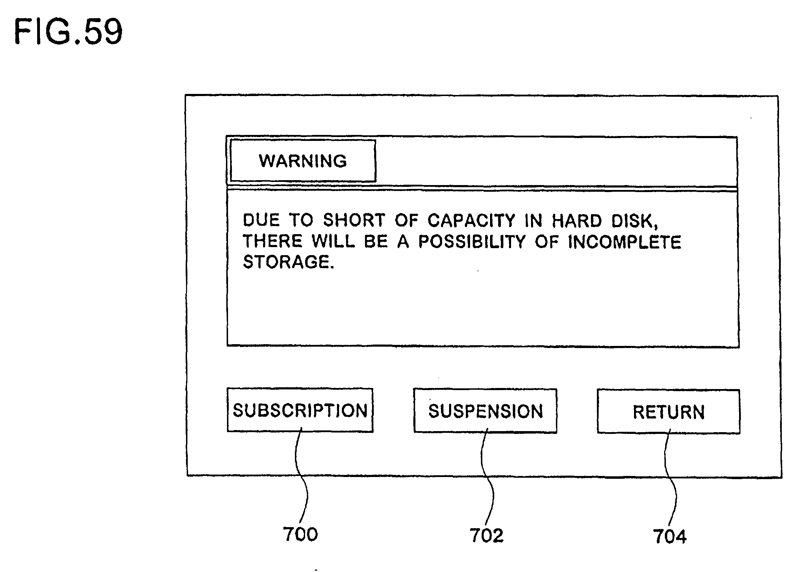

When digital recording at step S310 in Fig. 58 is selected by user's operation, the CPU 58 judges whether or not the estimated capacity exceeds the remaining capacity of the hard disk (step S321, Fig. 58). When the estimated capacity exceeds the remaining capacity, the CPU 58 outputs a display for selecting suspension of the storing process (a warning display) shown in Fig. 59 (step S322, Fig. 58).

In this display, a warning, indicating that there is a probability the whole of content data can not be stored, is displayed. The user is give an choice whether or not they select one of a subscription button 700, a suspension button 702, and return button 704 being displayed with the knowledge of such a risk. When the suspension button 702 is selected, the process proceeds to step for viewing the subsequent preview program. The process for recording in a digital manner is performed when the subscription button 700 is selected (Step S313, Fig. 58).

When it is judged that the estimated capacity exceeds the remaining capacity, the CPU 58 starts the process for recording in a digital manner (Step S313, Fig. 58).

As described above, a judgement whether or not the content data to be stored can store in the hard disk prior to its storing is made, and a warning is displayed if not storable in this embodiment.

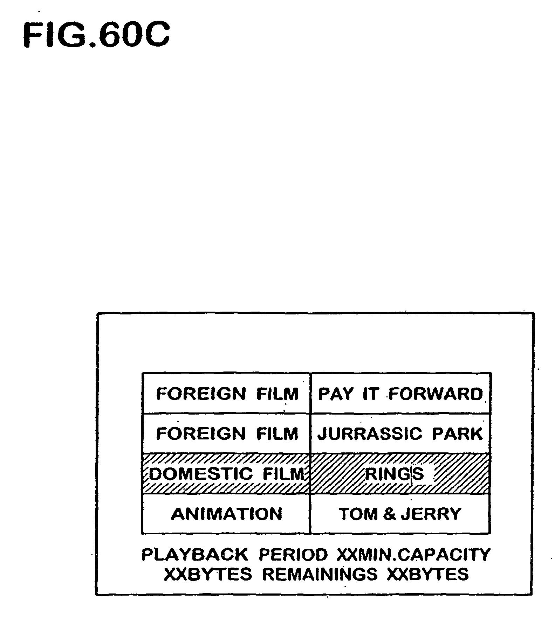

Concerning the preview program on which the cursor locates, a time period for playback of the whole of content data, required capacity to store preview program, and the remaining capacity after storing the whole content data, are displayed as shown in Fig. 60C. Consequently, the user is able to know the overall information on the time period for playback of the whole of content and so on easily.

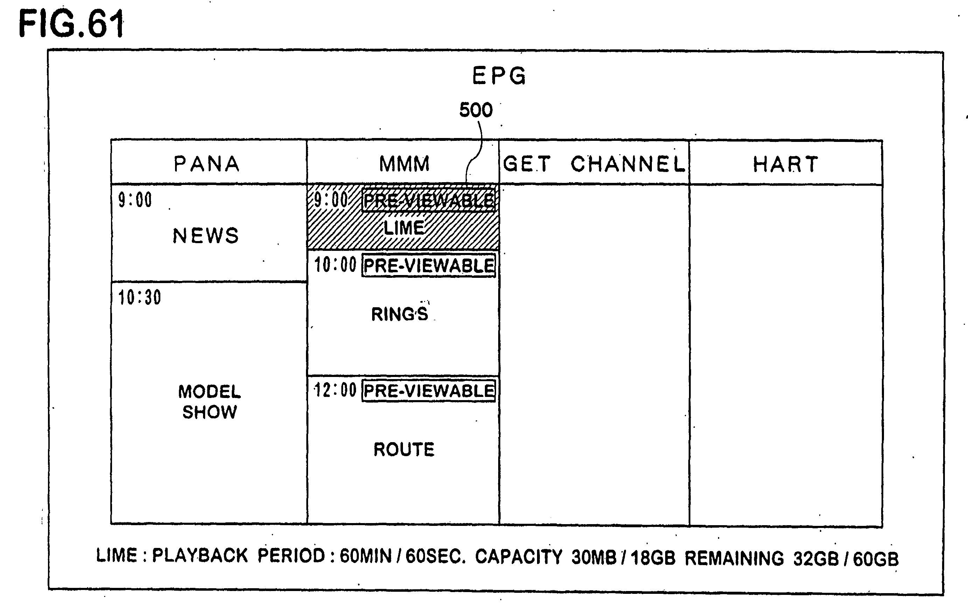

Similarly, in an Electronic Program Guide (EPG), the following values for a content on which the cursor locates, can be displayed; a time period for playback the preview program for the content (60 seconds in the drawing), a time period for playback of the whole of content (60 minutes in the drawing), required capacity to store the preview program (30MB in the drawing), required capacity to store the whole of the content data (18GB in the drawing), the remaining capacity of the hard disk after storing the whole content data (32GB in the drawing), and the full capacity of the hard disk (60GB in the drawing) as shown in Fig. 61. As a consequence, the user easily knows whether or not the content.is previewable but also a time period for playback of the content.

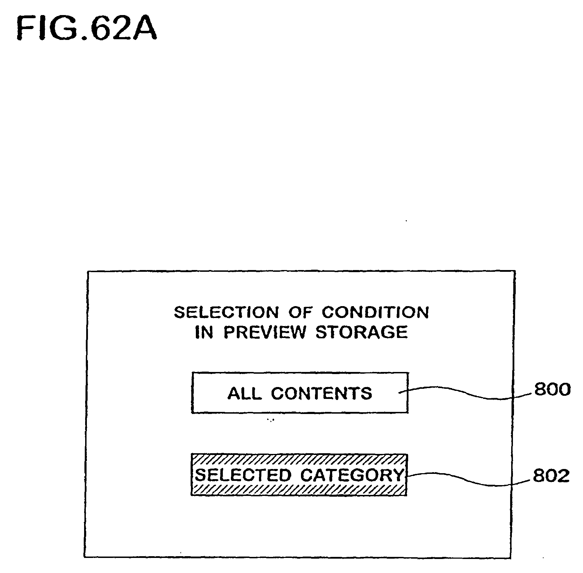

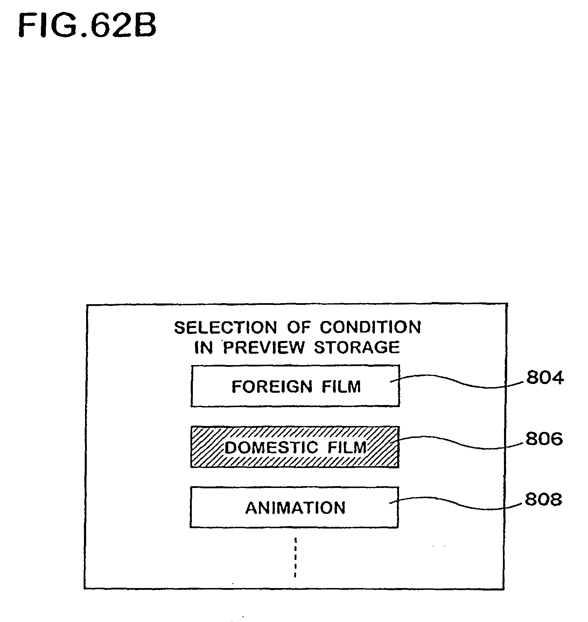

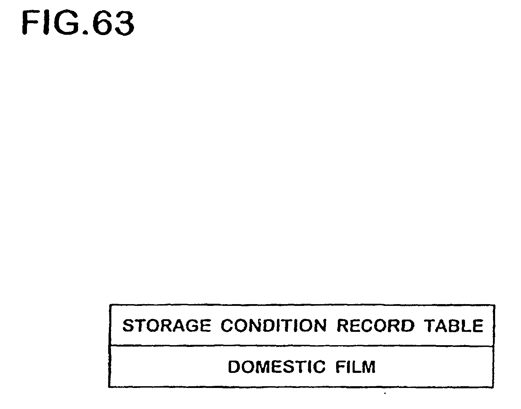

Furthermore, the user can select a desired preview program to store with its category and other conditions. Figs. 62A and 62B show displays for selection of a condition in storing preview programs. When a button 800 for selecting all of the content at an image shown in Fig. 62A is selected by the user's operation, the CPU 58 stores to record the condition into a storage condition record table in the hard disk 60 shown in Fig. 63. In the contrary, the CPU 58 displays another image for selection shown in Fig. 62B when a category select button 802 is selected. When a button 806 for selecting domestic films is selected by the user, the CPU 86 stores the selected condition into the storage condition record table as domestic films as shown in Fig.63.

The CPU 58 refers to the table during the storage of preview programs, and selectively stores a preview program that comply with the selected conditions out of the content pre-viewable. When a recording condition is recorded in the table as shown in Fig. 63, a preview program corresponding to domestic film is stored.

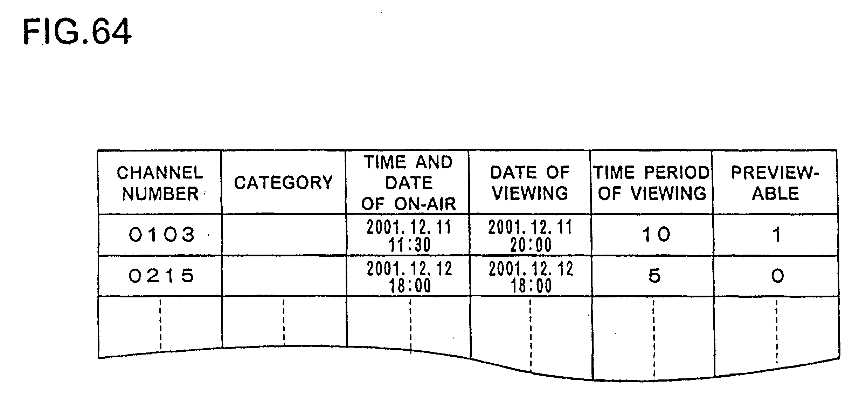

In this embodiment, history of content actually viewed is recorded into a view history table in the hard disk 60. Fig. 64 shows an example of the view history table. Into the table, channel number (service number), category, broadcast time (time and date of on-air), date of viewing (time and date for viewing) time period for viewing the content, a flag indicating pre-viewable or not are recorded when the content is viewed. In this embodiment, content data is stored in either of the cases that a content once stored is viewed or that content now received is viewed without any distinction. This is because it can be distinguished when both the broadcast time and the time and date of viewing are the same, the content now received is viewed, in the contrary, when the broadcast time and the time and date of viewing are different, the content once stored is viewed.

A sign "1" shows that the content is pre-viewable, and another sign "0" indicates that the content is not pre-viewable. As a consequence, this flag shows that either the content is viewed after the user enjoyed its preview program or the content is viewed without playback of its preview program.

In this embodiment, the CPU 58 controls the modem 62 to send a subscription history to the content provider's device 4 whenever a certain numbers (10 for example) of the history are stored. At that time, description of the table is send together with the history. Furthermore, the CPU transmits description of the stream information table (subscription of content). In addition, personal information stored in the IC card 66 is added to the information transmitted to the provider's device. Considering their privacy, preferably, information to be provided to the providers is just on their gender and age. In the contrast, it is possible to give some credit such as charge discount to the users who give allowance to provide their name and address to the providers.

Alternatively, such information can be transmitted to the providers whenever a new history is stored. This transmission may be conducted at every predetermined period (every night, for example).

The content provider's device 4 receiving such information can recognizes the preference of user in accordance with these data. Especially in this embodiment, three different criteria can be employed such as that under what kind of condition the user wish to store preview programs, that which content's preview programs are viewed, and that which contents are actually viewed. A relationship between viewing of preview programs and that of contents corresponding thereto can be recognized.

(4) Other embodiments

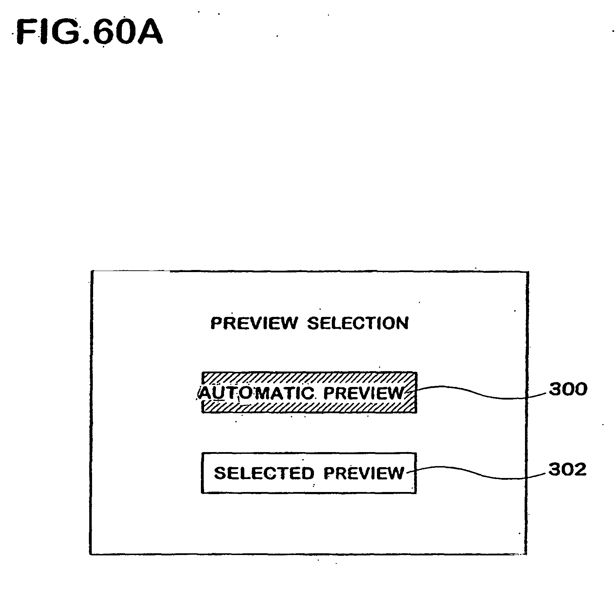

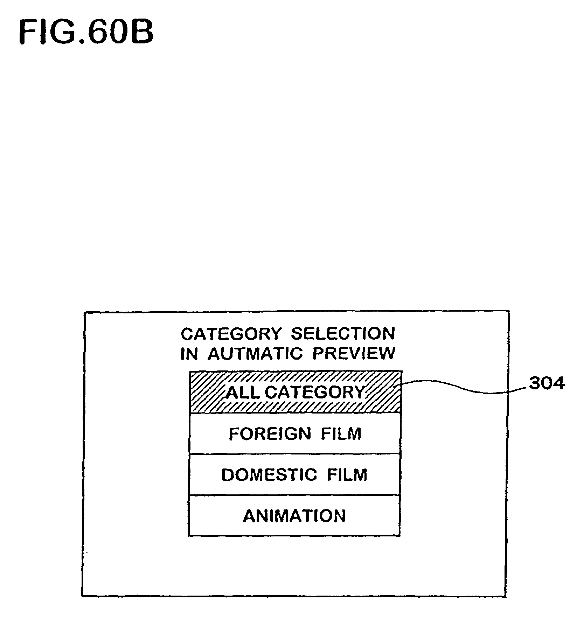

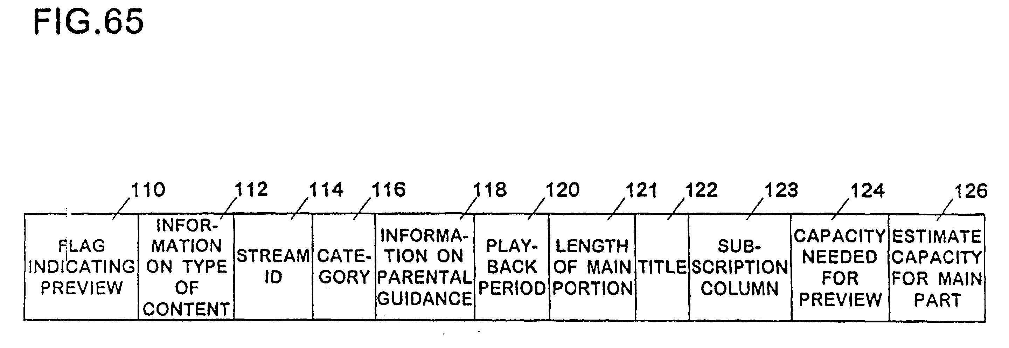

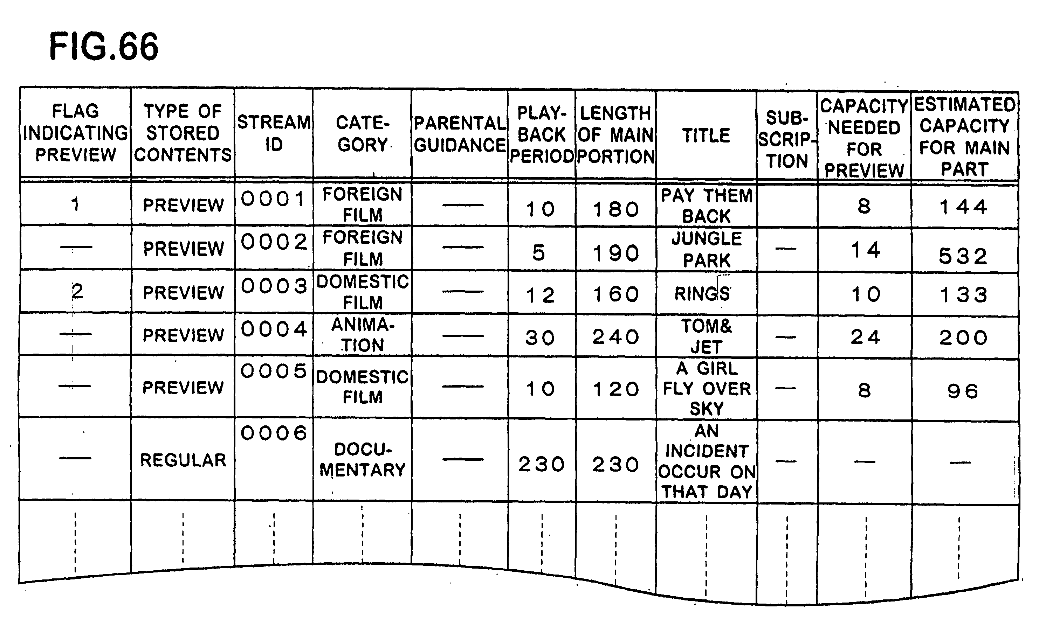

The estimation of the capacity required to store the whole of the content data is carried out during playback of preview program thereof in the above embodiments (see step S705, Fig. 57). Alternatively, this can be done with processes in which the capacity required for storing is calculated at step S215 shown in Fig. 26 and records a stream information table in a form shown in Figs. 65 and 66. In this way, a judgement can be carxied out easily whether or not the content can be stored even when command for storing a plurality of contents is provided. In addition, displays shown in Figs. 60 and 61 can easily be done.

A warning indicating that there is a probability the whole of content data can not be stored is displayed in the above embodiment. Alternatively, if there is a case that the whole of content data can be stored with a higher data compression rate (suffering degradation of images and sound), such countermeasure may be displayed. In addition, a button (icon) to activate such process may be displayed.

Instead of raising the data compression rate, another indication indicating that the whole of content data can be stored when part of the content data are selectively dropped, may be carried out. In addition, another indication indicating that the wholes of content data can be stored when content data currently stored is (are) erased, may be carried out. Instead of storing the content data to be stored, another content data which can be stored, may be proposed for storage.

In the above embodiment, descriptions have been made under an assumption in which partial contents consist of preview program(s), the partial contents may also be of highlight scenes, violent scenes, sexual scenes, scenes that a particular character appear on for example. The descriptions described in a column "other embodiment" and changes, modifications, alternatives in the first embodiment of the present invention may also applicable to the second embodiment described in the above.

While the embodiments of the present invention, as disclosed herein, constitute preferred forms, it is to be understood that each term was used as illustrative and not restrictive, and can be changed within the scope of the claims without departing from the scope of the invention.

**Claims**

1. A storage-type receiving device (8) comprising:

    a receiving part (20) for receiving a content being transmitted;
    a storage part (32) for storing a content;
    a control part (26);
    a received-content outputting part (22) for outputting the content received with the receiving part and decoded in accordance with control of the control part; and
    a stored-content outputting part (22) for outputting the content stored in the storage part and decoded in accordance with control of the control part; and

    **characterized in that**:

    the control part comprises:

    a storage control portion (28) for judging whether or not each content received by the receiving part is a pay-per-view content, and for selectively reading out a part of each content in a plurality of contents for later use as a preview when the selected content is judged as a pay-per-view content and storing the preview in the storage part; and
    a playback control portion (30) for reading out the preview stored in the storage part, and for outputting the preview to playback.

2. The device according to claim 1, wherein the playback control portion is operable to select and playback a desired preview out of a plurality of previews being stored in accordance with a command for playback of the preview from a user.

3. The device according to claim 2, wherein the control part is operable to conduct one of recording information for specifying the preview selected by the playback command provided by the user and outputting such information to outside thereof.

4. The device according to claim 1, wherein the playback control portion is operable to select and playback a desired preview out of a plurality of previews being stored while the control part performs control in response to another command different from the playback command.

5. The device according to claim 4, wherein the command different from the playback command is a command for displaying a program table created in accordance with a category search,
    and wherein the playback control portion is operable to select and search a preview belonging to the category to be searched as a desired preview under the different command.

6. The device according to any of claims 1 to 5, wherein the playback control portion is operable to control so that a plurality of previews stored in the storage part are displayed one after another.

7. The device according to claim 1, wherein the storage control portion is operable to read out the part of each content in a plurality of contents as a preview and to output the preview to the storage part in parallel to a process for restoring a signal from the receiving part into a content and outputting it to the storing part.

8. The device according to claim 1, wherein the storage control portion is operable such that only a preview in a content, which complies with a condition for storing the preview specified by a user, is output to the storage part.

9. The device according to claim 8, wherein the storage control portion is operable to conduct one of recording a condition for storing the preview provided by the user and outputting the condition to outside thereof.

10. The device according to claim 9, wherein the condition for storing the content is a specific category of content.

11. The device according to claim 1, wherein the control part is operable to perform the following steps when a command for subscribing a specific pay-per-view content from a user is received;

detecting when the subscription command is received whether or not a lapsed time from the beginning of the pay-per-view content which is received and output with the receiving part is longer than a time period for playback of preview of the pay-per-view content stored in the storage part, and

storing the pay-per-view content into a temporary storage part capable of storing a content having a longer playback period than the lapsed time and playback, and playing back the pay-per-view content stored in the temporary storage part while playing back the preview stored in the storage part when the time period for playback is longer than the elapsed time.

12. The device according to claim 1, wherein the control part is operable to perform the following steps when a command for subscribing a specific pay-per-view content from a user who views preview of the pay-per-view content is received;

detecting at when the subscription command is received whether or not the pay-per-view content is currently transmitted in accordance with information on programs received,

storing the subscription command of the pay-per-view content when no transmission is currently conducted, and

determining whether or not the pay-per-view content corresponding to the stored subscription command is in an on-air schedule whenever information on programs are updated, and outputting a display which shows that the pay-per-view content will be on-aired when the pay-per-view content is in the schedule.

13. The device according to claim 1, the device further comprising a communication part (24) for communicating with a content provider's device via a communication line,

wherein the control part is operable to perform the following steps when a command for subscribing a specific pay-per-view content from a user who views preview of the pay-per-view content is received;

detecting when the subscription command is received whether or not the pay-per-view content is currently transmitted in accordance with information on programs received, and

transmitting by operation of the communication part the subscription command of the pay-per-view content to the content provider's device when no transmission is currently conducted.

14. The device according to claim 1, wherein the control part is operable to output an indication by which a content of its previews being stored in the storage part can be distinguished from other contents during restoration of information on programs which is received.

15. The device according to claim 1, wherein the storage control portion is operable to delete a preview stored in the storage part in order of longer duration of storing to store a new preview when the new preview cannot be stored in the storage part.

16. The device according to claim 1, wherein the storage control portion is operable to find a preview of a content which is not currently on-aired in accordance with information on programs received, and to delete the preview to store a new preview when the new preview can not be stored in the storage part.

17. The device according to claim 1, wherein the storage control portion is operable to delete a preview which has been played back to store a new preview when the new preview can not be stored in the storage part.

18. The device according to claim 1, wherein the storage control portion is operable to delete a preview corresponding to a content which has been played back according to a command from a user to store a new preview when the new preview can not be stored in the storage part.

19. The device according to claim 1, wherein the control part is operable to judge whether or not a content corresponding to a preview can currently be received while the preview stored is being played back, and to store the content on a temporary basis when the content can be received.

20. The device according to claim 19, wherein the control part is operable to compensate a missing part of a content currently received with the content temporary stored when a subscription command for the content corresponding to the preview is received while the preview stored is being played back.

21. The device according to claim 20, wherein the control part is operable to compensate the missing part of the content currently received further using the stored preview.

22. The device according to claim 21, further comprising a buffer in which one of the content stored on a temporary basis and the stored preview, and, both of the temporary stored content and the stored preview, are stored temporary,

wherein a missing part of the content is compensated and the whole content is played-back by additionally storing a content received in the buffer, after the description stored temporary in the buffer is played back and the description thus played back is deleted.

23. The device according to claim 1, wherein the storage control portion is operable to judge whether or not the content is a pre-viewable pay-per-view content in accordance both of description of received ECM and a fact that a valid key is send back as a result of transmitting the ECM to a key reproduction part.

24. The device according to claim 1, wherein the storage control portion is operable to create a list in which pay-per-view contents that are pre-viewable are listed, and to store the preview of the pre-viewable pay-per-view contents in accordance with the list.

25. The device according to claim 1, wherein the storage control portion is operable to judge whether or not a content to which a command for storing a content being output is stored without any error in accordance with capacity of the content to be stored and the remaining capacity of the storage part when the command for storing content from a user is received, and to output a display which shows that there is a storage error when it is judged that an error occurs for the storage of the content.

26. The device according to claim 25, wherein the storage control portion is operable to previously record the capacity of each content during storage of the content, and to acquire the capacity of each content in accordance with description of the record.

27. The device according to claim 26, wherein the storage control portion is operable to output another content capable of being stored as a candidate for storage in accordance with capacity of each of the content when it is judged that there is a storage error for the content to be stored.

28. The device according to claim 25, wherein the storage control portion is further operable to judge whether or not the content can be stored with a higher data compression rate when it is judged that there is a storage error for the content to be stored, and outputs a compression rate when an appropriate compression rate for storing the content is found.

29. The device according to claim 25, wherein the storage control portion is further operable to judge the content can be stored by carrying out storage in a summarized form when it is judged that there is a storage error for the content to be stored, and to output a display which shows that the storage will be carried out successfully when it is judged that no storage error occurs for the summarized form.

30. A device as claimed in claim 1 wherein the control part is operable to conduct one of recording history of viewing the previews and of viewing the content, and outputting the history to outside thereof.

31. A device as claimed in claim 1 wherein the control part (26) is operable to control so that one of recording a condition for storing the preview specified by a user and outputting such a condition to outside thereof is conducted while selectively storing a preview having a condition comply with a condition provided by a user.

32. The device according to claim 31, wherein the control part is further operable to control so that a history of commands for viewing the stored preview provided by the user is one of recorded and output to outside thereof.

33. The device according to claim 31, wherein the control part is further operable to control so that either a command for storing the stored content or the history of commands for viewing the stored preview provided by the user is one of recorded and output to outside thereof.

34. The device according to claim 33, wherein the control part is operable to transmit to a transmit device either the history or the condition both once stored.

35. A method of operating a storage-type receiving device (8) comprising:

>    a receiving part (20) receiving a content being transmitted;
>    a storage part (32) storing a content;
>    a control part (26);
>    a received-content outputting part outputting the content received with the receiving part and decoded in accordance with control of the control part;
>    a stored-content outputting part outputting the content stored in the storage part and decoded in accordance with control of the control part; and
>
>    **characterized in that**:
>
>    the control part comprising:
>
>    >    a storage control portion which judges whether or not each content received by the receiving part is a pay-per-view content, and selectively reads out a part of each content in a plurality of contents for later use as a preview when the content is judged as a pay-per-view content and stores the preview in the storage part; and a playback control portion which reads out the preview stored in the storage part, and for outputting the preview to playback.

36. A method as claimed in claim 35 comprising displaying an electronic program guide on the receiving device, the method comprising a step of indicating a display by which a program is pre-viewable to each of pay programs.

37. The method according to claim 36, further comprising a step of indicating a capacity required to store the program for at least each of the pay programs.

38. A method for managing content broadcasting, the method comprising the steps of:

at a receiving device performing the steps of claim 35; and
performing the further steps of:

determining whether or not a pay-per-view content is currently on-air in accordance with information on programs at when a user provides a command for subscription according to the stored preview, and transmitting to the transmission device the subscription command of the pay-per-view content when the content is not on-aired; and
at the transmission device;
receiving commands for subscription from a plurality of receiving devices, and determining whether or not rerun of the pay-per-view content is carried out according to the number of the subscription commands.

39. A computer program for controlling a receiving device to carry out all of the steps of a method as claimed in any one of claims 35 to 38.

40. A computer-readable storage medium storing a program for controlling a receiving device to carry out all of the steps of a method as claimed in any one of claims 35 to 38.

**Patentansprüche**

1. Empfangseinrichtung vom Speichertyp(8) umfassend:

einen Empfangsteil (20) zum Empfangen eines übertragenen Inhalts;
einen Speicherteil (32) zum Speichern eines Inhalts; einen Steuerteil (26);
einen Ausgabeteil (22) für empfangenen Inhalt zum Ausgeben des Inhalts, der mit dem Empfangsteil empfangen und dekodiert wurde gemäß einer Steuerung des Steuerteils; und
einen Ausgabeteil (22) für gespeicherten Inhalt zum Ausgeben des Inhalts, der im Speicherteil gespeichert und
dekodiert wurde gemäß einer Steuerung des Steuerteils; und

**gekennzeichnet dadurch, dass**:

der Steuerteil umfasst:

einen Speichersteuerbereich (28) zum Beurteilen, ob oder ob nicht jeder Inhalt, der vom Empfangsteil empfangen wurde, ein Pay-per-View-Inhalt ist, und zum selektiven Auslesen eines Teils von jedem Inhalt aus einer Vielzahl von Inhalten zur späteren Benutzung als eine Vorschau, wenn der ausgewählte Inhalt als ein Pay-per-View-Inhalt beurteilt ist, und zum Speichern der Vorschau im Speicherteil; und einen Wiedergabesteuerbereich (30) zum Auslesen der Vorschau, die im Speicherteil gespeichert ist, und zum Ausgeben der Vorschau zur Wiedergabe.

2. Einrichtung gemäß Anspruch 1, wobei der Wiedergabesteuerbereich bedienbar ist, um eine gewünschte Vorschau aus einer Vielzahl von Vorschauen, die gemäß einem Befehl zur Wiedergabe der Vorschau von einem Benutzer gespeichert sind, auszuwählen und wiederzugeben.

3. Einrichtung gemäß Anspruch 2, wobei der Steuerbereich bedienbar ist, um eine Aufnahmeinformation durchzuführen zum Aufführen der Vorschau, die durch den vom Benutzer bereitgestellten Wiedergabebefehl ausgewählt wurde, und zum Ausgeben dieser Information nach außen davon.

4. Einrichtung gemäß Anspruch 1, wobei der Wiedergabesteuerbereich bedienbar ist, um eine gewünschte Vorschau aus einer Vielzahl von Vorschauen, die gespeichert werden, während der Steuerteil eine Steuerung als Reaktion auf einen anderen vom Wiedergabebefehl verschiedenen Befehl ausführt, auszuwählen und wiederzugeben.

5. Einrichtung gemäß Anspruch 4, wobei der vom Wiedergabebefehl verschiedene Befehl ein Befehl zum Anzeigen einer Programmtabelle ist, die gemäß einer Kategoriesuche erstellt wurde, und wobei der Wiedergabesteuerbereich bedienbar ist, um eine Vorschau auszuwählen und zu suchen, die zu der Kategorie gehört, die als eine gewünschte Vorschau unter dem verschiedenen Befehl gesucht wird.

6. Einrichtung gemäß einem der Ansprüche 1 bis 5, wobei der Wiedergabesteuerbereich bedienbar ist, um so zu steuern, dass eine Vielzahl von im Speicherteil gespeicherten Vorschauen eine nach der anderen angezeigt werden.

7. Einrichtung gemäß Anspruch 1, wobei der Speichersteuerbereich bedienbar ist, um den Teil jedes Inhalts von einer Vielzahl von Inhalten als eine Vorschau auszulesen und um die Vorschau an den Speicherteil parallel zu einem Prozess zum Wiederherstellen eines Signals vom Empfangsteil in einen Inhalt und zum Ausgeben davon an den Speicherteil auszugeben.

8. Einrichtung nach Anspruch 1, wobei der Speichersteuerbereich derart bedienbar ist, dass nur eine Vorschau in einem Inhalt, der einer Bedingung zum Speichern der von einem Benutzer genannten Vorschau entspricht, an den Speicherteil ausgegeben wird.

9. Einrichtung nach Anspruch 8, wobei der Speichersteuerbereich bedienbar ist, um ein Aufnehmen einer Bedingung zum Speichern der durch den Benutzer bereitgestellten Vorschau oder ein Ausgeben der Bedingung nach außen davon auszuführen.

10. Einrichtung gemäß Anspruch 9, wobei die Bedingung zum Speichern des Inhalts eine bestimmte Inhaltskategorie ist.

11. Einrichtung gemäß Anspruch 1, wobei der Steuerteil bedienbar ist, um die folgenden Schritte auszuführen, wenn ein Befehl zum Abonnieren eines bestimmten Pay-per-View-Inhalts von einem Benutzer empfangen wird; Erkennen, wenn der Abonnementbefehl empfangen wird, ob oder ob nicht eine abgelaufene Zeit vom Beginn des Pay-per-View-Inhalts, der empfangen und mit dem Empfangsteil ausgegeben wird, länger ist als eine Zeitdauer zur Wiedergabe einer Vorschau des im Speicherteil gespeicherten Pay-per-View-Inhalts, und Speichern des Pay-per-View-Inhalts in einem temporären Speicherteil, der fähig ist zum Speichern eines Inhalts, der eine längere Wiedergabedauer besitzt als die abgelaufene Zeit und Wiedergabe, und Wiedergabe des im temporären Speicherteil gespeicherten Pay-per-View-Inhalts während der Wiedergabe der im Speicherteil gespeicherten Vorschau, wenn die Zeitdauer zur Wiedergabe länger als die abgelaufene Zeit ist.

12. Einrichtung gemäß Anspruch 1, wobei der Steuerteil bedienbar ist, um die folgenden Schritte auszuführen, wenn ein Befehl zum Abonnieren eines bestimmten Pay-per-View-Inhalts von einem Benutzer empfangen wird, der eine Vorschau des Pay-per-View-Inhalts ansieht; Erkennen, wenn der Abonnementbefehl empfangen wird, ob oder ob nicht der Pay-per-View-Inhalt momentan übertragen wird gemäß Informationen zu empfangenen Programmen, Speichern des Abonnementbefehls des Pay-per-View-Inhalts, wenn momentan keine Übertragung ausgeführt wird, und Bestimmen, ob oder ob nicht der mit dem gespeicherten Abonnementbefehl korrespondierende Pay-per-View-Inhalt in einem Sendeplan ist, jedes Mal, wenn Informationen zu Programmen aktualisiert werden, und Ausgeben einer Anzeige, die zeigt, dass der Pay-per-View-Inhalt auf Sendung sein wird, wenn der Pay-per-View-Inhalt im Plan ist.

13. Einrichtung nach Anspruch 1, wobei die Einrichtung ferner umfasst einen Kommunikationsteil (24) zum Kommunizieren mit einer Einrichtung eines Inhaltsanbieters über eine Kommunikationsstrecke, wobei der Steuerteil bedienbar ist, um die folgenden Schritte auszuführen, wenn ein Befehl zum Abonnieren eines bestimmten Pay-per-View-Inhalts von einem Benutzer empfangen wird, der eine Vorschau des Pay-per-View-Inhalts ansieht; Erkennen, wenn der Abonnementbefehl empfangen wird, ob oder ob nicht der Pay-per-View-Inhalt momentan übertragen wird gemäß Informationen zu empfangenen Programmen, und Übertragen des Abonnementbefehls des Pay-per-View-Inhalts durch Betrieb des Kommunikationsteils an die Einrichtung des Inhaltsanbieters, wenn momentan keine Übertragung ausgeführt wird.

14. Einrichtung nach Anspruch 1, wobei der Steuerteil bedienbar ist, um einen Hinweis auszugeben, durch welchen ein Inhalt seiner im Speicherteil gespeicherten Vorschauen unterschieden werden kann von anderen Inhalten während einer Wiederherstellung von Informationen zu Programmen, die empfangen werden.

15. Einrichtung nach Anspruch 1, wobei der Speichersteuerbereich bedienbar ist, um eine im Speicherteil gespeicherte Vorschau zu löschen in einer Reihenfolge einer längeren Speicherdauer, um eine neue Vorschau zu speichern, wenn die neue Vorschau nicht im Speicherteil gespeichert werden kann.

16. Einrichtung nach Anspruch 1, wobei der Speichersteuerbereich bedienbar ist, um eine Vorschau eines Inhalts zu finden, der momentan nicht gesendet wird gemäß einer Information zu empfangenen Programmen, und um die Vorschau zu löschen, um eine neue Vorschau zu speichern, wenn die neue Vorschau nicht im Speicherteil gespeichert werden kann.

17. Einrichtung nach Anspruch 1, wobei der Speichersteuerbereich bedienbar ist, um eine Vorschau zu löschen, die wiedergegeben worden ist, um eine neue Vorschau zu speichern, wenn die neue Vorschau nicht im Speicherteil gespeichert werden kann.

18. Einrichtung gemäß Anspruch 1, wobei der Speichersteuerbereich bedienbar ist, um eine zu einem Inhalt, der gemäß einem Befehl eines Benutzers wiedergegeben worden ist, korrespondierende Vorschau zu löschen, um eine neue Vorschau zu speichern, wenn die neue Vorschau nicht im Speicherteil gespeichert werden kann.

19. Einrichtung gemäß Anspruch 1, wobei der Steuerteil bedienbar ist, um zu beurteilen, ob oder ob nicht momentan ein zu einer Vorschau korrespondierender Inhalt empfangen werden kann, während die gespeicherte Vorschau wiedergegeben wird, und um den Inhalt auf einer temporären Basis zu speichern, wenn der Inhalt empfangen werden kann.

20. Einrichtung gemäß Anspruch 19, wobei der Steuerteil bedienbar ist, um einen fehlenden Teil eines momentan empfangenen Inhalts mit dem temporär gespeicherten Inhalt zu kompensieren, wenn ein Abonnementbefehl für den zur Vorschau korrespondierenden Inhalt empfangen wird, während die gespeicherte Vorschau wiedergegeben wird.

21. Einrichtung gemäß Anspruch 20, wobei der Steuerteil bedienbar ist, um den fehlenden Teil des momentan empfangenen Inhalts ferner durch Benutzung der gespeicherten Vorschau zu kompensieren.

22. Einrichtung gemäß Anspruch 21, ferner aufweisend einen Puffer, in dem einer des auf einer temporären Basis gespeicherten Inhalts und der gespeicherten Vorschau und beide des temporär gespeicherten Inhalts und der gespeicherten Vorschau temporär gespeichert sind,
wobei ein fehlender Teil des Inhalts kompensiert wird und der gesamte Inhalt durch zusätzliches Speichern eines im Puffer empfangenen Inhalts wiedergegeben wird, nachdem die temporär im Puffer gespeicherte Beschreibung wiedergegeben und die so wiedergegebene Beschreibung gelöscht worden ist.

23. Einrichtung gemäß Anspruch 1, wobei der Speichersteuerbereich bedienbar ist, um zu beurteilen, ob oder ob nicht der Inhalt ein vorschaubarer Pay-per-View-Inhalt ist in Übereinstimmung mit beiden der Beschreibung eines empfangenen ECM und einer Tatsache, dass ein gültiger Schlüssel als Ergebnis einer Übertragung des ECM an ein Schlüssel-Reproduktionsteil zurückgesendet worden ist.

24. Einrichtung gemäß Anspruch 1, wobei der Speichersteuerbereich bedienbar ist, um eine Liste zu erzeugen, in der Pay-per-View-Inhalte aufgelistet sind, die vorschaubar sind, und um die Vorschau der vorschaubaren Pay-per-View-Inhalte gemäß der Liste zu speichern.

25. Einrichtung gemäß Anspruch 1, wobei der Speichersteuerbereich bedienbar ist, um zu beurteilen, ob oder ob nicht ein Inhalt, zu dem ein Befehl zum Speichern eines Inhalts ausgegeben wurde, ohne irgendeinen Fehler gemäß einer Kapazität des zu speichernden Inhalts und der verbleibenden Kapazität des Speicherteils gespeichert wird, wenn der Befehl zum Speichern eines Inhalts von einem Benutzer empfangen wird, und um eine Anzeige auszugeben, die anzeigt, dass da ein Speicherfehler vorliegt, wenn beurteilt wird, dass ein Fehler für den Speicher des Inhalts auftritt.

26. Einrichtung gemäß Anspruch 25, wobei der Speichersteuerbereich bedienbar ist, um vorher die Kapazität jedes Inhalts während einer Speicherung des Inhalts aufzuzeichnen und um die Kapazität jedes Inhalts in Übereinstimmung mit einer Beschreibung der Aufzeichnung zu erhalten.

27. Einrichtung gemäß Anspruch 26, wobei der Speichersteuerbereich bedienbar ist, um einen anderen Inhalt auszugeben, der fähig ist, um als ein Kandidat für eine Speicherung in Übereinstimmung mit einer Kapazität jedes der Inhalte gespeichert zu werden, wenn beurteilt wird, dass da ein Speicherfehler für den zu speichernden Inhalt ist.

28. Einrichtung gemäß Anspruch 25, wobei der Speichersteuerbereich ferner bedienbar ist, um zu beurteilen, ob oder ob nicht der Inhalt mit einer höheren Datenkompressionsrate gespeichert werden kann, wenn beurteilt wird, dass da ein Speicherfehler für den zu speichernden Inhalt vorliegt, und er eine Kompressionsrate ausgibt, wenn eine geeignete Kompressionsrate zum Speichern des Inhalts gefunden wurde.

29. Einrichtung gemäß Anspruch 25, wobei der Speichersteuerbereich ferner bedienbar ist, um zu beurteilen, ob der Inhalt durch Ausführen einer Speicherung in einer zusammengefassten Form gespeichert werden kann, wenn beurteilt wird, dass ein Speicherfehler für den zu speichernden Inhalt vorliegt, und um eine Anzeige auszugeben, die zeigt, dass die Speicherung erfolgreich ausgeführt werden wird, wenn beurteilt wurde, dass kein Speicherfehler für die zusammengefasste Form auftritt.

30. Einrichtung nach Anspruch 1, wobei der Steuerteil bedienbar ist, um eines aus der Aufnahmehistorie des Anschauens der Vorschauen und aus dem Anschauen des Inhalts, und des Ausgebens der Historie nach aussen davon auszuführen.

31. Einrichtung gemäß Anspruch 1, wobei der Steuerteil (26) bedienbar ist, um so zu steuern, dass das Aufnehmen einer Bedingung zum Speichern der durch einen Benutzer bestimmten Vorschau oder das Ausgeben einer solchen Bedingung nach aussen davon ausgeführt wird, während selektiv eine Vorschau gespeichert wird, die eine Bedingung besitzt, die sich nach einer durch einen Benutzer vorgegebenen Bedingung richtet.

32. Einrichtung gemäß Anspruch 31, wobei der Steuerteil ferner bedienbar ist, um so zu steuern, dass eine Befehlshistorie zum Anschauen der gespeicherten Vorschau vorgegeben durch den Benutzer aufgezeichnet und nach außen davon ausgegeben wird.

33. Einrichtung gemäß Anspruch 31, wobei der Steuerteil ferner bedienbar ist, um so zu steuern, dass entweder ein Befehl zum Speichern des gespeicherten Inhalts oder der Befehlhistorie zum Anschauen der gespeicherten Vorschau vorgegeben durch den Benutzer aufgezeichnet und nach außen davon ausgegeben wird.

34. Einrichtung gemäß Anspruch 33, wobei der Steuerteil bedienbar ist, um entweder die Historie oder die Bedingung, die beide einmal gespeichert wurden, an eine Übertragungseinrichtung zu übertragen.

35. Verfahren zum Bedienen einer Empfangseinrichtung vom Speichertyp(8) aufweisend:

einen Empfangsteil (20), der einen übertragenen Inhalt empfängt;
einen Speicherteil (32), der einen Inhalt speichert; einen Steuerteil (26);
einen Ausgabeteil für empfangenen Inhalt, der den Inhalt, der mit dem Empfangsteil empfangen und dekodiert gemäß einer Steuerung des Steuerteils wurde, ausgibt;
einen Ausgabeteil für gespeicherten Inhalt, der den Inhalt, der im Speicherteil gespeichert und dekodiert wurde gemäß einer Steuerung des Steuerteils, ausgibt; und

**gekennzeichnet dadurch, dass**:

der Steuerteil umfasst:

einen Speichersteuerbereich (28), der beurteilt, ob oder ob nicht jeder Inhalt, der vom Empfangsteil empfangen wurde, ein Pay-per-View-Inhalt ist, und selektiv einen Teil von jedem Inhalt aus einer Vielzahl von Inhalten zur späteren Benutzung als eine Vorschau ausliest, wenn der ausgewählte Inhalt als ein Pay-per-View-Inhalt beurteilt ist, und die Vorschau im Speicherteil speichert; und
einen Wiedergabesteuerbereich, der die Vorschau, die im Speicherteil gespeichert ist, ausliest, und zum Ausgeben der Vorschau zur Wiedergabe.

36. Verfahren wie in Anspruch 35 beansprucht, aufweisend ein Anzeigen eines elektronischen Programmführers auf der Empfangseinrichtung, wobei das Verfahren einen Schritt des Anzeigens einer Anzeige umfasst, durch die ein Programm zu jedem der Bezahlprogramme vorschaubar ist.

37. Verfahren gemäß Anspruch 36, ferner aufweisend einen Schritt des Anzeigens einer Kapazität, die benötigt wird, um das Programm für wenigstens jedes der Bezahlprogramme zu speichern.

38. Verfahren zum Verwalten von Rundfunkinhalt, wobei das Verfahren die Schritte umfasst:

Ausführen der Schritte von Anspruch 35 in einer Empfangseinrichtung; und
Ausführen der weiteren Schritte:

Bestimmen, ob oder ob nicht ein Pay-per-View-Inhalt momentan auf Sendung ist gemäß einer Information zu Programmen, zu dem ein Benutzer einen Befehl zum Abonnieren gemäß einer gespeicherten Vorschau vorgibt, und
Übertragen des Abonnementbefehls des Pay-per-View-Inhalts an die Übertragungseinrichtung, wenn der Inhalt nicht auf Sendung ist; und in der Übertragungseinrichtung;
Empfangen von Befehlen zum Abonnement aus einer Vielzahl von Empfangseinrichtungen, und
Bestimmen, ob oder ob nicht eine Wiederholung des Pay-per-View-Inhalts ausgeführt wird gemäß der Anzahl von Abonnementbefehlen.

**39.** Computerprogramm zum Steuern einer Empfangseinrichtung, um alle Schritte eines Verfahrens wie in irgendeinem der Ansprüche 35 bis 38 beansprucht auszuführen.

**40.** Computer-lesbares Speichermedium, das ein Programm zum Steuern einer Empfangseinrichtung speichert, um alle Schritte eines Verfahrens wie in irgendeinem der Ansprüche 35 bis 38 beansprucht auszuführen.

**Revendications**

**1.** Dispositif de réception de type mémoire (8) comportant :

une partie de réception (20) pour recevoir un contenu qui est transmis,
une partie de mémoire (32) pour mémoriser un contenu,
une partie de commande (26),
une partie d'émission de contenu reçu (22) pour délivrer en sortie le contenu reçu à l'aide de la partie de réception et décodé conformément à la commande de la partie de commande, et
une partie d'émission de contenu mémorisé (22) pour délivrer en sortie le contenu mémorisé dans la partie de mémoire et décodé conformément à la commande de la partie de commande, et

**caractérisé en ce que** :

la partie de commande comporte :

une partie de commande de mémoire (28) pour déterminer si oui ou non chaque contenu reçu par la partie de réception est un contenu de télévision à la carte, et pour extraire de manière sélective une partie de chaque contenu d'une pluralité de contenus en vue d'une utilisation ultérieure en tant que prévisualisation lorsque le contenu sélectionné est déterminé en tant que contenu de télévision à la carte et mémoriser la prévisualisation dans la partie de mémoire, et
une partie de commande de lecture (30) pour extraire la prévisualisation mémorisée dans la partie de mémoire, et pour délivrer en sortie la prévisualisation en vue d'une lecture.

**2.** Dispositif selon la revendication 1, dans lequel la partie de commande de lecture est opérationnelle pour sélectionner et lire une prévisualisation voulue parmi une pluralité de prévisualisations qui sont mémorisées conformément à une instruction en vue d'une lecture d'une prévisualisation par un utilisateur.

**3.** Dispositif selon la revendication 2, dans lequel la partie de commande est opérationnelle pour effectuer une opération parmi l'enregistrement d'informations afin de spécifier la prévisualisation sélectionnée par l'instruction de lecture fournie par l'utilisateur et l'émission de ces informations à l'extérieur de celle-ci.

**4.** Dispositif selon la revendication 1, dans lequel la partie de commande de lecture est opérationnelle pour sélectionner et lire une prévisualisation voulue parmi une pluralité de prévisualisations qui sont mémorisées pendant que la partie de commande exécute une commande en réponse à une autre instruction différente de l'instruction de lecture.

**5.** Dispositif selon la revendication 4, dans lequel l'instruction différente de l'instruction de lecture est une instruction destinée à afficher un tableau de programmes créé conformément à une recherche par catégorie,

et dans lequel la partie de commande de lecture est opérationnelle pour sélectionner et rechercher une prévisualisation appartenant à la catégorie à rechercher en tant que prévisualisation voulue via l'instruction différente.

**6.** Dispositif selon l'une quelconque des revendications 1 à 5, dans lequel la partie de commande de lecture est opérationnelle pour effectuer une commande de sorte qu'une pluralité de prévisualisations mémorisées dans la partie de mémoire sont affichées l'une après l'autre.

**7.** Dispositif selon la revendication 1, dans lequel la partie de commande de mémoire est opérationnelle pour extraire la partie de chaque contenu d'une pluralité de contenus en tant que prévisualisation et pour délivrer en sortie la prévisualisation à la partie de mémoire parallèlement à un processus destiné à reconstituer un signal provenant de la partie de réception en un contenu et à délivrer celui-ci en sortie à la partie de mémoire.

**8.** Dispositif selon la revendication 1, dans lequel la partie de commande de mémoire est opérationnelle de sorte qu'uniquement une prévisualisation d'un contenu, qui est conforme à une condition destinée à mémoriser la prévisualisation spécifiée par un utilisateur, est délivrée en sortie à la partie de mémoire.

**9.** Dispositif selon la revendication 8, dans lequel la partie de commande de mémoire est opérationnelle pour effectuer une opération parmi l'enregistrement d'une condition afin de mémoriser la prévisualisation fournie par l'utilisateur et l'émission de la condition à l'extérieur de celle-ci.

10. Dispositif selon la revendication 9, dans lequel la condition pour mémoriser le contenu est une catégorie de contenu spécifique.

11. Dispositif selon la revendication 1, dans lequel la partie de commande est opérationnelle, lorsqu'une instruction d'un utilisateur destinée à souscrire un contenu de télévision à la carte spécifique est reçue, pour exécuter les étapes suivantes consistant à :

> détecter lorsque l'instruction de souscription est reçue si oui ou non une durée écoulée depuis le début du contenu de télévision à la carte qui est reçu et délivré en sortie à l'aide de la partie de réception est plus longue qu'une période de temps pour la lecture d'une prévisualisation du contenu de télévision à la carte mémorisé dans la partie de mémoire, et mémoriser le contenu de télévision à la carte dans une partie de mémoire temporaire capable de mémoriser un contenu ayant une période de lecture plus longue que la durée écoulée et la lecture, et lire le contenu de télévision à la carte mémorisé dans la partie de mémoire temporaire pendant la lecture de la prévisualisation mémorisée dans la partie de mémoire lorsque la période de temps pour la lecture est plus longue que la durée écoulée.

12. Dispositif selon la revendication 1, dans lequel la partie de commande est opérationnelle, lorsqu'une instruction destinée à souscrire un contenu de télévision à la carte spécifique par un utilisateur qui regarde une prévisualisation du contenu de télévision à la carte est reçue, pour exécuter les étapes suivantes consistant à :

> détecter au moment où l'instruction de souscription est reçue si oui ou non le contenu de télévision à la carte est actuellement transmis conformément aux informations reçues concernant les programmes, mémoriser l'instruction de souscription du contenu de télévision à la carte lorsque aucune transmission n'est actuellement effectuée, et déterminer si oui ou non le contenu de télévision à la carte correspondant à l'instruction de souscription mémorisée est dans un programme à l'antenne à chaque fois que des informations concernant des programmes sont mises à jour, et délivrer en sortie un affichage qui montre que le contenu de télévision à la carte va être à l'antenne lorsque le contenu de télévision à la carte est dans le programme.

13. Dispositif selon la revendication 1, le dispositif comportant en outre une partie de communication (24) pour communiquer avec un dispositif de fournisseur de contenu, via une ligne de communication,
> dans lequel la partie de commande est opérationnelle, lorsqu'une instruction pour souscrire un contenu de télévision à la carte spécifique par un utilisateur qui regarde une prévisualisation du contenu de télévision à la carte est reçue, pour exécuter les étapes suivantes consistant à :

> détecter lorsque l'instruction de souscription est reçue si oui ou non le contenu de télévision à la carte est actuellement transmis conformément aux informations reçues concernant les programmes, et transmettre, par l'intermédiaire d'une opération de la partie de communication, l'instruction de souscription du contenu de télévision à la carte au dispositif de fournisseur de contenu lorsqu'aucune transmission n'est actuellement effectuée.

14. Dispositif selon la revendication 1, dans lequel la partie de commande est opérationnelle pour délivrer en sortie une indication par l'intermédiaire de laquelle un contenu des prévisualisations qui sont mémorisées dans la partie de mémoire peut être différencié d'autres contenus pendant la reconstitution d'informations concernant les programmes qui sont reçues.

15. Dispositif selon la revendication 1, dans lequel la partie de commande de mémoire est opérationnelle pour supprimer une prévisualisation mémorisée dans la partie de mémoire dans l'ordre en commençant par la durée plus longue de mémorisation pour mémoriser une nouvelle prévisualisation lorsque la nouvelle prévisualisation ne peut pas être mémorisée dans la partie de mémoire.

16. Dispositif selon la revendication 1, dans lequel la partie de commande de mémoire est opérationnelle pour trouver une prévisualisation d'un contenu qui n'est pas actuellement à l'antenne conformément à des informations reçues concernant des programmes, et pour supprimer la prévisualisation afin de mémoriser une nouvelle prévisualisation lorsque la nouvelle prévisualisation ne peut pas être mémorisée dans la partie de mémoire.

17. Dispositif selon la revendication 1, dans lequel la partie de commande de mémoire est opérationnelle pour supprimer une prévisualisation qui a été lue afin de mémoriser une nouvelle prévisualisation lorsque la nouvelle prévisualisation ne peut pas être mémorisée dans la partie de mémoire.

18. Dispositif selon la revendication 1, dans lequel la partie de commande de mémoire est opérationnelle pour supprimer une prévisualisation correspondant à un contenu qui a été lu conformément à une instruction d'un utilisateur pour mémoriser une nouvelle prévisualisation lorsque la nouvelle prévisualisation ne peut pas être mémorisée dans la partie de mémoire.

19. Dispositif selon la revendication 1, dans lequel la partie de commande est opérationnelle pour déterminer si oui ou non un contenu correspondant à une prévisualisation peut actuellement être reçu pendant que la prévisualisation mémorisée est en cours de lecture, et pour mémoriser le contenu sur une base temporaire lorsque le contenu peut être reçu.

20. Dispositif selon la revendication 19, dans lequel la partie de commande est opérationnelle pour compenser une partie manquante d'un contenu actuellement reçu à l'aide du contenu temporaire mémorisé lorsqu'une instruction de souscription pour le contenu correspondant à la prévisualisation est reçue alors que la prévisualisation mémorisée est en cours de lecture.

21. Dispositif selon la revendication 20, dans lequel la partie de commande est opérationnelle pour compenser la partie manquante du contenu actuellement reçu en utilisant en outre la prévisualisation mémorisée.

22. Dispositif selon la revendication 21, comportant en outre une mémoire tampon dans laquelle l'un parmi le contenu mémorisé sur une base temporaire et la prévisualisation mémorisée, ou, à la fois le contenu mémorisé temporairement et la prévisualisation mémorisée, sont mémorisés temporairement,

dans lequel une partie manquante du contenu est compensée et le contenu entier est lu en mémorisant en plus un contenu reçu dans la mémoire tampon, une fois que la description mémorisée temporairement dans la mémoire tampon est lue et que la description ainsi lue est supprimée.

23. Dispositif selon la revendication 1, dans lequel la partie de commande de mémoire est opérationnelle pour déterminer si oui ou non le contenu est un contenu de télévision à la carte prévisualisable conformément à la fois à la description d'un mode de correction d'erreurs (ECM) reçu et au fait qu'une clé valide est renvoyée en tant que résultat de la transmission du mode ECM à une partie de reproduction de clé.

24. Dispositif selon la revendication 1, dans lequel la partie de commande de mémoire est opérationnelle pour créer une liste dans laquelle des contenus de télévision à la carte qui sont prévisualisables sont listés, et pour mémoriser la prévisualisation des contenus de télévision à la carte prévisualisables conformément à la liste.

25. Dispositif selon la revendication 1, dans lequel la partie de commande de mémoire est opérationnelle pour déterminer si oui ou non un contenu, pour lequel est émise une instruction de mémorisation d'un contenu, est mémorisé sans erreur quelconque conformément à la capacité du contenu à mémoriser et à la capacité restante de la partie de mémoire lorsque l'instruction destinée à mémoriser un contenu par un utilisateur est reçue, et pour délivrer en sortie un affichage qui montre qu'il existe une erreur de mémorisation lorsqu'il est déterminé qu'une erreur survient pour la mémorisation du contenu.

26. Dispositif selon la revendication 25, dans lequel la partie de commande de mémoire est opérationnelle pour enregistrer au préalable la capacité de chaque contenu pendant la mémorisation du contenu, et pour acquérir la capacité de chaque contenu conformément à la description de l'enregistrement.

27. Dispositif selon la revendication 26, dans lequel la partie de commande de mémoire est opérationnelle pour délivrer en sortie un autre contenu capable d'être mémorisé en tant que candidat en vue d'une mémorisation conformément à la capacité de chacun des contenus lorsqu'il est déterminé qu'il existe une erreur de mémorisation pour le contenu à mémoriser.

28. Dispositif selon la revendication 25, dans lequel la partie de commande de mémoire est en outre opérationnelle pour déterminer si oui ou non le contenu peut être mémorisé à l'aide d'un taux de compression de données supérieur lorsqu'il est déterminé qu'il existe une erreur de mémorisation pour le contenu à mémoriser, et délivre en sortie un taux de compression lorsqu'un taux de compression approprié pour mémoriser le contenu est trouvé.

29. Dispositif selon la revendication 25, dans lequel la partie de commande de mémoire est en outre opérationnelle pour déterminer que le contenu peut être mémorisé en effectuant une mémorisation sous une forme condensée lorsqu'il est déterminé qu'il existe une erreur de mémorisation pour le contenu à mémoriser, et pour délivrer en sortie un affichage qui montre que la mémorisation va être effectuée avec succès lorsqu'il est déterminé qu'aucune erreur de mémorisation ne survient pour la forme condensée.

**30.** Dispositif selon la revendication 1, dans lequel la partie de commande est opérationnelle pour effectuer une opération parmi un enregistrement d'historique de visualisation des prévisualisations et de visualisation du contenu, et une émission de l'historique à l'extérieur de celle-ci.

**31.** Dispositif selon la revendication 1, dans lequel la partie de commande (26) est opérationnelle pour effectuer une commande de sorte qu'une opération parmi l'enregistrement d'une condition destinée à mémoriser la prévisualisation spécifiée par un utilisateur et l'émission de cette condition à l'extérieur de celle-ci est effectuée tout en mémorisant de manière sélective une prévisualisation ayant une condition conforme à une condition fournie par un utilisateur.

**32.** Dispositif selon la revendication 31, dans lequel la partie de commande est-en outre opérationnelle pour effectuer une commande de sorte qu'un historique d'instructions destiné à visualiser la prévisualisation mémorisée fournie par l'utilisateur est un historique parmi celui enregistré et celui émis vers l'extérieur de celle-ci.

**33.** Dispositif selon la revendication 31, dans lequel la partie de commande est en outre opérationnelle pour effectuer une commande de sorte que soit une instruction pour mémoriser le contenu mémorisé, soit l'historique d'instructions pour visualiser la prévisualisation mémorisée fournie par l'utilisateur est une instruction ou un historique parmi une instruction ou un historique enregistré ou émis.

**34.** Dispositif selon la revendication 33, dans lequel la partie de commande est opérationnelle pour transmettre à un dispositif de transmission l'historique ou la condition une fois les deux mémorisés.

**35.** Procédé pour faire fonctionner un dispositif de réception de type mémoire (8) comportant :

une partie de réception (20) pour recevoir un contenu qui est transmis,
une partie de mémoire (32) pour mémoriser un contenu,
une partie de commande (26),
une partie d'émission de contenu reçu (22) pour délivrer en sortie le contenu reçu à l'aide de la partie de réception et décodé conformément à la commande de la partie de commande, et
une partie d'émission de contenu mémorisé (22) pour délivrer en sortie le contenu mémorisé dans la partie de mémoire et décodé conformément à la commande de la partie de commande, et

**caractérisé en ce que** :

la partie de commande comporte :

une partie de commande de mémoire (28) pour déterminer si oui ou non chaque contenu reçu par la partie de réception est un contenu de télévision à la carte, et pour extraire de manière sélective une partie de chaque contenu d'une pluralité de contenus en vue d'une utilisation ultérieure en tant que prévisualisation lorsque le contenu sélectionné est déterminé en tant que contenu de télévision à la carte et mémoriser la prévisualisation dans la partie de mémoire, et
une partie de commande de lecture (30) pour extraire la prévisualisation mémorisée dans la partie de mémoire, et pour délivrer en sortie la prévisualisation en vue d'une lecture.

**36.** Procédé selon la revendication 35, comportant l'affichage d'un guide de programmes électronique sur le dispositif de réception, le procédé comportant une étape consistant à indiquer un écran par l'intermédiaire duquel un programme est prévisualisable pour chacun des programmes à la carte.

**37.** Procédé selon la revendication 36, comportant en outre une étape consistant à indiquer une capacité requise pour mémoriser le programme pour au moins chacun des programmes à la carte.

**38.** Procédé pour gérer une diffusion de contenus, le procédé comportant les étapes consistant à :

au niveau d'un dispositif de réception, exécuter les étapes de la revendication 35, et
exécuter les étapes supplémentaires consistant à :

déterminer si oui ou non un contenu de télévision à la carte est actuellement à l'antenne conformément aux informations concernant les programmes au moment où un utilisateur délivre une instruction en vue d'une souscription conformément à la prévisualisation mémorisée, et
transmettre au dispositif de transmission l'instruction de souscription du contenu de télévision à la carte lorsque le contenu n'est pas à l'antenne, et
au niveau du dispositif de transmission,

recevoir des instructions en vue d'une souscription en provenance d'une pluralité de dispositifs de réception, et

déterminer si oui ou non un nouveau lancement du contenu de télévision à la carte est effectué conformément au nombre d'instructions de souscription.

**39.** Programme informatique pour commander un dispositif de réception afin d'exécuter toutes les étapes d'un procédé tel que revendiqué dans l'une quelconque des revendications 35 à 38.

**40.** Support de mémorisation lisible par ordinateur mémorisant un programme pour commander un dispositif de réception afin d'exécuter toutes les étapes d'un procédé tel que revendiqué dans l'une quelconque des revendications 35 à 38.

# FIG.1

2 TRANSMISSION DEVICE

6

8 RECEIVING DEVICE

4 CONTENTS PROVIDER'S DEVICE

EP 1 239 678 B1

# FIG.2

| TRANSPORT STREAM | SERVICE |
|---|---|
| TS1 | SV11 |
| | SV12 |
| | SV13 |
| | SV14 |
| TS2 | SV21 |
| | SV22 |
| | SV23 |
| | SV24 |
| TS3 | SV31 |
| | SV32 |
| | SV33 |
| | SV34 |
| ⋮ | ⋮ |

# FIG.3

9 — CONTENTS DATA RECEIVING PART
10 — CONTENTS DATA RECEIVING PART
12 — DATA TRANSMISSION CONTROL PART
14 — MULTIPLEXING PART
16 — TRANSMIT PART → T S

# FIG.4

| | |
|---|---|
| N I T | :A LIST OF SERVICES CONTAINED IN EACH SERVICE (IDENTICAL NITS ARE SEND OUT IN ALL TRANSPORT STREAMS) |
| PAT | :A LIST OF PMT IN SERVICE CONTAINED IN THE TRANSPORT STREAM (UNIQUE PAT IS SEND OUT FOR EACH TRANSPORT STREAM) |
| PMT | :DESIGNATE ES(A), ES(V), AND ECM IN THE SERVICE (EACH SERVICE HAS UNIQUE PMT) |
| ES(A) | :CONTENT (AUDIO) OF THE SERVICE (EACH SERVICE HAS UNIQUE ES(A)) |
| ES(V) | :CONTENT (VIDEO) OF THE SERVICE (EACH SERVICE HAS UNIQUE ES(V)) |
| ECM | :A SCRAMBLE KEY OF THE SERVICE (EACH SERVICE HAS UNIQUE ECM) |
| SDT | :BIBLIOGRAPHIC INFORMATION OF THE SERVICE SUCH AS NAME OF THE SERVICE SO ON (EACH SERVICE HAS UNIQUE SDT) |
| EIT | :BIBLIOGRAPHIC INFORMATION OF THE SERVICE SUCH AS TITLE OF THE CONTENT, START TIME SO ON. (TWO KIND OF EIT ONE INDICATES DESCRIPTION OF EACH CONTENT, THE OTHER CALLED LONG-TERM EIT SHOWING ON-AIR SCHEDULE OF ALL CONTENTS IN ALL OF SERVICES) |

# FIG.5

| TS1 | NIT | SDT1 | ES(A)11 |
| | PMT1 | SDT2 | ES(A)12 |
| | PMT11 | SDT3 | ES(A)13 |
| | PMT12 | | ES(A)14 |
| | PMT13 | | ES(V)11 |
| | PMT14 | | ES(V)12 |
| | | | ES(V)13 |
| | | | ES(V)14 |
| TS2 | NIT | SDT1 | ES(A)21 |
| | PMT2 | SDT2 | ES(A)22 |
| | PMT21 | SDT3 | ES(A)23 |
| | PMT22 | | ES(A)24 |
| | PMT23 | | ES(V)21 |
| | PMT24 | | ES(V)22 |
| | | | ES(V)23 |
| | | | ES(V)24 |
| TS3 | NIT | SDT1 | ES(A)31 |
| | PMT3 | SDT2 | ES(A)32 |
| | PMT31 | SDT3 | ES(A)33 |
| | PMT32 | | ES(A)34 |
| | PMT33 | | ES(V)31 |
| | PMT34 | | ES(V)32 |
| | | | ES(V)33 |
| | | | ES(V)34 |

# FIG.6

Block diagram: RECEIVING DEVICE (8) containing RECEIVING PART (20), RESTORING PART (22), COMMUNICATION PART (24), CONTROL PART (26) with STORING CONTROL PART (28) and PLAYBACK CONTROL PART (30), STORING PART (32), OPERATION COMMAND INPUT PART (34), connected to TV SET (36).

EP 1 239 678 B1

# FIG.7

**RECEIVING DEVICE** 8

TUNER 42 — DE-SCRAMBLER 45 — TRANSPORT DECODER 46

TUNER 44 — DE-SCRAMBLER 47 — TRANSPORT DECODER 48

AV DECODER 52

ROM 54 | RAM 56 | CPU 58 | HARD-DISK 60 | MODEM 62 | SIGNAL RECEIVING PART 64

IC-CARD 66

40

EP 1 239 678 B1

# FIG.8

```
        ┌──────────────┐  70
        │  CONNECTOR   │
        └──────┬───────┘
               │
        ┌──────┴───────┐  72        ┌──────────────┐  76
        │  INTERFACE   │            │ NONVOLATILE  │
        └──────┬───────┘            │   MEMORY     │
               │                    └──────┬───────┘
    ───────────┼───────────────────────────┼──────
               │
        ┌──────┴───────┐  74
        │     CPU      │
        └──────────────┘
```

# FIG.9

TRANSMISSION DEVICE

2

RECEIVING DEVICE

8

①Km[Kw]=EMM

④Ks[C]
Kw[Ks]=ECM

⑧Ks⁻¹[Ks₍c₎]→C

⑨C

②EMM

⑤ECM

⑦Ks

IC CARD

Km

66

③Km⁻¹[EMM]→Kw
⑥Kw⁻¹[ECM]→Ks

C: CONTENT
Ks: SCRAMBLE-KEY
Kw: WORK-KEY FOR PPV
Km: MASTER-KEY
A[X]: ENCRYPT X WITH A
A⁻¹[Y]: DECODE Y WITH Y

EP 1 239 678 B1

# FIG.10

```
        ┌──────────────┐
        │    START     │
        └──────┬───────┘
               ↓
    ┌────────────────────┐
    │   ACQUIRE PAT BY    │── S11
    │  SETTING PID=0 TO   │
    │    TS DECODER       │
    └─────────┬──────────┘
              ↓
    ╱────────────────────╲
   ╱  JUDGE DESIRED       ╲── S12
  ╱ SERVICE EXISTS IN TS   ╲  EXIST ──────────────┐
  ╲ CURRENTLY RECEIVED     ╱                       │
   ╲ ACCORDING TO PAT     ╱                        │
    ╲────────┬───────────╱                         │
             │ NO                                  │
             ↓                                     │
    ┌────────────────────┐                         │
    │  RECOGNIZE PID OF   │── S13                   │
    │ NIT ACCORDING TO PAT│                         │
    └─────────┬──────────┘                         │
              ↓                                     │
    ┌────────────────────┐                         │
    │   ACQUIRE NIT BY    │                         │
    │   SETTING PID OF    │── S14                   │
    │  NIT TO TS DECODER  │                         │
    └─────────┬──────────┘                         │
              ↓                                     │
    ┌────────────────────┐                         │
    │   RECOGNIZE TS      │                  ┌────────────┐
    │ CONTAINING DESIRED  │── S15            │     1      │
    │ SERVICE ACCORDING   │                  └─────┬──────┘
    │      TO NIT         │                        ↓
    └─────────┬──────────┘         ┌────────────────────┐
              ↓                     │ RECOGNIZE PID OF PMT│── S18
    ┌────────────────────┐         │  ACCORDING TO PAT   │
    │   CONTROL TUNER     │── S16   └─────────┬──────────┘
    └─────────┬──────────┘                   ↓
              ↓                     ┌────────────────────┐
    ┌────────────────────┐         │   ACQUIRE PMT BY    │
    │   ACQUIRE PAT BY    │         │   SETTING PID OF    │── S19
    │  SETTING PID=0 TO   │── S17   │  PMT TO TS DECODER  │
    │    TS DECODER       │         └─────────┬──────────┘
    └─────────┬──────────┘                   ↓
              ↓                     ┌────────────────────┐
         ┌────────┐                 │   RECOGNIZE PID OF  │
         │   1    │                 │ DESIRED SERVICE AND │
         └────────┘                 │     PID OF ECM      │── S20
                                    │  ACCORDING TO ECM   │
                                    └─────────┬──────────┘
                                              ↓
                                    ┌────────────────────┐
                                    │  SET A KEY ACQUIRED │
                                    │  ACCORDING TO ECM   │── S21
                                    │   TO DESCRAMBLER    │
                                    └─────────┬──────────┘
                                              ↓
                                    ┌────────────────────┐
                                    │   ACQUIRE ES BY     │
                                    │   SETTING PID OF    │── S22
                                    │  DESIRED SERVICE TO │
                                    │     TS DECODER      │
                                    └─────────┬──────────┘
                                              ↓
                                    ┌────────────────────┐
                                    │        END         │
                                    └────────────────────┘
```

# FIG.11

## N I T (P I D=0×1 0)

| TRANSPORT STREAM | TRANSMISSION PARAMETERS | SERVICE LIST |
|---|---|---|
| T S 1 | f 1 ---- | S V 1 1, S V 1 2, S V 1 3, S V 1 4, |
| T S 2 | f 2 ---- | S V 2 1, S V 2 2, S V 2 3, S V 2 4, |
| T S 3 | f 3 ---- | S V 3 1, S V 3 2, S V 3 3, S V 3 4, |
| ⋮ | ⋮ | ⋮ |

# FIG.12

PAT　(P I D=0×00)

| SERVICE | PID OF PMT |
|---------|-----------|
| SV11 | 0×0031 |
| SV12 | 0×0032 |
| SV13 | 0×0033 |
| SV14 | 0×0034 |

| PID OF NIT |
|-----------|
| 0×0010 |

# FIG.13

PMT  (P I D=0×31)

| VIDEO | | AUDIO | |
|---|---|---|---|
| PID OF ECM | PID OF ES | PID OF ECM | PID OF ES |
| 0×41 | 0×42 | 0×41 | 0×44 |

# FIG.14

```
              ┌──────────────────────┐
              │        START         │
              └──────────────────────┘
                         │
                         ▼
              ┌──────────────────────┐
              │   CREATE LIST FOR    │──── S31
              │ PRE-VIEWABLE SERVICES│
              └──────────────────────┘
                         │
          ┌─────────────▶│
          │              ▼
          │   ┌──────────────────────┐
          │   │ AUTOMATIC STORAGE OF │──── S32
          │   │   PREVIEW PROGRAM    │
          │   │ ACCORDING TO THE LIST│
          │   └──────────────────────┘
          │              │
          │              ▼
          │   ┌──────────────────────┐
          │   │   MAINTENANCE OF     │──── S33
          │   │ THE PRE-VIEWABLE LIST│
          │   └──────────────────────┘
          │              │
          └──────────────┘
```

EP 1 239 678 B1

FIG.15

START

ACQUIRE NIT ——S41

CREATE TRANSPORT STREAM LIST ——S42

(6)

CONTROL TUNER TO RECEIVE NEXT TRANSPORT STREAM IN TS LIST ——S43

ACQUIRE PAT ——S44

CREATE SERVICE LIST ——S45

DESIGNATE SERVICE ON TOP OF LIST AS SERVICE TO BE PROCESSED ——S46

(5)

ACQUIRE PMT OF THE SERVICE ——S47

(1)

(1)

ACQUIRE PID OF ECM ACCORDING TO PMT ——S48

ACQUIRE ENCRYPTED ECM ——S49

(2)

43

# FIG.16

START

S213
SEND ECM TO IC CARD

11

S100
DECODE ECM

S101
PROGRAM PROVIDED REGULAR CONTRACT? — YES →

S102
NO — USER CONCLUDE CONTRACT?

YES

3

NO

S103
COUNT THE NUMBER OF ECM

S104
PREVIEW PERIOD PASSED? — YES ↓

NO

S105
ECM EXCEED UPPER LIMIT? — YES →

NO

3

S106
GENERATE SCRAMBLE -KEY Ks AND SEND OUT, SEND OUT DECODED ECM

S51
YES / PROGRAM PROVIDED REGULAR CONTRACT?

NO

7

4

END

# FIG.17

```
                    ( 4 )
                      │                    ── S52
                      ▼
              ╱ SCRAMBLE-KEY ╲   NO
             ⟨  Ks SEND BACK?  ⟩──────────────┐
              ╲               ╱                │
                   │ YES                       │
                   ▼                           │
           ┌─────────────────┐                 │
           │     JUDGE        │── S53          │
           │ THE SERVICE AS   │                │
           │ PRE-VIEWABLE,    │                │
           │  REGISTER TO     │                │
           │ A PRE-VIEWABLE   │                │
           │     LIST         │                │
           └─────────────────┘      ( 7 )      │
                   │              ◄────────────┘
                   ▼
           ╱ ALL SERVICES ╲   YES
          ⟨   IN TS ARE     ⟩────────────┐
          ╲  PROCESSED?    ╱             │
               │    ╲── S54              │
               │ NO                      │                        S56
               ▼                         ▼                         │
      ┌─────────────────┐        ╱ ALL TS ARE ╲   YES              │
      │ DESIGNATE NEXT  │       ⟨  PROCESSED?   ⟩─────────┐        │
      │   SERVICE ON    │        ╲             ╱          │
      │ SERVICE LIST AS │             │ NO               │   S57
      │  SERVICE TO BE  │             ▼                  ▼    │
      │   PROCESSED     │           ( 6 )        ┌──────────────────┐
      └─────────────────┘                        │  ACQUIRE EIT     │
               │       ╲── S55                    │ AND WRITE TITLE, │
               ▼                                  │ START TIME ETC.  │
             ( 5 )                                │   OF EVENT IN    │
                                                  │ PRE-VIEWABLE LIST│
                                                  └──────────────────┘
                                                           │
                                                           ▼
                                                    (   END   )
```

# FIG.18

| TRANSPORT STREAM | TRANSMISSION PARAMETERS | SERVICE LIST |
|---|---|---|
| TS 1 | f 1 ---- | SV 1 1, SV 1 2, SV 1 3, SV 1 4, |
| TS 2 | f 2 ---- | SV 2 1, SV 2 2, SV 2 3, SV 2 4, |
| ⋮ | ⋮ | ⋮ |

# FIG.19

| SERVICE | PID OF PMT |
|---------|------------|
| SV11 | 0×0031 |
| SV12 | 0×0032 |
| SV13 | 0×0033 |
| SV14 | 0×0034 |

## FIG.20

| Kw[Ks] | SERVICE ID | TYPE OF PROGRAM | PRE-VIEWABLE PERIOD (NUMBER OF ECM) | PREVIEW LIMIT | CURRENT TIME | ------ |
|--------|------------|-----------------|--------------------------------------|---------------|--------------|--------|

48

# FIG.21

| SERVICE | EVENT (TITLE) | START TIME | |
|---------|---------------|------------|---|
| SV11 | | | |
| SV14 | | | |
| SV22 | | | |
| SV24 | | | |
| SV31 | | | |
| | | | |

# FIG.22

| SERVICE | EVENT (TITLE) | NAME OF SERIES | START TIME | ON-AIR PERIOD | |
|---|---|---|---|---|---|
| | TOM&JET | ——— | 9:00 | 0:15 | |
| | TOM&JET | ——— | 11:30 | 0:15 | |
| SV11 | TOM&JET | ——— | 14:00 | 0:15 | |
| | ⋮ | ⋮ | ⋮ | | |
| | SUPER WARS I | SUPER WARS | 9:00 | 2:05 | |
| | NINE DAYS | ——— | 12:00 | 1:30 | |
| SV14 | SUPER WARS I | SUPER WARS | 14:10 | 2:10 | |
| | NINE DAYS | ——— | 17:10 | 1:30 | |
| | ⋮ | ⋮ | ⋮ | | |

# FIG.23

START

14

SELECT ONE PROGRAM
START AT EARLIEST TIME
FROM CURRENT TIME
FROM PRE-VIEWABLE
SERVICE LIST,THAT IS
STARTED AT THE EARLI-
EST TIME FROM
CURRENT TIME — S201

PREVIEW PROGRAM
OF THAT EVENT STORED
IN HARD DISK? — S202

YES

14

NO

ACQUIRE PAT — S203

SERVICE TO BE
PROCESSED CONTAINED
IN CURRENT TS? — S204

YES

NO

ACQUIRE NIT — S205

CONTROL TUNER TO
RECEIVE TS CONTAINING
SERVICE TO BE
PROCESSED — S206

ACQUIRE PAT — S207

NO START TIME OF
THE SERVICE COME? — S208

YES

10

# FIG.24

```
        (10)
          │
          ▼
┌─────────────────────┐
│  ACQUIRE PMT, EIT,  │──── S209
│  SDT OF THE SERVICE │
└─────────────────────┘
          │
          ▼
┌─────────────────────┐
│    GENERATE SIT     │──── S210
└─────────────────────┘
          │
          ▼
┌─────────────────────┐
│ ACQUIRE PIDS OF ECM,│──── S211
│    ES FROM PMT      │
└─────────────────────┘
          │
          ▼
┌─────────────────────┐
│   ACQUIRE ECM, ES   │──── S212
└─────────────────────┘
          │
          ▼
        (11)
```

# FIG.25

START

11

S213

SEND ECM TO
IC CARD

S100

DECODE ECM

S101

PROGRAM
PROVIDED
REGULAR
CONTRACT? — YES → S102

USER CONCLUDE
CONTRACT?

NO

YES

NO

13

S103

COUNT THE NUMBER
OF ECM

S104

PREVIEW PERIOD
PASSED? — YES

S105

NO

ECM EXCEED
UPPER LIMIT? — YES

12

NO

13

S106

GENERATE SCRAMBLE
-KEY Ks AND
SEND IT OUT,SEND
OUT DECODED ECM

END

# FIG.26

```
                        ┌───┐
                        │1 2│
                        └─┬─┘
                          │                        S214
                          ▼                         │
              ╱───────────────────────╲    NO
             ⟨  SCRAMBLE-KEY KS         ⟩──────────┐
              ╲      SEND BACK?        ╱            │
                          │                         │
                        Y E S                       │
                          │                         │
           ┌──────────────▼                         │
           │              ▼                         │
           │   ┌─────────────────────────┐         │
           │   │    STORE STREAM         │   S215  │
           │   │ INFORMATION TABLE AND   │─────    │
           │   │ PARTIAL TS IN HARD DISK │         │
           │   └────────────┬────────────┘         │
           │                │                       │
           │                ▼              S216     │
           │  NO  ╱───────────────────────╲  │     │
           └─────⟨   NEW ECM RECEIVED?      ⟩──     │
                  ╲─────────────────────────╱       │
                          │                         │
                        Y E S                       │
                          ▼                         ▼
                        ┌───┐                     ┌───┐
                        │1 1│                     │1 4│
                        └───┘                     └───┘
```

# FIG.27

| S I T | : ( DESCRIBE INFORMATION ON PROGRAM )<br>( DESCRIBE PID ETC. OF PMT ) |
|:---:|:---|
| **PMT** | : ( DESCRIBE PID ETC. OF ES ) |
| E S | : ( CONTENTS ) |

# FIG.28

STREAM INFORMATION TABLE ——— 100

PARTIAL TS ——— 102

EP 1 239 678 B1

# FIG.29

EP 1 239 678 B1

# FIG.30

| FLAG INDICATING PREVIEW | TYPE OF STORED CONTENTS | STREAM ID | CATE-GORY | PARENTAL GUIDANCE | PLAY-BACK PERIOD | TITLE |
|---|---|---|---|---|---|---|
| —— | PREVIEW | 0001 | | —— | 10 | PAY THEM BACK |
| —— | PREVIEW | 0002 | | —— | 5 | JUNGLE PARK |
| | PREVIEW | 0003 | | —— | 12 | RINGLE |
| —— | PREVIEW | 0004 | | —— | 30 | TOM& JET |
| —— | PREVIEW | 0005 | | —— | 10 | A GIRL FLY OVER SKY |
| —— | | 0006 | | —— | 230 | AN INCIDENT OCCUR ON THAT DAY |

EP 1 239 678 B1

# FIG.31

```
                    ┌─────────────────┐
                    │      START      │
                    └────────┬────────┘
                             │
                    ┌────────▼────────┐
                    │ DESIGNATE FIRST TITLE │──S301
                    │ ON STREAM INFORMATION │
                    │ TABLE IN HARD DISK AS │
                    │ TITLE TO BE PROCESSED │
     ┌───┐          └────────┬────────┘
     │21 │─────────────────► │
     └───┘          ┌────────▼────────┐
                    │ ACQUIRE TS OF TITLE │──S302
                    │   ACCORDING TO    │
                    │    STREAM ID      │
                    └────────┬────────┘
                             │
                    ┌────────▼────────┐
                    │ ACQUIRE PAT, PMT, SIT │──S303
                    │    FROM THE TS    │
                    └────────┬────────┘
                             │
                    ┌────────▼────────┐
                    │  CARRY OUT CACHE  │──S304
                    │ STORAGE PROCESS FOR │
                    │ PREPARING SUBSCIPTION │
                    └────────┬────────┘
                             │
                    ┌────────▼────────┐
                    │  SET PID OF ES TO TS │──S305
                    │ DECORDER ACCORDING │
                    │      TO PMT       │
                    └────────┬────────┘
                             │
                    ┌────────▼────────┐
                    │ RECORD THAT TITLE HAS │──S306
                    │ BEEN VIEWED IN STREAM │
                    │ INFORMATION TABLE │
                    └────────┬────────┘
                             │
                           ┌─▼─┐
                           │20 │
                           └───┘
```

# FIG.32

20

S307

USER INPUTS? — YES

NO

S308

NO — FINALIZE PREVIEW OF TITLE?

YES

DESIGNATE NEXT TITLE IN STREAM INFORMATION TABLE AS TITLE TO BE PROCESSED — S309

21

S310

SUBSCRIPTION — TYPE OF INPUTS? — RESERVATION

ANALOG RECORDING | DIGITAL RECORDING

SUBSCRIBE (VIEW) | RECORDING (ANALOG) | RECORDING (DIGITAL) | RECORDING RESERVATION

S311 | S312 | S313 | S314

# FIG.33A

PREVIEW SELECTION

AUTMATIC PREVIEW — 300

SELECTED PREVIEW — 302

# FIG.33B

CATEGORY SELECTION
IN AUTMATIC PREVIEW

| |
|---|
| ALL CATEGORY |
| FOREIGN FILM |
| DOMESTIC FILM |
| ANIMATION |

304

# FIG.33C

| CATEGORY SELECTION IN SELECTED PREVIEW | |
|---|---|
| FOREIGN FILM | PAY THEM BACK |
| FOREIGN FILM | JUNGLE PARK |
| DOMESTIC FILM | RINGS |
| ANIMATION | TOM & JET |

# FIG.34

```
                  ┌─────────────┐
                  │    START    │
                  └─────────────┘
                         │
        ┌────────────────┤
        │                ▼
        │    ┌────────────────────┐  S351
        │    │ ACQUIRE SERVICE_ID │
        │    │      FROM SIT      │
        │    └────────────────────┘
        │                │
        │                ▼
        │    ┌────────────────────┐  S352
        │    │   ACQUIRE EIT OF   │
        │    │ THE SERVICE SPECI- │
        │    │ FIED BY SERVICE_ID │
        │    └────────────────────┘
        │                │        S353
        │                ▼
        │         ╱──────────────╲
        │        ╱  TITLE TO BE    ╲   YES
        │        │  PROCESSED IS    │──────────┐
        │        │ CURRENTLY ON-AIR │          │
        │        ╲ IN THE SERVICE? ╱           ▼
        │         ╲──────────────╱    ┌──────────────────┐  S354
        │             NO │             │ STORE LAPSED TIME │
        │                │             │  FROM BEGINNING   │
        │                │◄────────────│     OF TITLE      │
        │                ▼             └──────────────────┘
        │         ╱──────────────╲
        │        ╱  ALL SERVICES   ╲  YES
        │        │   (SERVICE_ID)   │────────┐
        │        ╲    CHECKED?     ╱         │
        │         ╲──────────────╱  S355     │
        │             NO │                   │
        │                ▼                   │
        │    ┌────────────────────┐  S356    │
        │    │  DESIGNATE NEXT     │         │
        │    │ SERVICE (SERVICE_ID)│         │
        │    │  AS PROGRAM TO BE   │         │
        │    │     PROCESSED       │         │
        │    └────────────────────┘         │
        │                │                   │
        └────────────────┘                   ▼
                                           ( 22 )
```

# FIG.35

# FIG.36

EP 1 239 678 B1

# FIG.37

| NINE DAYS | LAPSED TIME |
|:---------:|:-----------:|
| SV51 | 110 |
| SV52 | 80 |
| SV53 | 50 |

# FIG.38

| NATURE | SCHEDULED START TIME |
|--------|----------------------|
| SV51 | 12 : 00 |
| SV52 | 12 : 30 |
| SV53 | 13 : 00 |

# FIG.39

# FIG.40

# FIG.41A

| | |
|---|---|
| SUBSCRIPTION | 250 |
| RECORDING | 252 |
| RESERVATION | 254 |

# FIG.41B

```
┌─────────────────────────────────────┐
│                                      │
│      ┌────────────────────────┐      │
│      │ ANALOG  RECORDING      │      │
│      └────────────────────────┘      │
│                                      │
│      ┌────────────────────────┐      │
│      │ DIGITAL  RECORDING     │      │
│      │    ( VIEW )            │      │
│      └────────────────────────┘      │
│                                      │
│      ┌────────────────────────┐      │
│      │ DIGITAL  RECORDING     │      │
│      │    ( RECORDING         │      │
│      │ COUNTER  PROGRAM )      │      │
│      └────────────────────────┘      │
│                                      │
└─────────────────────────────────────┘
```

# FIG.41C

RESERVED PROGRAM IS
CURRENTLY ON-AIR,
WOULD YOU LIKE TO
WATCH IT RIGHT NOW ?

| VIEW | | RESERVE |

# FIG.42

START
PREVIEW

APPLY
SUBSCRIPTION

PREVIEW
STORAGE

$t\,0$       $t\,4$   $t\,2$

$t$

O

CACHE
STORAGE

$t\,0'$   $t\,1'$          $t\,3'$

$t'$

O   START  CACHE
STORAGE

# FIG.43

# FIG.44

START
PREVIEW

APPLY
SUBSCRIPTION

t 0                    t 4      t 2

PREVIEW
STORAGE
O

t 0'              t 1'              t 3'

CACHE
STORAGE
O

START CACHE
STORAGE

# FIG.45

PREVIEWED APPLY
SUBSCRIPTION

t O ↓t 4  t 2

PREVIEW
STORAGE

CACHE
STORAGE

t O'          t 1'        t 3'

# FIG.46

# FIG.47

# FIG.48

START

ANY CACHE
STORAGE EXIST? — S501

NO

YES

GENERATE PARTIAL
TS AND STORE
PROGRAM — S510

CONTINUE STORING
WITH CACHE STO-
RAGE AS MAIN BODY — S502

PROGRAM END? — S511

NO

YES

PROGRAM END? — S503

NO

YES

PROGRAM STORED
COMPLETELY FROM
BEGINNING? — S504

YES

(22)

NO

CAN BE COM-
PLETE IF COMBINE
PREVIEW
STORAGE? — S505

NO

(21)

YES

(20)

# FIG.49

(20)

(21)

COMBINE PREVIEW
STORAGE ── S506

RECORD UN-
RECORDED PORTION
IN NEXT ON-AIR ── S507

(22)

END

# FIG.50

START

TITLE IS CURRENTLY ON-AIRED? — S601

NO

YES

VIEW OR RESERVE? — S602

RESERVE

VIEW

PROCESSES FOR SUBSCRIPTION — S603

ON-AIR SCHEDULE OF PROGRAM STORED PREVIOUSLY? — S604

NO → (41)

YES

DISPLAY SCHEDULE — S605

MAKE RESERVATION ON THE TIME SELECTED BY USER — S606

(42)

END

# FIG.51

```
                    (41)
                      │
                      ▼
        ┌──────────────────────────┐
        │    CONTROL MODEM TO       │
        │   ACCESS TO CONTENT       ├──── S607
        │    PROVIDER'S DEVICE      │
        └──────────────────────────┘
                      │
                      ▼
        ┌──────────────────────────┐
        │      SEND TITLE OF        ├──── S608
        │    REQUESTED PROGRAM      │
        └──────────────────────────┘
                      │
                      ▼
        ┌──────────────────────────┐
        │  MONITOR TITLE WITH EIT   ├──── S609
        └──────────────────────────┘
                      │
                      ▼
                    (42)
```

# FIG.52

EPG

500

| PANA | MMM | GET CHANNEL | HART |
|---|---|---|---|
| 9:00<br><br>NEWS | 9:00 PRE-VIEWABLE<br>LIME | | |
| | 10:00 PRE-VIEWABLE<br><br>RINGLE | | |
| 10:30<br><br><br><br>MODEL<br>SHOW | 12:00 PRE-VIEWABLE<br><br>ROUTE | | |

EP 1 239 678 B1

# FIG.53

EP 1 239 678 B1

# FIG.54

| FLAG INDICATING PREVIEW | INFOR-MATION ON TYPE OF CONTENT | STREAM ID | CATE-GORY | INFORMA-TION ON PARENTAL GUIDANCE | PLAY-BACK PERIOD | TITLE | SUB-SCRIPTION COLUMN | CAPACITY NEEDED FOR PREVIEW |
|---|---|---|---|---|---|---|---|---|
| 110 | 112 | 114 | 116 | 118 | 120 | 122 | 123 | 124 |

# FIG.55

| FLAG INDICATING PREVIEW | TYPE OF STORED CONTENTS | STREAM ID | CATE-GORY | PARENTAL GUIDANCE | PLAY-BACK PERIOD | TITLE | SUB-SCRIP-TION | CAPACITY NEEDED FOR PREVIEW |
|---|---|---|---|---|---|---|---|---|
| 1 | PREVIEW | 0001 | FOREIGN FILM | ——— | 10 | PAY THEM BACK | | 8 |
| ——— | PREVIEW | 0002 | FOREIGN FILM | ——— | 5 | JUNGLE PARK | — | 14 |
| 2 | PREVIEW | 0003 | DOMESTIC FILM | ——— | 12 | RINGLE | | 10 |
| ——— | PREVIEW | 0004 | ANIMA-TION | ——— | 30 | TOM& JET | — | 24 |
| ——— | PREVIEW | 0005 | DOMESTIC FILM | ——— | 10 | A GIRL FLY OVER SKY | — | 8 |
| ——— | REGULAR | 0006 | DOCU-MENTARY | ——— | 230 | AN INCIDENT OCCUR ON THAT DAY | — | — |
| | | | | | | | | |

EP 1 239 678 B1

# FIG.56

```
              START

    DESIGNATE FIRST TITLE    — S301
    ON STREAM INFORMATION
    TABLE IN HARD DISK AS
    TITLE TO BE PROCESSED

(21)
    ESTIMATE CAPACITY        — S3015
    REQUIRED TO STORE
    CONTENT

    ACQUIRE TS OF TITLE      — S302
    ACCORDING TO
    STREAM ID

    ACQUIRE PAT, PMT, SIT    — S303
    FROM THE TS

    CARRY OUT CACHE          — S304
    STORAGE PROCESS FOR
    PREPARING SUBSCIPTION

    SET PID OF ES TO TS      — S305
    DECORDER ACCORDING
    TO PMT

    RECORD THAT TITLE HAS    — S306
    BEEN VIEWED IN STREAM
    INFORMATION TABLE

              (20)
```

# FIG.57

START

ACQUIRE ON-AIR PERIOD OF THE CONTENT FROM PRE-VIEWABLE LIST — S701

ACQUIRE BIT RATE ACCORDING TO BRV (BIT RATE VALUE) OF ES — S702

S703 — BIT RATE ACQUIRED?

NO

YES

ESTIMATE CAPACITY REQUIRED FOR STORING ACCORDING TO ON-AIR PERIOD AND BIT RATE — S704

ESTIMATE CAPACITY OF WHOLE CONTENT ACCORDING TO CAPACITY OF PREVIEW — S705

END

# FIG.58

# FIG.59

WARNING

DUE TO SHORT OF CAPACITY IN HARD DISK, THERE WILL BE A POSSIBILITY OF INCOMPLETE STORAGE.

| SUBSCRIPTION | SUSPENSION | RETURN |
|---|---|---|

700

702

704

EP 1 239 678 B1

# FIG.60A

PREVIEW SELECTION

AUTOMATIC PREVIEW — 300

SELECTED PREVIEW — 302

# FIG.60B

CATEGORY SELECTION
IN AUTMATIC PREVIEW

ALL CATEGORY — 304

FOREIGN FILM

DOMESTIC FILM

ANIMATION

# FIG.60C

| FOREIGN FILM | PAY IT FORWARD |
|---|---|
| FOREIGN FILM | JURRASSIC PARK |
| DOMESTIC FILM | RINGS |
| ANIMATION | TOM & JERRY |

PLAYBACK PERIOD XXMIN.CAPACITY
XXBYTES REMAININGS XXBYTES

# FIG.61

EPG

500

| PANA | MMM | GET CHANNEL | HART |
|---|---|---|---|
| 9:00<br><br>NEWS | 9:00 PRE-VIEWABLE<br>LIME | | |
| | 10:00 PRE-VIEWABLE<br><br>RINGS | | |
| 10:30<br><br><br>MODEL<br>SHOW | 12:00 PRE-VIEWABLE<br><br>ROUTE | | |

LIME : PLAYBACK PERIOD : 60MIN / 60SEC. CAPACITY 30MB / 18GB REMAINING 32GB / 60GB

EP 1 239 678 B1

# FIG.62A

SELECTION OF CONDITION
IN PREVIEW STORAGE

ALL CONTENTS ⌐ 800

SELECTED CATEGORY ⌐ 802

# FIG.62B

SELECTION OF CONDITION
IN PREVIEW STORAGE

| FOREIGN FILM | 804 |
| DOMESTIC FILM | 806 |
| ANIMATION | 808 |

# FIG.63

| STORAGE CONDITION RECORD TABLE |
| :---: |
| DOMESTIC FILM |

# FIG.64

| CHANNEL NUMBER | CATEGORY | TIME AND DATE OF ON-AIR | DATE OF VIEWING | TIME PERIOD OF VIEWING | PREVIEW-ABLE |
|---|---|---|---|---|---|
| 0103 | | 2001. 12. 11 11:30 | 2001. 12. 11 20:00 | 10 | 1 |
| 0215 | | 2001. 12. 12 18:00 | 2001. 12. 12 18:00 | 5 | 0 |
| | | | | | |

EP 1 239 678 B1

# FIG.65

| FLAG INDICATING PREVIEW | INFOR-MATION ON TYPE OF CONTENT | STREAM ID | CATE-GORY | INFORMA-TION ON PARENTAL GUIDANCE | PLAY-BACK PERIOD | LENGTH OF MAIN PORTION | TITLE | SUB-SCRIPTION COLUMN | CAPACITY NEEDED FOR PREVIEW | ESTIMATE CAPACITY FOR MAIN PART |
|---|---|---|---|---|---|---|---|---|---|---|
| 110 | | 112 | 114 | 116 | 118 | 120 | 121 | 122 123 | 124 | 126 |

# FIG.66

| FLAG INDICATING PREVIEW | TYPE OF STORED CONTENTS | STREAM ID | CATE-GORY | PARENTAL GUIDANCE | PLAY-BACK PERIOD | LENGTH OF MAIN PORTION | TITLE | SUB-SCRIP-TION | CAPACITY NEEDED FOR PREVIEW | ESTIMATED CAPACITY FOR MAIN PART |
|---|---|---|---|---|---|---|---|---|---|---|
| 1 | PREVIEW | 0001 | FOREIGN FILM | —— | 10 | 180 | PAY THEM BACK | | 8 | 144 |
| —— | PREVIEW | 0002 | FOREIGN FILM | —— | 5 | 190 | JUNGLE PARK | —— | 14 | 532 |
| 2 | PREVIEW | 0003 | DOMESTIC FILM | —— | 12 | 160 | RINGS | | 10 | 133 |
| —— | PREVIEW | 0004 | ANIMA-TION | —— | 30 | 240 | TOM& JET | —— | 24 | 200 |
| —— | PREVIEW | 0005 | DOMESTIC FILM | —— | 10 | 120 | A GIRL FLY OVER SKY | —— | 8 | 96 |
| —— | REGULAR | 0006 | DOCU-MENTARY | —— | 230 | 230 | AN INCIDENT OCCUR ON THAT DAY | —— | —— | —— |

EP 1 239 678 B1